# EUROPEAN PATENT APPLICATION

(11) **EP 1 624 422 A1**
(43) Date of publication of application: **08.02.2006**
(21) Application number: 05016856.6
(22) Date of filing: 03.08.2005
(51) Int. Cl.: G07F 17/32

(54) **Gaming machine**

(30) Priority: 04.08.2004 JP 2004228409; 04.08.2004 JP 2004228463; 04.08.2004 JP 2004228518; 04.08.2004 JP 2004228546; 04.08.2004 JP 2004228592; 04.08.2004 JP 2004228613
(71) Applicant: Aruze Corporation, Tokyo 135-0063 (JP)
(72) Inventor: Okada, Kazuo, Tokyo 135-0063 (JP)
(74) Representative: HOFFMANN EITLE

(57) **Abstract**

In the slot machine 1, in a case that the symbol combination stopped and displayed through the variable display portions 21 to 25 becomes three symbols "SARDINE" which are stopped and displayed at the same time with no relation to the activated pay lines in the base game or the bonus game, or in a case that five symbols "WILD" are stopped and displayed on the activated pay line, or in a case that the JP is won (S62: YES), the first reel strip 101 variably moving, stopping and displaying the symbols on the variable display portion 21 is changed to the sixth reel strip in which more the symbol "WILD" and the symbol "SARDINE" are included, till any one of the termination conditions is satisfied form the next game, thereby the game state shifts to the probability change mode in which the probability to win the winning symbol combination increases in comparison with the normal mode (S63).

## Description

### BACKGROUND OF THE INVENTION

### 1. Field of the Invention

The present invention relates to a gaming machine in which a predetermined number of game media are paid out to a player in a case that symbols stopped and displayed on a variable display device become a symbol combination corresponding to a predetermined winning symbol combination. In particular, the present invention relates to a gaming machine through which variegated games can be provided to the player without losing interest for games by producing a special game state in which a probability capable of stopping and displaying the predetermined winning symbol combination on the variable display device increases.

And the present invention relates to a gaming machine in which a game to conduct variable display of symbols and to stop and display the symbols is repeated and continued. In particular, the present invention relates to a gaming machine in which a game state shifts to a special game mode that a probability according to which a predetermined winning symbol combination is stopped and displayed on a variable display device increases, when a predetermined number concerning with the game, such number being accumulatively added corresponding to continuity of the game, becomes a predetermined value, thereby variegated games can be provided to the player without losing interest for games.

Further, the present invention relates to a gaming machine in which a game to conduct variable display of symbols and to stop and display the symbols is repeated and continued. In particular, the present invention relates to a gaming machine in which a game state shifts to a special game mode that a probability according to which a predetermined winning symbol combination is stopped and displayed on a variable display device increases, when an elapsing time counted from a predetermined standard time becomes a predetermined time, thereby variegated games can be provided to the player without losing interest for games.

And the present invention relates to a gaming machine in which a game to conduct variable display of symbols and to stop and display the symbols is repeated and continued. In particular, the present invention relates to a gaming machine in which a game state shifts to a special game mode that a probability according to which a predetermined winning symbol combination is stopped and displayed on a variable display device increases, based on a lottery result, thereby variegated games can be provided to the player without losing interest for games.

Further, the present invention relates to a gaming machine in which a game to conduct variable display of symbols and to stop and display the symbols is repeated and continued. In particular, the present invention relates to a gaming machine in which a game state shifts to a special game mode that a probability according to which a predetermined winning symbol combination is stopped and displayed on a variable display device increases, when a payout rate measured corresponding to continuity of the game becomes a predetermined rate, thereby variegated games can be provided to the player without losing interest for games.

And the present invention relates to a gaming machine in which a game to conduct variable display of symbols and to stop and display the symbols is repeated and continued. In particular, the present invention relates to a gaming machine in which a game state shifts to a special game mode that a probability according to which a predetermined winning symbol combination is stopped and displayed on a variable display device increases, when a predetermined number of game media accumulatively stored with a predetermined rate becomes a predetermined number, thereby variegated games can be provided to the player without losing interest for games.

### 2. Description of Related Art

Conventionally, it is raised a slot machine as a gaming machine in which symbols displayed on each of variable display portions in the variable display device are determined on the basis of random numbers and a payout is paid out according to the symbol combination displayed on the variable display portions.

And in the above mentioned slot machine, as a game method to draw player's attention, it is popularized a game method which provides a bonus game. For example, this bonus game means a game which is executed in the slot machine when a predetermined symbol arrangement is realized and in which games with a predetermined number of times can be conducted without inserting medals or which gives a beneficial condition to the player that symbols are easily arranged for a predetermined time in comparison with a base game. For example, as shown in Unexamined Japanese Publication No. 2003-180908, it is disclosed a video slot machine in which it is conducted a bonus game that when more than two target symbols TS on reels are stopped on a head line, remaining reels are again automatically rotated with a predetermined number of times while the reels of which the target symbols TS are stopped on the head line are fixed.

However, in the video slot machine disclosed in the above reference, although two game modes of the base game and the bonus game are provided and games are made variegated, there occurs no change in a game stream in each of the games. Therefore, although it can be raised expectation of the player that the game mode will change to a beneficial state for the player till the game mode shifts to the bonus game, after the game mode shifts to the bonus game the game mode again only returns to the base game after a predetermined time elapses. Thus, expectation of the player is made thin and interest for games is reduced. And a condition to shift the game mode from the base game to the bonus game is preset every the slot machine, therefore the player can predict a timing to shift to the bonus game. As a result, it is further desired a variegation of the game so that the game mode is able to shift to a new game mode other than the bonus game at an unpredictable timing for the player.

### SUMMARY OF THE INVENTION

In order to dissolve the above problems, the present invention has been done and has an object to provide a gaming machine in which a game mode shifts to a special game mode that a probability according to which a winning symbol combination is stopped and displayed on a variable display device at an unpredictable timing for a player increases, thereby a wave can be produced in payout of game media even in the same game mode and game characteristic can be variegated without losing of the player's interest.

In order to accomplish the above object, according to one aspect of the present invention, it is provided a gaming machine comprising:
a display device having a plurality of variable display portions in each of which plural kinds of symbols are variably displayed;
a stop control device for conducting stop control of the symbols which are stopped and displayed in each of the variable display portions;
a payout device for paying out a predetermined number of game media when a symbol combination formed by the symbols stopped and displayed in each of the variable display portions becomes a predetermined winning symbol combination; and
a shift device for shifting a game state to a special game mode in which a probability according to which the predetermined winning symbol combination is stopped and displayed through the variable display portions by the stop control device increases,
wherein the shift device retains the special game mode till a predetermined termination condition is satisfied in a case that the winning symbol combination satisfies a predetermined start condition.

In the gaming machine constructed according to the above, the game state is shifts to the special game mode in which a probability according to which the predetermined winning symbol combination is stopped and displayed through the variable display portions by the stop control device increases by the shift device. Thereby, the game state can be variously changed at the timing that the player cannot predict during the game and a wave in the payout of the game media can be produced. Thus, the game state of the slot machine can be variegated and the player never loses interest for games.

The above and further objects and novel features of the invention will more fully appear from the following detailed description when the same is read in connection with the accompanying drawings. It is to be expressly understood, however, that the drawings are for purpose of illustration only and not intended as a definition of the limits of the invention.

### BRIEF DESCRIPTION OF THE DRAWINGS

The accompanying drawings, which are incorporated in and constitute a part of this specification illustrate embodiments of the invention and, together with the description, serve to explain the objects, advantages and principles of the invention.

In the drawings,
Fig. 1 is a perspective view showing an outline construction of a slot machine according to the first embodiment,
Fig. 2 is a front view of variable display portions of the slot machine according to the first embodiment,
Fig. 3 is a front view of a control panel of the slot machine according to the first embodiment,
Fig. 4 is an explanatory view schematically showing symbol columns which are variably displayed on each of the variable display portions by utilizing the first reel strip to the fifth reel strip,
Fig. 5 is a schematic view showing a symbol "LOBSTER",
Fig. 6 is a block diagram schematically showing a control system of the slot machine according to the first embodiment,
Fig. 7 is a block diagram schematically showing a liquid crystal drive circuit of a liquid crystal display,
Fig. 8 is an explanatory view showing memory areas in a ROM of the first embodiment,
Fig. 9 is an explanatory view showing memory areas in a RAM of the first embodiment,
Fig. 10 is an explanatory view showing a symbol lottery table for conducting a lottery of symbols stopped and displayed on the variable display portions,
Fig. 11 is an explanatory view showing a termination lottery table of a probability change mode based on which it is determined whether or not the probability change mode is continued,
Fig. 12 is an explanatory view showing a payout table in which winning symbol combinations and payouts thereof are shown,
Fig. 13 is an explanatory view showing reel strips utilized in a normal mode and the probability change mode, wherein Fig. 13 (a) shows reel strips utilized in the normal mode and Fig. 13 (b) shows reel strips utilized in the probability change mode,
Fig. 14 is an explanatory view schematically showing a symbol column variably displayed on the variable display portion through the sixth reel strip,
Fig. 15 is a flowchart of a main process program conducted in the slot machine of the first embodiment,
Fig. 16 is a flowchart of a start acceptance process program conducted in the slot machine of the first embodiment,
Fig. 17 is a flowchart of a lottery process program conducted in the slot machine of the first embodiment,
Fig. 18 is a flowchart of a base game process program conducted in the slot machine of the first embodiment,
Fig. 19 is a flowchart of a bonus game process program conducted in the slot machine of the first embodiment,
Fig. 20 is a flowchart of a probability change mode changing process program conducted in the slot machine of the first embodiment,
Fig. 21 is a front view showing a lower liquid crystal display when a game state shifts to the probability change mode,
Fig. 22 is a front view of the lower liquid crystal display when the probability change mode is terminated,
Fig. 23 is a flowchart of a lottery process program conducted in the slot machine of the second embodiment,
Fig. 24 is a flowchart of a bonus game process program conducted in the slot machine of the second embodiment,
Fig. 25 is an explanatory view showing a winning symbol combination lottery table for the normal mode utilized in the second embodiment,
Fig. 26 is an explanatory view showing a winning symbol combination lottery table for the probability change mode utilized in the second embodiment,
Fig. 27 is a flowchart of a probability change mode changing process program conducted in the slot machine of the third embodiment,
Fig. 28 is an explanatory view showing a termination condition lottery table utilized in the third embodiment,
Fig. 29 is a front view of the lower liquid crystal display on which a termination condition is displayed,
Fig. 30 is an explanatory view showing memory areas in a RAM of the fourth embodiment,
Fig. 31 is a flowchart of a probability change mode changing process program conducted in the slot machine of the fourth embodiment,
Fig. 32 is a flowchart of a probability change mode changing process program conducted in the slot machine of the fifth embodiment,
Fig. 33 is a flowchart of a probability change mode changing process program conducted in the slot machine of the sixth embodiment,
Fig. 34 is a flowchart of a probability change mode changing process program conducted in the slot machine of the seventh embodiment,
Fig. 35 is an explanatory view showing memory areas in a ROM of the eighth embodiment,
Fig. 36 is an explanatory view of a shift lottery table of a probability change mode based on which it is determined whether or not a game state shifts to the probability change mode,
Fig. 37 is a flowchart of a probability change mode changing process program conducted in the slot machine of the eighth embodiment,
Fig. 38 is a flowchart of a probability change mode changing process program conducted in the slot machine of the ninth embodiment,
Fig. 39 is a flowchart of a probability change mode changing process program conducted in the slot machine of the tenth embodiment,
Fig. 40 is a flowchart of a probability change mode changing process program conducted in the slot machine of the eleventh embodiment,
Fig. 41 is a flowchart of a probability change mode changing process program conducted in the slot machine of the twelfth embodiment, and
Fig. 42 is a flowchart of a probability change mode changing process program conducted in the slot machine of the thirteenth embodiment.

### DETAILED DESCRIPTION OF THE PREFERRED EMBODIMENTS

Hereinafter, a gaming machine according to the present invention will be described with reference to the drawings based on the first to the thirteenth embodiments embodying the present invention into a slot machine.

### (First Embodiment)

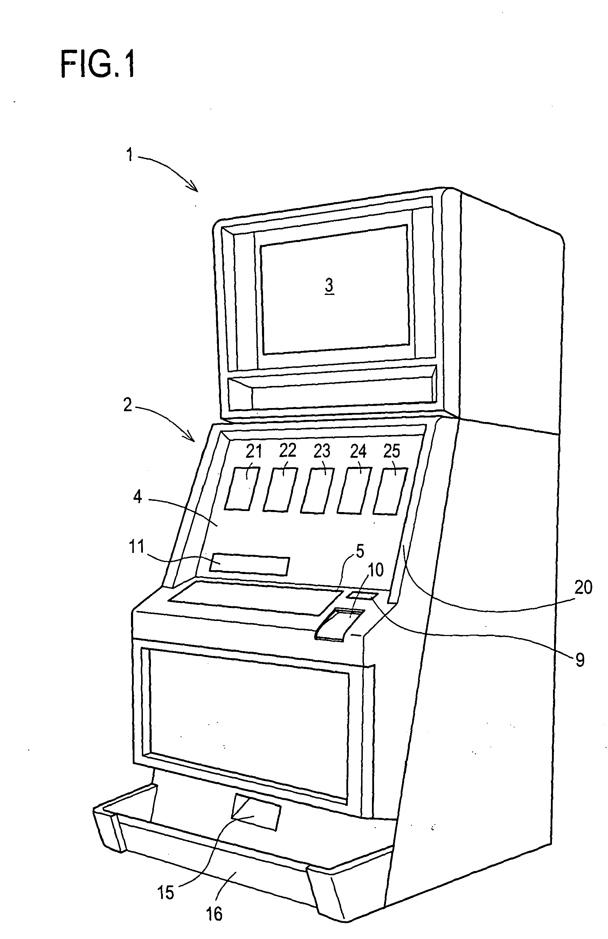

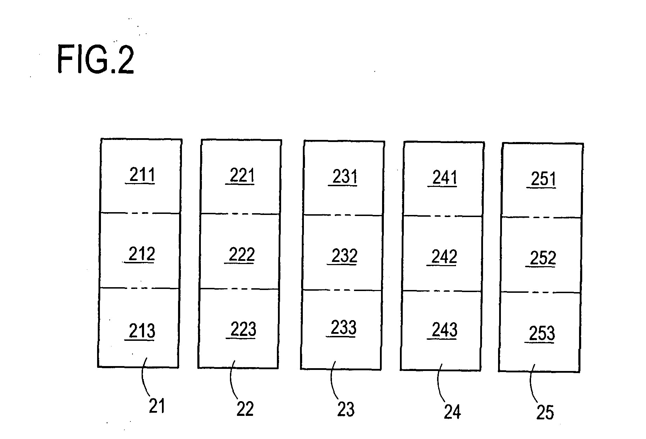

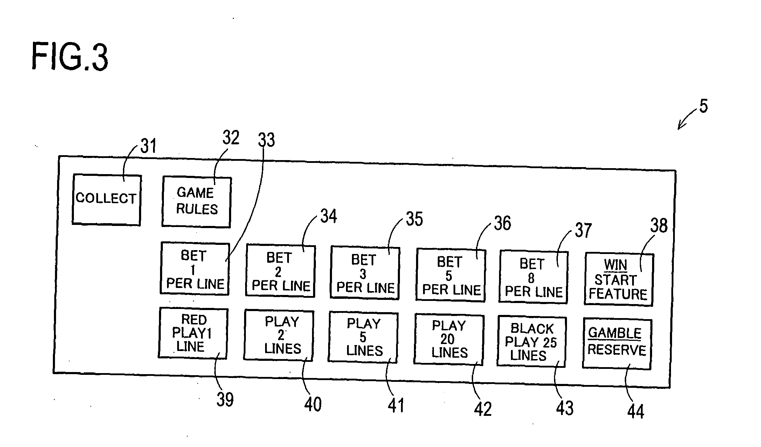

At first, an outline construction of the slot machine according to the first embodiment will be described with reference to Fig. 1 to Fig. 3. Fig. 1 is a perspective view showing an outline construction of the slot machine according to the first embodiment. Fig. 2 is a front view showing variable display portions of the slot machine according to the first embodiment. And Fig. 3 is a front view showing a control panel of the slot machine according to the first embodiment.

In Fig. 1, the slot machine 1 has a cabinet 2 which forms whole construction of the slot machine 1. An upper liquid crystal display 3 is arranged at a front upper position of the cabinet 2 and a lower liquid crystal display 4 is arranged on a device front panel 20 disposed at a front center position of the cabinet 2. Here, the upper liquid crystal display 3 is constructed from a liquid crystal display which is generally used and the lower liquid crystal display 4 is also constructed from a liquid crystal display which is generally used.

On the upper liquid crystal display 3, it is displayed information concerning with a game such as game methods, kinds of winning symbol combinations, payouts thereof and various effects. And on the lower liquid crystal display 4, credits which a player holds at present are displayed and five variable display portions 21, 22, 23, 24 and 25 are displayed at the center thereof. Further, in each of the variable display portions 21 to 25, various symbols mentioned later are variably displayed while scrolling from the upper position toward the lower position, thereafter stopped and displayed.

Therefore, the slot machine 1 of the first embodiment is a so-called video slot machine in which a slot game (two game modes of a base game and a bonus game) is conducted by video reels which are realized and displayed on each of the variable display portions 21 to 25 of the lower liquid crystal display 4. Here, in the slot game (base game and bonus game) according to the first embodiment, symbols stopped and displayed in each of the variable display portions 21 to 25 respectively exist three (totally 15 symbols).

Concretely, as shown in Fig. 2, the variable display portions 21 to 25 are respectively divided into the first stop display areas 211, 221, 231, 241, 251, the second stop display areas 212, 222, 232, 242, 252 and the third stop display areas 213, 223, 233, 243, 253, and symbols are stopped and displayed in each of the stop display areas 211 - 213, 221 - 223, 231 - 233, 241 - 243, 251 - 253.

And in the slot game (base game and bonus game), there exist twenty-five pay lines formed by five stop areas among the stop areas 211 - 213, 221 - 223, 231 - 233, 241 - 243, 251 - 253. When each of the pay lines is activated and specific symbols are aligned with a specific mode on the activated pay line when the symbols are respectively stopped and displayed in each stop display area, a payout is given to the player. Here, each of the pay lines will be described.

The first pay line L1 is formed by the second stop display areas 212, 222, 231, 242 and 252. The second pay line L2 is formed by the first stop display areas 211, 221, 231, 241 and 251. The third pay line L3 is formed by the third stop display areas 213, 223, 233, 243 and 253. The fourth pay line L4 is formed by the first stop display areas 211, 221, 231, 241 and the third stop display area 253. The fifth pay line L5 is formed by the first stop display area 251 and the third stop display areas 213, 223, 233, 243. The sixth pay line L6 is formed by the first stop display areas 211, 221, 231, 241 and the second stop display area 252. The seventh pay line L7 is formed by the second stop display area 252 and the third stop display areas 213, 223, 233, 243, The eighth pay line L8 is formed by the first stop display areas 211, 221, 231, 251 and the second stop display area 242. The ninth pay line L9 is formed by the second stop display area 242 and the third stop display areas 213, 223, 233, 253. The tenth pay line L10 is formed by the first stop display areas 211, 221,231 and the third stop display areas 243, 253. The eleventh pay line L11 is formed by the first stop display areas 241, 251 and the third stop display areas 213, 223, 233. The twelfth pay line L12 is formed by the first stop display areas 211, 221, 231, 251 and the third stop display area 243. The thirteenth pay line L13 is formed by the first stop display area 241 and the third stop display areas 213, 223, 233, 253. The fourteenth pay line L14 is formed by the first stop display areas 241, 251 and the second stop display areas 212, 222, 232. The fifteenth pay line L15 is formed by the second stop display areas 212, 222, 232 and the third stop display areas 243, 253. The sixteenth pay line L16 is formed by the first stop display area 241 and the second stop display areas 212, 222, 232, 252. The seventeenth pay line L17 is formed by the second stop display areas 212, 222, 232, 252 and the third stop display area 243. The eighteenth pay line L18 is formed by the first stop display area 251 and the second stop display areas 212, 222, 232, 242. The nineteenth pay line L19 is formed by the second stop display areas 212, 222, 232, 242 and the third stop display area 253. The twentieth pay line L20 is formed by the first stop display areas 241, 251 and the second stop display areas 212, 222 and the third stop display area 233. The twenty-first pay line L21 is formed by the first stop display area 231 and the second stop display areas 212, 222 and the third stop display areas 243, 253. The twenty-second pay line L22 is formed by the first stop display areas 221, 241 and the second stop display area 212 and the third stop display areas 233, 253. The twenty-third pay line L23 is formed by the first stop display areas 231, 251 and the second stop display area 212 and the third stop display areas 223, 243. The twenty-fourth pay line L24 is formed by the first stop display areas 211, 231 and the third stop display areas 23,243, 253. The twenty-fifth pay line L25 is formed by the first stop display areas 221, 241, 251 and the third stop display areas 213, 233.

Here, the pay line which is activated among the above twenty-five pay lines is called as "activated pay line".

And on the lower liquid crystal display 4, a JP (Jack Pot) sum display portion 11 is formed under the variable display portions 21 to 25. Here, Jack Pot (hereinafter, abbreviated as JP) means a specific system that a plurality of slot machines, which are predetermined, are connected with on-line and a predetermined percent (%) of coins betted in plural slot machines is added to a reserve prize fund and when anyone wins a predetermined winning symbol combination, he or she can obtain such JP prize which is accumulated, In the first embodiment, 10 percent (%) of the credit number (one credit corresponds to one coin) betted by operation of a control table 5 (mentioned later) among 20 slot machines including the slot machine 1 in a game arcade is accumulated. And the credit number accumulated at present is displayed in the JP sum display portion 11.

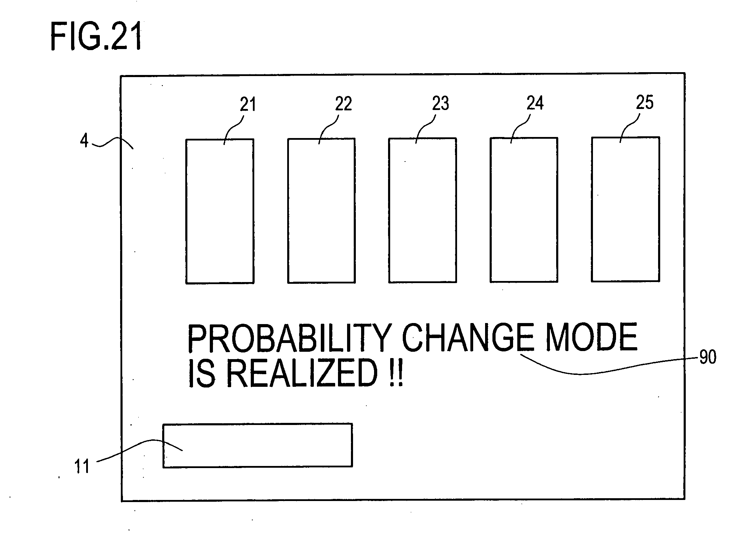

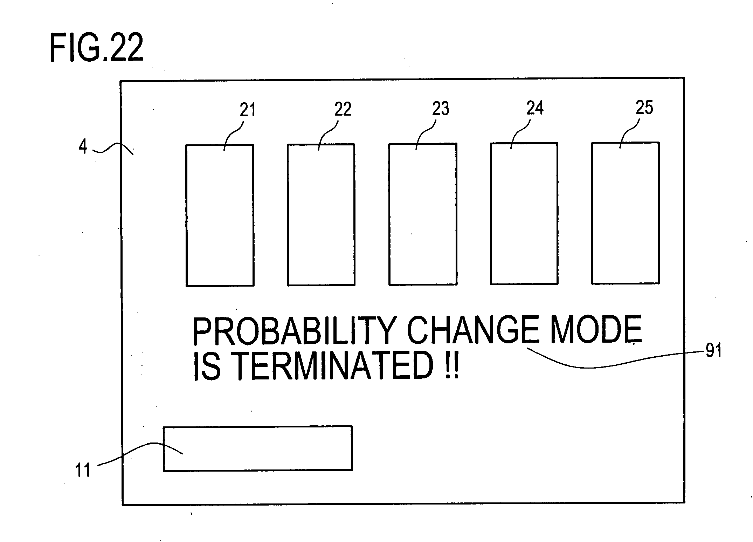

Further, in a case that a game state shifts to a probability change mode in which a probability to win the winning symbol combination (mentioned later) increases in comparison with a normal game mode, characters "PROBABILITY CHANGE MODE IS REALIZED!!" (or "SPECIAL TIME!!") are displayed for five seconds in a display area other than the variable display portions 21 to 25 and the JP sum display portion 11, thereby it is notified to the player that the game state shifts to the probability change mode (see Fig. 21). On the other hand, if the probability change mode is terminated, characters "PROBABILITY CHANGE MODE IS TERMINATED!!" (or "FINISHED SPECIAL TIME!!) are displayed for five seconds, thereby it is notified to the player that the probability change mode is terminated (see Fig. 22).

Here, the method to notify to the player that the probability change mode is realized and the probability change mode is terminated may be done by the other sentence expression without being limited to the method to display the above characters on the lower liquid crystal display 4. Further, notification to the player may be conducted by displaying a special image on the display or sounding the characters from speakers.

And under the lower liquid crystal display 4 it is arranged a control panel 5 which is projected forward. As shown in Fig. 3, on the control panel 5, a COLLECT button 31 and a GAME RULES button 32 are arranged in the upper line from the most left end thereof. And a BET1 PER LINE button 33, a BET2 PER LINE button 34, a BET3 PER LINE button 35, a BET5 PER LINE button 36, a BET8 PER LINE button 37 and a WIN START FEATURE button 38 are arranged in the middle line from the most left end thereof. Further, a RED PLAY 1LINE button 39, a PLAY 2LINES button 40, a PLAY 5LINES button 41, a PLAY 20LINES button 42, a BLACK PLAY 25LINES button 43 and a GAMBLE RESERVE button 44 are arranged on the lower line from the most left end thereof. And as shown in Fig. 1, at the right side of the control panel 5, a coin insertion slot 9 and a bill insertion slot 10 are arranged.

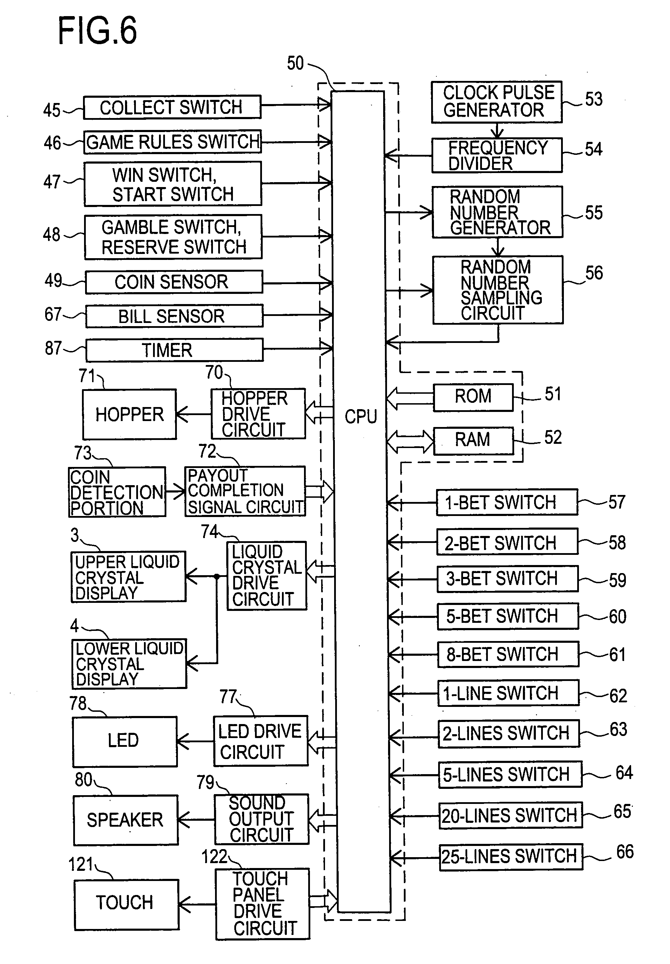

Here, the COLLECT button 31 is a button which is pressed when the base game is terminated and when the COLLECT button 31 is pressed, coins equivalent to the credit number obtained in the game are paid out from a coin payout opening 15 to a coin tray 16 through a hopper 71 (see Fig. 6) installed in the slot machine 1. Here, to the COLLECT button 31, a COLLECT switch 45 is attached and a switch signal is output to a CPU 50 (see Fig. 6) based on press of the COLLECT button 31.

The GAME RULES button 32 is a button which is pressed when game operation method is unclear, and when the GAME RULES button 32 is pressed, various help information is displayed on the upper liquid crystal display 3 or the lower liquid crystal display 4. To this GAME RULES button 32, a GAME RULES switch 46 is attached and a switch signal is output from the GAME RULES switch 46 to the CPU 50 based on press of the GAMERULES button 32 (see Fig. 6).

To the coin insertion slot 9, a coin sensor 49 is disposed and when coins are inserted into the coin insertion slot 9, a coin detection signal is output to the CPU 50 through the coin sensor 49 (see Fig. 6), and credits corresponding to coins inserted are accumulated. And to the bill insertion slot 10, a bill sensor 67 is attached and when a bill is inserted into the bill insertion slot 10, a bill detection signal is output to the CPU 50 through the bill sensor (see Fig. 6), and credits corresponding to the bill inserted are accumulated.

The BET1 PER LINE button 33 is a button to bet one credit among the credits obtained by the player at present against each of the pay lines every one time press thereof. To this BET1 PER LINE button 33, a 1-BET switch 57 is attached and when the BET1 PER LINE button 33 is pressed, a switch signal is output to the CPU 50 from the 1-BET switch 57 based on press of the BET1 PER LINE button 33 (see Fig. 6). The BET2 PER LINE button 34 is a button to start the game with 2 bets against each of the pay lines based on press thereof. To this BET2 PER LINE button 34, a 2-BET switch 58 is attached and when the BET2 PER LINE button 34 is pressed, a switch signal is output to the CPU 50 from the 2-BET switch 58 (see Fig. 6).

The BET3 PER LINE button 35 is a button to start the game with 3 bets against each of the pay lines based on press thereof. To the BET3 PER LINE button 35, a 3-BET switch 59 is attached and when the BET3 PER LINE button 35 is pressed, a switch signal is output to the CPU 50 from the 3-BET switch 59 (see Fig. 6). And the BET5 PER LINE 36 is a button to start the game with 5 bets against each of the pay lines based on press thereof. To the BET5 PER line button 36, a 5-BET switch 60 is attached and when the BET5 PER LINE button 36 is pressed, a switch signal is output to the CPU 50 from the 5-BET switch 60 based on press of the BET5 PER LINE button 36 (see Fig. 6).

The BET8 PER LINE button 37 is a button to start the game with 8 bets against each of the pay lines based on press thereof. To the BET8 PER LINE button 37, a 8-BET switch 61 is attached and when the BET8 PER LINE button 37 is pressed, a switch signal is output to the CPU 50 from the 8-BET switch 61 based on press of the BET8 PER LINE button 37 (see Fig. 6).

Therefore, there will exist 1 bet, 2 bets, 3 bets, 5 bets and 8 bets as the bet number which can be betted by press of the BET1 PER LINE button 33, the BET2 PER LINE button 34, the BET3 PER LINE button 35, the BET5 PER LINE button 36 and the BET8 PER LINE button 37.

The WIN START FEATURE button 38 is a button to start a bonus game mentioned later or add the payout obtained in the bonus game to the credit on the basis of press thereof. To the WIN START FEATURE button 38, a WIN · START switch 47 is attached and when the WIN START FEATURE button 38 is pressed, a switch signal is output to the CPU 50 from the WIN·START switch 47 (see Fig. 6).

The RED PLAY 1 LINE button 39 is a button to start the game while retaining the number of the activated pay line to "1" on the basis of press thereof. To the RED PLAY 1 LINE button 39, a 1-LINE switch 62 is attached and when the RED PLAY 1 LINE button 39 is pressed, a switch signal is output to the CPU 50 from the 1-LINE switch 62 (see Fig. 6). And the PLAY 2 LINES button 40 is a button to start the game while retaining the number of the activated pay line to "2" on the basis of press thereof. To the PLAY 2 LINES button 40, a 2-LINES switch 63 is attached and when the PLAY 2 LINES button 40 is pressed, a switch signal is output to the CPU 50 from the 2-LINES switch 63 (see Fig. 6).

The PLAY 5 LINES button 41 is a button to start the game while retaining the number of the activated pay line to "5" on the basis of press thereof. To the PLAY 5 LINES button 41, a 5-LINES switch 64 is attached and when the PLAY 5 LINES button 41 is pressed, a switch signal is output to the CPU 50 from the 5-LINES switch 64 (see Fig. 6). And the PLAY 20 LINES button 42 is a button to start the game while retaining the number of the activated pay line to "20" on the basis of press thereof. To the PLAY 20 LINES button 42, a 20-LINES switch 65 is attached and when the PLAY 20 LINES button 42 is pressed, a switch signal is output to the CPU 50 from the 20-LINES switch 65 (see Fig. 6).

The BLACK PLAY 25 LINES button 43 is a button to start the game while retaining the number of the activated pay line to "25" on the basis of press thereof. To the BLACK PLAY 25 LINES button 43, a 25-LINES switch 66 is attached and when the BLACK PLAY 25 LINES button 43 is pressed, a switch signal is output to the CPU 50 from the 25-LINES switch 66 (see Fig. 6).

Therefore, there will exist "1" pay line, "2" pay lines, "5" pay lines, "20" pay lines and "25" pay lines as the number of the activated pay lines which can be determined by press of the RED PLAY 1 LINE button 39, the PLAY 2 LINES button 49, the PLAY 5 LINES button 41, the PLAY 20 LINES button 42, the BLACK PLAY 25 LINES button 43.

When the RED PLAY 1 LINE button 39 is pressed, the first pay line L1 mentioned in the above is activated. And when the PLAY 2 LINES button 40 is pressed, both of the first pay line L1 and the second pay line L2 are activated. Similarly, when the PLAY 5 LINES button 41 is pressed, the first pay line L1 ~ the fifth pay line L5 are activated. When the PLAY 20 LINES button 42 is pressed, the first pay line L1 ~ the twentieth pay line L20 are activated. When the BLACK PLAY 25 LINES button 43 is pressed, all of the first pay line L1 ~ the twenty-fifth pay line L25 are activated.

And each of the RED PLAY 1 LINE button 39, the PLAY 2 LINES button 49, the PLAY 5 LINES button 41, the PLAY 20 LINES button 42 and the BLACK PLAY 25 LINES button 43 is a button to start the game with the present bet number and the number of the activated pay lines and to start variable display of the symbols on each of the variable display portions 21 to 25 in the lower liquid crystal display 4.

The GAMBLE RESERVE button 44 is a button to be pressed when the player leaves the seat and to shift to the double down game after the bonus game is terminated. Here, although the double down game means a game done by using the credits obtained in the bonus game by utilizing the RED PLAY 1 LINE button 39 and the BLACK PLAY 25 LINES button 43, explanation thereof will be omitted.

To the GAMBLE RESERVE button 44, a GAMBLE · RESERVE switch 48 is attached and when the GAMBLE RESERVE button 44 is pressed, a switch signal is output to the CPU 50 from the GAMBLE · RESERVE switch 48 (see Fig. 6).

And at a lower position of the cabinet 2, a coin payout opening 15 is formed and a coin tray 16 for receiving coins paid out from the coin payout opening 15 is provided. Within the coin payout opening 15 it is arranged a coin detection portion 73 (mentioned later) which is constructed from the hopper 71 capable of discharging coins one by one and sensors (see Fig. 6). And the coin detection portion 73 counts the number of coins paid out from the coin payout opening 15. Here, instead that coins are directly paid out, a receipt sheet on which the number (value) of coins is printed may be discharged. At that time, the player carries such receipt sheet to the counter of the game arcade, thereby the receipt sheet can be exchanged with goods at the counter.

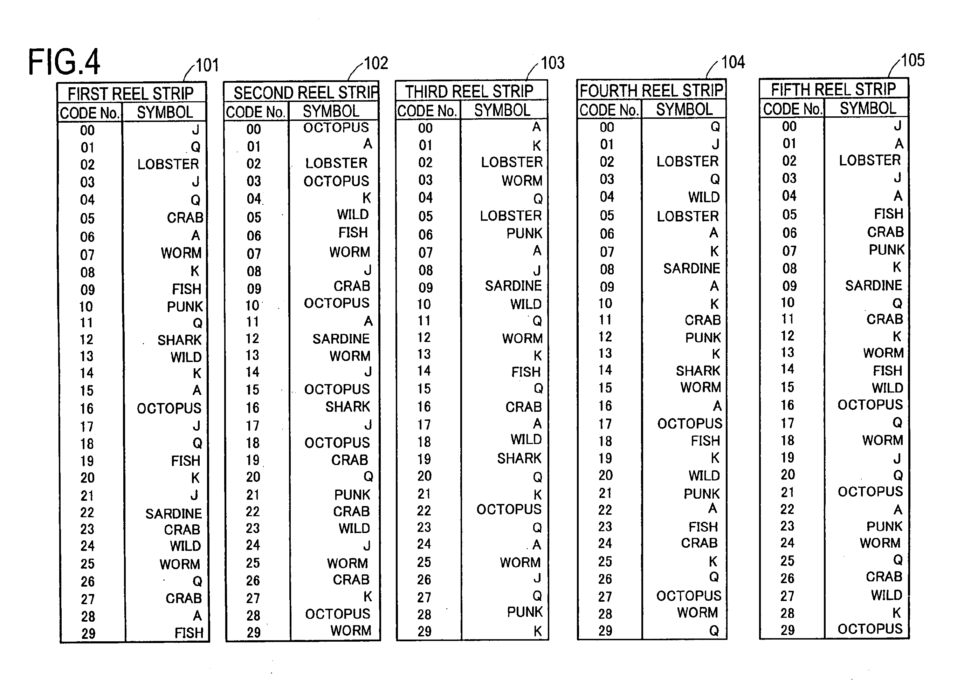

Next, with reference to Fig. 4, it will be described the symbol columns which are variably displayed while being scrolled on each of the variable display portions 21 to 25, the symbol columns being displayed on the lower liquid crystal display 4 in both the base game and the bonus game. In Fig. 4, the symbol column indicated by a first reel strip 101 corresponds to a symbol column variably displayed on the variable display portion 21, the symbol column indicated by a second reel strip 102 corresponds to a symbol column variably displayed on the display portion 22, the symbol column indicated by a third reel strip 103 corresponds to a symbol column variably displayed on the variable display portion 23, the symbol column indicated by a fourth reel strip 104 corresponds to a symbol column variably displayed on the variable display portion 24 and the symbol column indicated by a fifth reel strip 105 corresponds to a symbol column variably displayed on the variable display portion 25.

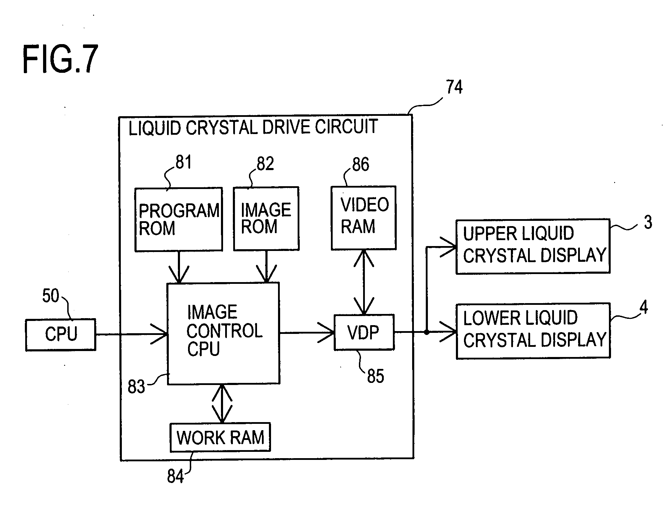

Here, dot data to form images of the symbol columns shown in the first reel strip 101 to the fifth reel strip 105 are stored in an image ROM 82 (see Fig. 7).

Here, the symbol columns respectively indicated by the first to fifth reel strips 101 to 105 have different symbol columns from each other and each symbol column is constructed from 13 symbols by voluntarily combining "LOBSTER", "SHARK", "FISH", "PUNK", "OCTOPUS", "CRAB", "WORM", "A", "K", "Q", "J", "WILD" and "SARDINE".

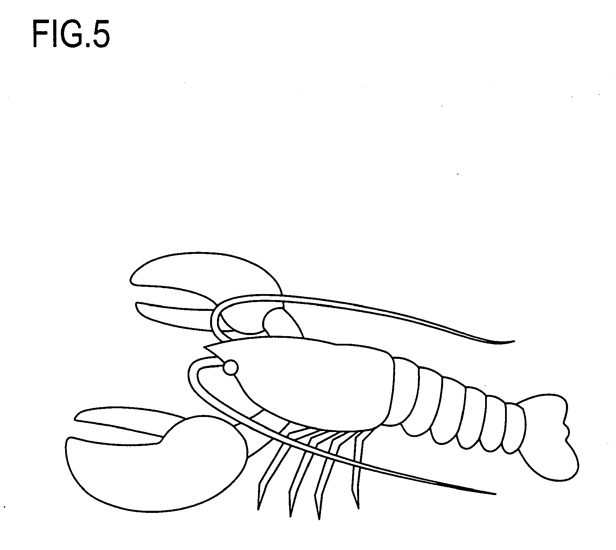

Among the symbols, "LOBSTER" shows the symbol of lobster as shown in Fig. 5. And although "SHARK", "FISH", "PUNK", "OCTOPUS", "CRAB", "WORM", "SARDINE" are not shown, each symbol shows a shark, a fish, a person having a guitar, an octopus, a crab, a worm and a sardine, respectively. And each of "A", "K", "Q", "J" and "WILD" shows a symbol of English character(s), respectively.

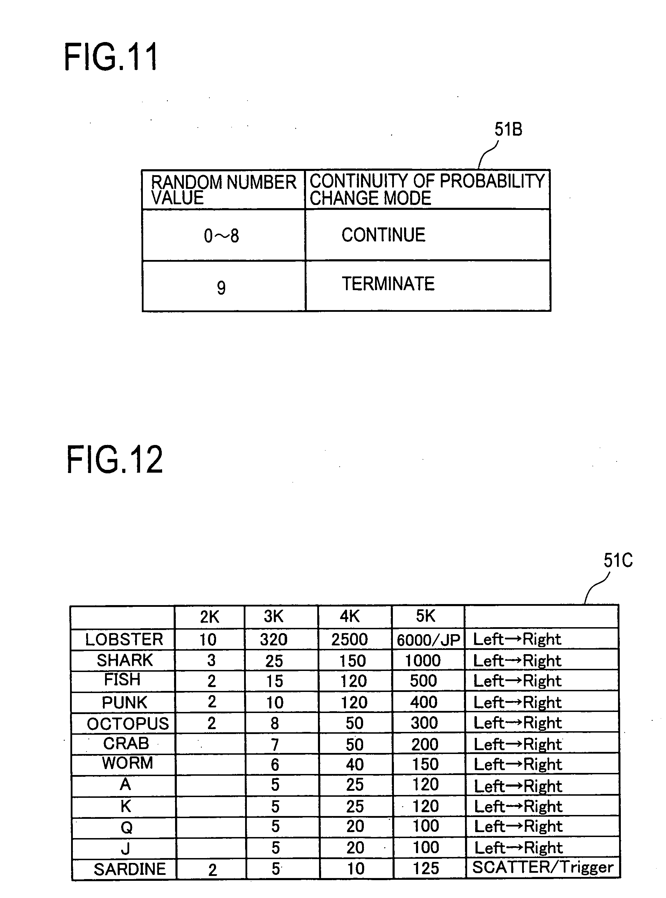

And when "LOBSTER", "SHARK", "FISH", "PUNK", "OCTOPUS", "CRAB", "WORM", "A", "K", "Q", "J" is stopped and displayed with a predetermined number along the first pay line L1 to the twenty-fifth pay line L25 from the left end thereof, a predetermined number of credits are added to the credit obtained by the player (see Fig. 12).

And "SARDINE" is a so-called scatter symbol and if more than two "SARDINE" symbols are totally stopped and displayed on the variable display portions 21 to 25 with no relation to the pay lines, a predetermined credit number is added to the credit obtained by the player (see Fig. 129). Further, as mentioned later, "SARDINE" is a bonus game shift symbol to shift to the bonus game and if more than four "SARDINE" symbols are totally stopped and displayed on the variable display portions 21 to 25 with no relation to the pay lines, the game state shifts to the bonus game.

And "WILD" is an almighty symbol which can be substituted for any of "LOBSTER", "SHARK", "FISH", "PUNK", "OCTOPUS", "CRAB", "WORM", "A", "K", "Q" and "J", other than the "SARDINE" (scatter symbol).

And when any of the RED PLAY 1 LINE button 39, the PLAY 2 LINES button 40, the PLAY 5 LINES button 41, the PLAY 20 LINES button 42 and the BLACK PLAY 25 LINES button 43 is pressed and the game is started, the symbol columns shown in the first reel strip 101 to the fifth reel strip 105 are scrolled in each of the variable display portions 21 to 25 from the upper position toward the lower position and three symbols are stopped and displayed in each of the variable display portions after a predetermined time elapses.

Further, various winning symbol combinations (see Fig. 12) are preset based on plural kinds of symbol combinations and when the symbol combination corresponding to the winning symbol combination is stopped on the pay line which is activated, the payout is added to the credit corresponding to the winning symbol combination. And with no relation to the pay lines, in a case that more than four "SARDINE" symbols are stopped and displayed at the same time, the game state shifts to the bonus game.

On the other hand, with no relation to the pay lines, if more than tree "SARDINE" symbols are stopped and displayed at the same time, if five "WILD" symbols are stopped or if the JP is won, the game state shifts to a probability change mode that a probability according to which the winning symbol combination is stopped on the pay line activated increases. Here, the probability change mode will be described hereinafter in detail.

Next, it will be described a construction of control system in the slot machine 1 with reference to Fig. 6. Fig. 6 is a block diagram schematically showing a control system of the slot machine 1.

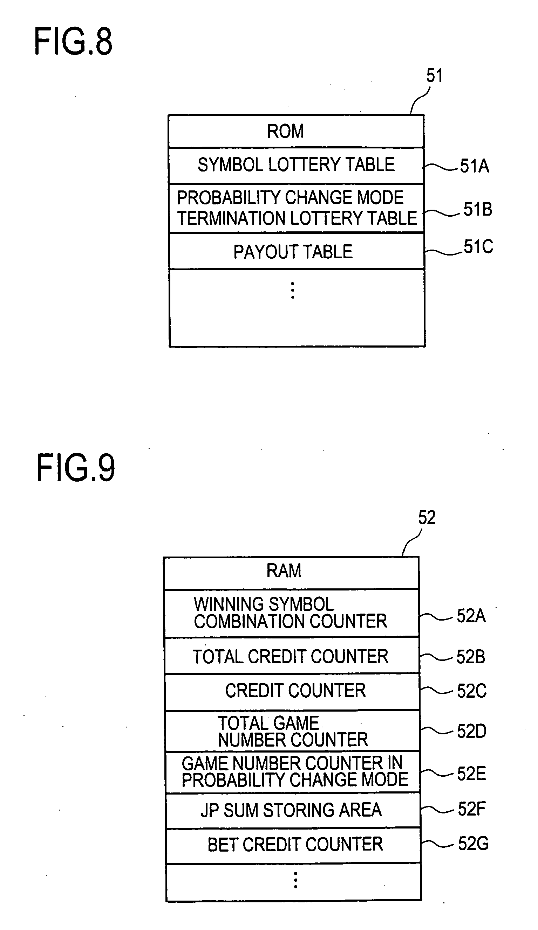

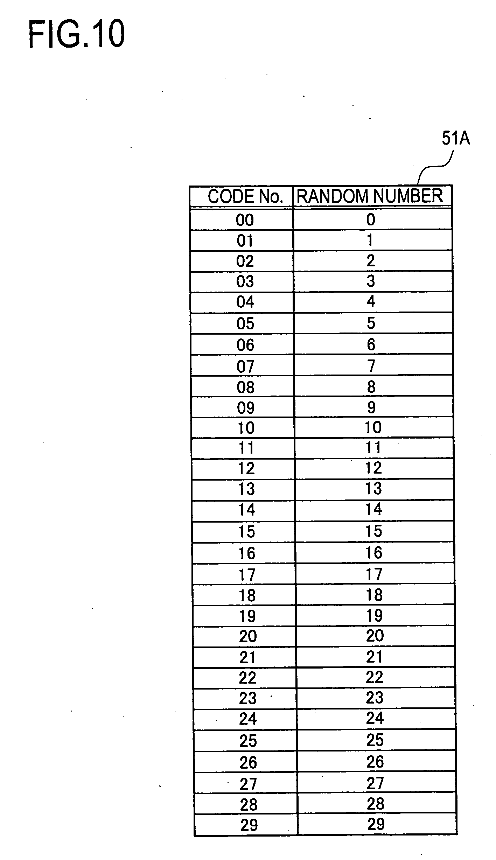

In Fig. 6, the control system of the slot machine 1 is basically constructed from a CPU 50, and a ROM 51 and a RAM 52 are connected to the CPU 50. In the ROM 51, a main process program mentioned later, a base game process program, a bonus game process program, a probability change mode process program, a symbol lottery table to conduct a lottery of stop display symbols (see Fig. 10), a lottery table to conduct a lottery of termination of the probability change mode (see Fig. 11), a payout table to set the winning symbol combinations on the basis of the symbol combinations stopped and displayed and to set the credit paid out based on the winning combination (see Fig. 12), and the other various programs necessary for control of the slot machine 1 and data tables (see Fig. 8). And the RAM 52 is a memory to temporarily store counters (winning symbol combination counter, total credit counter of credits totally obtained, credit counter of credits obtained in the probability change mode, total game number counter, game number counter of games done in the probability change mode, bet credit counter), the counters being utilized when termination condition in the probability change mode is conducted, and to store various data calculated by the CPU 50 (Fig. 9).

And to the CPU 50, a clock pulse generator 53 for generating standard clock pulses and a frequency divider 54 are connected, and a random number generator 55 for generating random numbers and a random number sampling circuit 56 are also connected. The random number sampled through the random number sampling circuit 56 is utilized in various lotteries of the winning symbol combinations and the like. Further, to the CPU 50, the COLLECT switch 45 attached to the COLLECT button 31, the GAME · RULES switch 46 attached to the GAME RULES button 32, the 1-BET switch 57 attached to the BET 1 PER LINE button 33, the 2-BET switch 58 attached to the BET 2 PER LINES button 34, the 3-BET switch 59 attached to the BET 3 PER LINES button 35, the 5-BET switch 60 attached to the BET 5 PER LINES button 36, the 8-BET switch 60 attached to the BET 8 PER LINES button 37, the WIN · START switch 47 attached to the WIN START FEATURE button 38, the 1-LINE switch 62 attached to the RED PLAY 1 LINE button 39, the 2-LINES switch 63 attached to the PLAY 2 LINES button 40, the 5-LINES switch 64 attached to the PLAY 5 LINES button 41, the 20-LINES switch 65 attached to the PLAY 20 LINES button 42, the 25-LINES switch 66 attached to the BLACK PLAY 25 LINES button 43 and the GAMBLE · RESERVE switch 48 attached to the GAMBLE RESERVE button 44 are connected, respectively. The CPU 50 conducts control to execute various operations each of which corresponds to each button, based on the switch signal output from each switch by press thereof.

Further, to the CPU 50, the coin sensor 49 arranged in the coin insertion slot 9 and the bill sensor 67 arranged in the bill insertion portion 10 are respectively connected. The coin sensor 49 detects coins inserted from the coin insertion slot 9 and the CPU 50 calculates the number of inserted coins based on the coin detection signal output from the coin sensor 49. The bill sensor 67 detects kinds and sum of the bill inserted from the bill insertion portion 10 and the CPU 50 calculates the credit number equal to the sum of bill, based on the bill detection signal output from the bill sensor 67.

To the CPU 50, a hopper 71 is connected through a hopper drive circuit 70. When a drive signal is output to the hopper drive circuit 70 from the CPU 50, the hopper 71 pays out a predetermined number of coins from the coin payout opening 15.

And to the CPU 50, a coin detection portion 73 is connected through a payout completion signal circuit 72. The coin detection portion 73 is arranged in the coin payout opening 15 and when the coin detection portion 73 detects that a predetermined number of coins are paid out from the coin payout opening 15, a coin payout detection signal is output to the payout completion signal circuit 72 from the coin detection portion 73, thereby the payout completion signal circuit 72 outputs a payout completion signal to the CPU 50. Further, to the CPU 50, the upper liquid crystal display 3 and the lower liquid crystal display 4 are connected through a liquid crystal drive circuit 74, and the upper liquid crystal display 3 and the lower liquid crystal display 4 are controlled by the CPU 50.

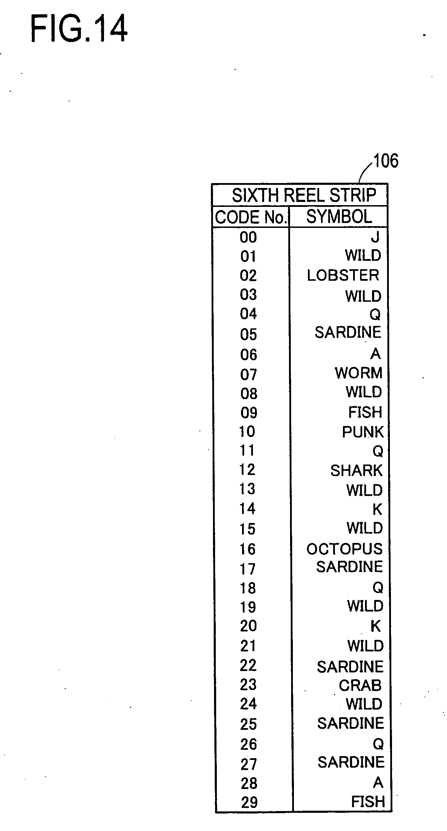

Here, as shown in Fig. 7, the liquid crystal drive circuit 74 is constructed from a program ROM 81, an image ROM 82, an image control CPU 83, a work RAM 84, a VDP (video display processor) 85 and a video RAM 68. And in the program ROM 81, there are stored an image control program for controlling display of the upper liquid crystal display 3 and the lower liquid crystal display 4 and various selection tables. And in the image ROM 82, for example, there are stored dot data for forming images of the symbol columns indicated by the first to fifth reel strips 101 to 105 in Fig. 14, such images being displayed on the lower liquid crystal display 4 (or variable display portions 21 to 25).

And the image control CPU 83 determines the images displayed on the upper liquid crystal display 3 and the lower liquid crystal display 4 among the dot data stored beforehand in the image ROM 82, according to the image control program stored beforehand in the program ROM 81 based on parameters set by the CPU 50. Further, on the lower liquid crystal display 4, the JP sum (credit number) stored in the JP sum storing area 52F of the RAM 52 is displayed in the JP sum display portion 11. And the work RAM 84 functions as temporary memory when the image control program is executed by the image control CPU 83. And the VDP 85 forms images corresponding to display contents determined by the image control CPU 83 and outputs such images to the upper liquid crystal display 3 and the lower liquid crystal display 4. Thereby, for example, the symbol columns indicated by the first to fifth reel strips 101 to 105 are scrolled and displayed on the lower liquid crystal display 4 (or the variable display portions 21 to 25). Here, the video RAM 86 functions as temporary memory when images are formed by the VDP 85.

And to the CPU 50, LEDs 78 are connected through a LED drive circuit 77. Many LEDs 78 are arranged on the front plane of the slot machine 1 and are controlled so as to turn on or turn off by the LED drive circuit 77 based on the drive signal from the CPU 50, when various effects are done. In particular, in the slot machine 1 according to the first embodiment, the LEDs 78 are turned on in the probability change mode mentioned later, thereby various effects are done.

Further, a sound output circuit 79 and a speaker 80 are connected to the CPU 50 and the speaker 80 produces various effect sounds when various effects are conducted based on the output signal from the sound output circuit 79. In particular, in the slot machine 1 according to the first embodiment, music different from that in the normal state is played, thereby various effects are done.

Further, to the CPU 50 a timer 87 to measure a time is connected. Time information of the timer 87 is transmitted to the CPU 50 and the CPU 50 terminates the probability change mode based on the time information in the timer 87, as described hereinafter.

And in the ROM 51, as shown in Fig. 8, there are provided a symbol lottery table 51A for determining symbols stopped and displayed in each of the stop symbol areas 211 - 213, 221 - 223, 231 - 233, 241 - 243, 251 - 253 (see Fig. 2) of the variable display portions 21 to 25 based on random numbers, a lottery table 51B to determine whether or not the probability change mode is terminated every one game if the game state is in the probability change mode and a payout table 51C in which the winning symbol combinations stopped and displayed on each of the stop display areas and payouts thereof are stored.

And in the RAM 52, as shown in Fig. 9, a winning symbol combination counter 52A for accumulatively counting the number of times to win the winning symbol combination (see Fig. 12) after the game state shifts to the probability change mode in a case that the slot machine 1 is in the probability change mode at present, a total credit counter 52B for counting credits which the present player obtains after the game is started, a credit counter 52C for counting credits obtained after the game state shifts to the probability change mode in a case of the probability change mode, a total game number counter 52D for counting the number of games done after the game is started by the present player, a game number counter 52E for counting the number of games done after the game state shifts to the probability change mode in a case of the probability change mode and a bet credit counter 52G for counting the bet number betted right after the game is started by the present player. Further, a JP sum storing area 52F to store the present JP (Jack Pot) sum is provided in the RAM 52.

Next, with reference to Fig. 10, it will be described the symbol lottery table 51A, which is stored in the ROM 51 and utilized when symbols are stopped and displayed in each of the stop display areas 211 - 213, 221 - 223, 231 - 233, 241 - 243, 251 - 253 (see Fig. 2) in a case that the base game and the bonus game are conducted by utilizing five variable display portions 21 to 25 in the slot machine 1. Fig. 10 is an explanatory view showing a symbol lottery table for conducting a lottery of symbols stopped and displayed on the variable display portions.

The symbol lottery table 51A is a lottery table for conducting a lottery of the symbols stopped on the first pay line L1 constructed from the second stop display areas 212, 222, 232, 242 and 252, based on random numbers sampled by the random number sampling circuit 56. And by determining the symbols stopped on the second stop display areas 212, 222, 232, 242 and 252, both the symbols stopped and displayed on the first stop display areas 211, 221, 231, 241 and 251 and the symbols stopped and displayed on the third stop display areas 213, 223, 233, 243 and 253 are also determined according to the symbol arrangement in the reel strips (see Fig. 4). Concretely, the symbols corresponding to the code Nos. which are smaller than the code Nos. determined based on the random numbers by one, are stopped and displayed on the first stop display areas 211, 221, 231, 241 and 251, and the symbols corresponding to the code Nos. which are larger than the code Nos. determined based on the random numbers by one, are stopped and displayed on the third stop display areas 213, 223, 233, 243 and 253.

And in the slot machine 1 according to the first embodiment, the symbols stopped and displayed on the first pay line L1 are determined every each of the variable display portions 21 to 25. In the symbol lottery table 51A, as shown in Fig. 10, code Nos. of "00" - "29" are respectively allotted to the symbol columns represented by the first symbol strip 101 to the fifth symbol strips 105 in Fig. 4 and the sixth symbol strip 106 (mentioned later, see Fig. 14) from the upper. And the random number corresponding to each of the code No. is set.

And the CPU 50 controls the random number sampling circuit 56 to sample five random numbers so as to correspond to each of the variable display portions 21 to 25 when the game is started and determines the symbols stopped on the second stop display areas 212, 222, 232, 242, 252 every each of the variable display portions 21 to 25.

Hereinafter, the symbol column which is indicated by the first reel strip 101, and scrolled and displayed on the variable display portion 21 will be described.

If the random number sampled by the random number sampling circuit 56 is "0", the symbol "J" (English character) allotted to the code No. "00" is stopped and displayed on the stop display area 212, if the random number is "1", the symbol "Q" (English character) allotted to the code No "01" is stopped and displayed on the stop display area 212, if the random number is "2", the symbol "LOBSTER" allotted to the code No. "02" is stopped and displayed on the stop display area 212, if the random number is "3", the symbol "J" (English character) allotted to the code No. "03" is stopped and displayed on the stop display area 212, if the random number is "4", the symbol "Q" (English character) allotted to the code No. "04" is stopped and displayed on the stop display area 212, if the random number is "5", the symbol "CRAB" allotted to the code No. "05" is stopped and displayed on the stop display area 212, if the random number is "6", the symbol "A" (English character) allotted to the code No. "06" is stopped and displayed on the stop display area 212, if the random number is "7", the symbol "WORM" allotted to the code No. "07" is stopped and displayed on the stop display area 212, if the random number is "8", the symbol "K" (English character) allotted to the code No. "08" is stopped and displayed on the stop display area 212, if the random number is "9", the symbol "FISH" allotted to the code No. "09" is stopped and displayed on the stop display area 212, and if the random number is "10", the symbol "PUNK" (person having a guitar) allotted to the code No. "10" is stopped and displayed on the stop display area 212.

And if the random number is "11", the symbol "Q" (English character) allotted to the code No. "11" is stopped and displayed on the stop display area 212, if the random number is "12", the symbol "SHARK" allotted to the code No. "12" is stopped and displayed on the stop display area 212, if the random number is "13", the symbol "WILD" (English characters) allotted to the code No. "13" is stopped and displayed on the stop display area 212, if the random number is "14", the symbol "K" (English character) allotted to the code No. "14" is stopped and displayed on the stop display area 212, if the random number is "15", the symbol "A" (English character) allotted to the code No. "15" is stopped and displayed on the stop display area 212, if the random number is "16", the symbol "OCTOPUS" allotted to the code No. "16" is stopped and displayed on the stop display area 212, if the random number is "17", the symbol "J" (English character) allotted to the code No. "17" is stopped and displayed on the stop display area 212, if the random number is "18", the symbol "Q" (English character) allotted to the code No. "18" is stopped and displayed on the stop display area 212, and if the random number is "19", the symbol "FISH" allotted to the code No. "19" is stopped and displayed on the stop display area 212.

And if the random number is "20", the symbol "K" (English character) allotted to the code No. "20" is stopped and displayed on the stop display area 212, if the random number is "21", the symbol "J" (English character) allotted to the code No. "21" is stopped and displayed on the stop display area 212, if the random number is "22", the symbol "SARDINE" allotted to the code No. "22" is stopped and displayed on the stop display area 212, if the random number is "23", the symbol "CRAB" allotted to the code No. "23" is stopped and displayed on the stop display area 212, if the random number is "24", the symbol "WILD" (English characters) allotted to the code No. "24" is stopped and displayed on the stop display area 212, if the random number is "25", the symbol "WORM" allotted to the code No. "25" is stopped and displayed on the stop display area 212, if the random number is "26", the symbol "Q" (English character) allotted to the code No. "26" is stopped and displayed on the stop display area 212, if the random number is "27", the symbol "CRAB" allotted to the code No. "27" is stopped and displayed on the stop display area 212, if the random number is "28", the symbol "A" (English character) allotted to the code No. "28" is stopped and displayed on the stop display area 212, and if the random number is "29", the symbol "FISH" allotted to the code No. "29" is stopped and displayed on the stop display area 212.

Here, the above mentioned display control is similarly conducted in the symbol column indicated by the second reel strip 102 of Fig. 4, the symbols of the symbol column being scrolled and displayed on the variable display portion 22. And the above mentioned display control is similarly conducted in the symbol column indicated by the third reel strip 103 of Fig. 4, the symbols of the symbol column being scrolled and displayed on the variable display portion 23. And the above mentioned display control is similarly conducted in the symbol column indicated by the fourth reel strip 104 of Fig. 4, the symbols of the symbol column being scrolled and displayed on the variable display portion 24. And the above mentioned display control is similarly conducted in the symbol column indicated by the fifth reel strip 105 of Fig. 4, the symbols of the symbol column being scrolled and displayed on the variable display portion 25. Further, in the probability change mode mentioned later, the above mentioned display control is similarly conducted in the symbol column indicated by the sixth reel strip 106 of Fig. 14, the symbols of the symbol column being scrolled and displayed on the variable display portion 21.

The lottery table 51B is a lottery table to determine whether or not the present probability change mode is terminated based on the random number sampled by the random number sampling circuit 56 every one game is finished in the probability change mode. Here, the lottery table 51B will be described in detail hereinafter.

Next, with reference to Fig. 12, it will be described the winning symbol combinations and payouts thereof in a case that the base game and the bonus game are done by using five variable display portions 21 to 25 in the slot machine 1. Fig. 12 is an explanatory view of the payout table 51C showing the winning symbol combinations and payouts thereof in a case that the base game and the bonus game are done by using five variable display portions 21 to 25, and shows payouts in a case that the bet number is "1". Therefore, if the bet number is "1", the payout number shown in Fig. 12 is added to the credit, and if the bet number is more than "2", the value obtained by multiplying the bet number with the payout number shown in Fig. 12 is added to the credit. Here, it is excluded a case that JP is won.

Here, concretely describing the winning symbol combinations and payouts thereof in the base game, as shown in Fig. 12, if the symbols "LOBSTER" are stopped and displayed in series along the activated pay line on the variable display portions 21 and 22 (if two symbols "LOBSTER" appear in series from the left end (this case is called as "2K")), the payout number "10" can be obtained. And if the symbols "LOBSTER" are stopped and displayed in series along the activated pay line on the variable display portions 21 to 23 (if three symbols "LOBSTER" appear in series from the left end (this case is called as "3K")), the payout number "320" can be obtained. Further, if the symbols "LOBSTER" are stopped and displayed in series along the activated pay line on the variable display portions 21 to 24 (if four symbols "LOBSTER" appear in series from the left end (this case is called as "4K")), the payout number "2500" can be obtained. And if the symbols "LOBSTER" are stopped and displayed in series along the activated pay line on the variable display portions 21 to 25 (if five symbols "LOBSTER" appear in series from the left end (this case is called as "5K")), the payout number "6000" can be obtained.

Further, in a case that the game is started with the MAX bet (a case that all twenty-five pay lines are activated and the bet number for each pay line is the maximum number 8), five symbols "LOBSTER" are stopped and displayed in series along the activated pay line in the variable display portions 21 to 25, the JP (Jack Pot) is won, instead of the payout "6000". If the JP is won, the credits corresponding the credit number displayed in the JP sum display portion 11 (see fig. 1) can be obtained.

And as for the symbol "SHARK", if the symbols "SHARK" are stopped and displayed in series along the activated pay line on the variable display portions 21 and 22 (if two symbols "SHARK" appear in series from the left end (this case is called as "2K")), the payout number "3" can be obtained. And if the symbols "SHARK" are stopped and displayed in series along the activated pay line on the variable display portions 21 to 23 (if three symbols "SHARK" appear in series from the left end (this case is called as "3K")), the payout number "25" can be obtained. Further, if the symbols "SHARK" are stopped and displayed in series along the activated pay line on the variable display portions 21 to 24 (if four symbols "SHARK" appear in series from the left end (this case is called as "4K")), the payout number "150" can be obtained. And if the symbols "SHARK" are stopped and displayed in series along the activated pay line on the variable display portions 21 to 25 (if five symbols "SHARK" appear in series from the left end (this case is called as "5K")), the payout number "1000" can be obtained.

And as for the symbol "FISH", if the symbols "FISH" are stopped and displayed in series along the activated pay line on the variable display portions 21 and 22 (if two symbols "FISH" appear in series from the left end (this case is called as "2K")), the payout number "2" can be obtained. And if the symbols "FISH" are stopped and displayed in series along the activated pay line on the variable display portions 21 to 23 (if three symbols "FISH" appear in series from the left end (this case is called as "3K")), the payout number "15" can be obtained. Further, if the symbols "FISH" are stopped and displayed in series along the activated pay line on the variable display portions 21 to 24 (if four symbols "FISH" appear in series from the left end (this case is called as "4K")), the payout number "120" can be obtained. And if the symbols "FISH" are stopped and displayed in series along the activated pay line on the variable display portions 21 to 25 (if five symbols "FISH" appear in series from the left end (this case is called as "5K")), the payout number "500" can be obtained.

And as for the symbol "PUNK" (a person having a guitar), if the symbols "PUNK" are stopped and displayed in series along the activated pay line on the variable display portions 21 and 22 (if two symbols "PUNK" appear in series from the left end (this case is called as "2K")), the payout number "2" can be obtained. And if the symbols "PUNK" are stopped and displayed in series along the activated pay line on the variable display portions 21 to 23 (if three symbols "PUNK" appear in series from the left end (this case is called as "3K")), the payout number "10" can be obtained. Further, if the symbols "PUNK" are stopped and displayed in series along the activated pay line on the variable display portions 21 to 24 (if four symbols "PUNK" appear in series from the left end (this case is called as "4K")), the payout number "120" can be obtained. And if the symbols "PUNK" are stopped and displayed in series along the activated pay line on the variable display portions 21 to 25 (if five symbols "PUNK" appear in series from the left end (this case is called as "5K")), the payout number "400" can be obtained.

And as for the symbol "OCTOPUS", if the symbols "OCTOPUS" are stopped and displayed in series along the activated pay line on the variable display portions 21 and 22 (if two symbols "OCTOPUS" appear in series from the left end (this case is called as "2K")), the payout number "2" can be obtained. And if the symbols "OCTOPUS" are stopped and displayed in series along the activated pay line on the variable display portions 21 to 23 (if three symbols "OCTOPUS" appear in series from the left end (this case is called as "3K")), the payout number "8" can be obtained. Further, if the symbols "OCTOPUS" are stopped and displayed in series along the activated pay line on the variable display portions 21 to 24 (if four symbols "OCTOPUS" appear in series from the left end (this case is called as "4K")), the payout number "50" can be obtained. And if the symbols "OCTOPUS" are stopped and displayed in series along the activated pay line on the variable display portions 21 to 25 (if five symbols "OCTOPUS" appear in series from the left end (this case is called as "5K")), the payout number "300" can be obtained.

And as for the symbol "CRAB", if the symbols "CRAB" are stopped and displayed in series along the activated pay line on the variable display portions 21 to 23 (if three symbols "CRAB" appear in series from the left end (this case is called as "3K")), the payout number "7" can be obtained. Further, if the symbols "CRAB" are stopped and displayed in series along the activated pay line on the variable display portions 21 to 24 (if four symbols "CRAB" appear in series from the left end (this case is called as "4K")), the payout number "50" can be obtained. And if the symbols "CRAB" are stopped and displayed in series along the activated pay line on the variable display portions 21 to 25 (if five symbols "CRAB" appear in series from the left end (this case is called as "5K")), the payout number "200" can be obtained.

And as for the symbol "WORM", if the symbols "WORM" are stopped and displayed in series along the activated pay line on the variable display portions 21 to 23 (if three symbols "WORM" appear in series from the left end (this case is called as "3K")), the payout number "6" can be obtained. Further, if the symbols "WORM" are stopped and displayed in series along the activated pay line on the variable display portions 21 to 24 (if four symbols "WORM" appear in series from the left end (this case is called as "4K")), the payout number "40" can be obtained. And if the symbols "WORM" are stopped and displayed in series along the activated pay line on the variable display portions 21 to 25 (if five symbols "WORM" appear in series from the left end (this case is called as "5K")), the payout number "150" can be obtained.

And as for the symbol "A" (English character), if the symbols "A" are stopped and displayed in series along the activated pay line on the variable display portions 21 to 23 (if three symbols "A" appear in series from the left end (this case is called as "3K")), the payout number "5" can be obtained. Further, if the symbols "A" are stopped and displayed in series along the activated pay line on the variable display portions 21 to 24 (if four symbols "A" appear in series from the left end (this case is called as "4K")), the payout number "25" can be obtained. And if the symbols "A" are stopped and displayed in series along the activated pay line on the variable display portions 21 to 25 (if five symbols "A" appear in series from the left end (this case is called as "5K")), the payout number "120" can be obtained.

And as for the symbol "K" (English character), if the symbols "K" are stopped and displayed in series along the activated pay line on the variable display portions 21 to 23 (if three symbols "K" appear in series from the left end (this case is called as "3K")), the payout number "5" can be obtained. Further, if the symbols "K" are stopped and displayed in series along the activated pay line on the variable display portions 21 to 24 (if four symbols "K" appear in series from the left end (this case is called as "4K")), the payout number "25" can be obtained. And if the symbols "K" are stopped and displayed in series along the activated pay line on the variable display portions 21 to 25 (if five symbols "K" appear in series from the left end (this case is called as "5K")), the payout number "120" can be obtained.

And as for the symbol "Q" (English character), if the symbols "Q" are stopped and displayed in series along the activated pay line on the variable display portions 21 to 23 (if three symbols "Q" appear in series from the left end (this case is called as "3K")), the payout number "5" can be obtained. Further, if the symbols "Q" are stopped and displayed in series along the activated pay line on the variable display portions 21 to 24 (if four symbols "Q" appear in series from the left end (this case is called as "4K")), the payout number "20" can be obtained. And if the symbols "Q" are stopped and displayed in series along the activated pay line on the variable display portions 21 to 25 (if five symbols "Q" appear in series from the left end (this case is called as "5K")), the payout number "100" can be obtained.

And as for the symbol "J" (English character), if the symbols "J" are stopped and displayed in series along the activated pay line on the variable display portions 21 to 23 (if three symbols "J" appear in series from the left end (this case is called as "3K")), the payout number "5" can be obtained. Further, if the symbols "J" are stopped and displayed in series along the activated pay line on the variable display portions 21 to 24 (if four symbols "J" appear in series from the left end (this case is called as "4K")), the payout number "20" can be obtained. And if the symbols "J" are stopped and displayed in series along the activated pay line on the variable display portions 21 to 25 (if five symbols "J" appear in series from the left end (this case is called as "5K")), the payout number "100" can be obtained.

And in a case that the above payout is realized on plural activated pay lines, all payouts are added to the credit.

On the other hand, as for the symbol "SARDINE", this symbol is the scatter symbol and if two symbols "SARDINE" appear (are stopped and displayed) on the variable display portions 21 to 25 with no relation to the activated pay lines, that is, if the case "2K" is realized, the payout number "2" can be obtained. If three symbols "SARDINE" appear (are stopped and displayed) on the variable display portions 21 to 25 with no relation to the activated pay lines, that is, if the case "3K" is realized, the payout number "5" can be obtained. And if four symbols "SARDINE" appear (are stopped and displayed) on the variable display portions 21 to 25 with no relation to the activated pay lines, that is, if the case "4K" is realized, the payout number "10" can be obtained. Further, if five symbols "SARDINE" appear (are stopped and displayed) on the variable display portions 21 to 25 with no relation to the activated pay lines, that is, if the case "5K" is realized, the payout number "125" can be obtained.

Here, concerning with only the payout obtained by the symbol "SARDINE", the payout number calculated by multiplying the payout number shown in Fig. 12 with the total bet number (a product of the bet number and the number of activated pay line) is added to the credit. At that time, if it exists the payout other than the payout on the basis of the symbol "SARDINE", such payout is also added to the credit.

And as for the symbol "SARDINE", this symbol is also a trigger symbol to shift to the bonus game and in a case that more than four symbols "SARDINE" appear (are stopped and displayed) at the same time on the variable display portions 21 to 25 with no relation to the activated pay lines, not only the above payout can be obtained but also the game state can be shifted to the bonus game.

Hereinafter, the bonus game will be described. The bonus game is a game which is started when a special condition is realized during the base game and the bonus game is beneficial for the player in many cases. Here, when the game state shifts to the bonus game, games are automatically and successively conducted in 15 - 25 times according to the lottery result done when the game state shifts to the bonus game without betting credits and the like.

Here, as the bet number and the number of pay lines in the bonus game, those at the time that the game state shifts to the bonus game are utilized. And although the winning symbol combinations and the payouts in the bonus game are as same as those in the base game mentioned in the above, the symbol "SHARK" is handles as the symbol "LOBSTER" and in a case that four symbols "SARDINE" totally appear (are stopped and displayed), the game state can be again shifted to the bonus game. Here, as shown in Fig. 12, since the payout is set higher for the symbol "LOBSTER" than for the symbol "SHARK" when the winning symbol combination is won, there exists high possibility that the player can get many credits without consuming credits.

And in the slot machine 1 according to the first embodiment, if a predetermined condition is realized during the base game and the bonus game, the game state shifts to the probability change mode. Here, the probability change mode means a special game mode which is realized if three of the symbol "SARDINE" are stopped and displayed at the same time if five of the symbol "WILD" are stopped on the pay line and if the JP is won, with no relation to pay lines during the base game and the bonus game.

If one of the above conditions is satisfied, the game state shifts to the probability change mode in which the probability to win the winning combination (see Fig. 12) becomes higher than the normal game state till a predetermined termination condition is satisfied from the next game (here, one game means a time till variable display of the symbols is started on each of the variable display portions 21 to 25, thereafter the symbols are stopped and displayed thereon).

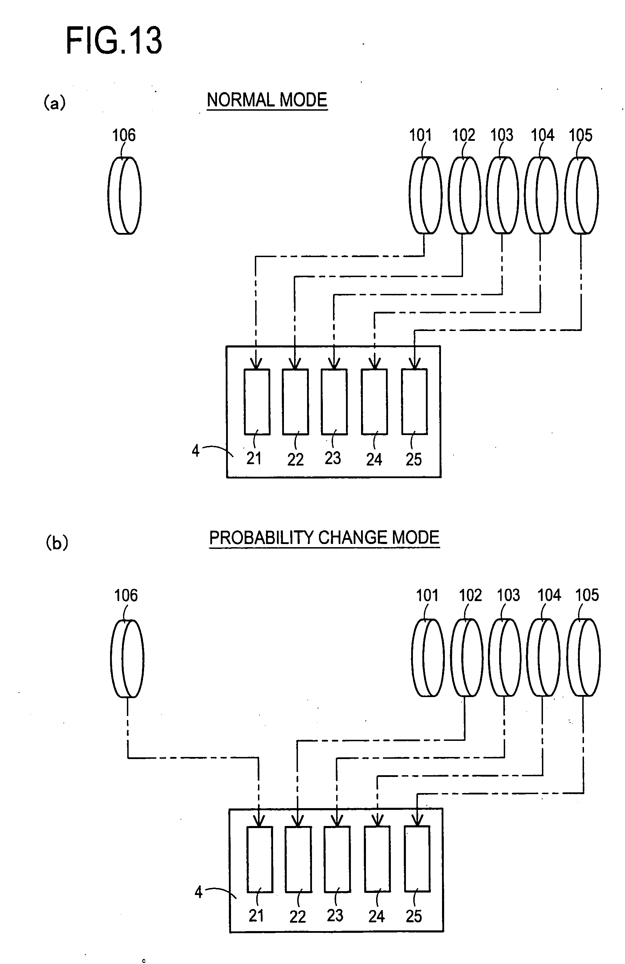

Concretely, among the first reel strip 101 - the fifth reel strip 105 which are variably moved, stopped and displayed respectively on the variable display portions 21 to 25, the probability change mode is done by exchanging the first reel strip 101 with the sixth reel strip 106. Fig. 13 (a) is a schematic view showing reel strips variably moved, stopped and displayed respectively on the variable display portions 21 - 25 in the normal mode and Fig. 13 (b) is a schematic view showing the reel strips in the probability change mode. Fig. 14 is a schematic view showing symbol column variably displayed on the variable display portion by the sixth reel strip 106.

As shown in Fig. 13 (a), although in the normal mode, the game is conducted by utilizing five reel strips of the first reel strip 101 - the fifth reel strip 105, the reel strip which is displayed on the variable display portion 21 is changed from the first reel strip 101 to the sixth reel strip 106 in the probability change mode as shown in Fig. 13 (b).

In the sixth reel strip 106, many of the symbols "WILD" (English characters) and the symbols "SARDINE" are included as shown in Fig. 14. Concretely, although only two symbols "WILD" are included in the first reel strip 101, eight symbols "WILD" are included in the sixth reel strip 106. And although only one symbol "SARDINE" is included in the first reel strip 101, four symbols "SARDINE" are included in the sixth reel strip 106. Here, as mentioned in the above, the symbol "WILD" can be substituted for the symbol (the symbol "LOBSTER", the symbol "SHARK", the symbol "FISH", the symbol "PUNK", the symbol "OCTOPUS", the symbol "CRAB", the symbol "WORM", the symbol "A", the symbol "K", the symbol "Q", the symbol "J") other than the symbol "SARDINE" and the probability to win any of the winning symbol combination shown in Fig. 12 increases in the probability change mode, based on that the number of the symbol "WILD" increases. Similarly, the symbol "SARDINE" is the scatter symbol through which the credit can be obtained if more than two symbols "SARDINE" are totally stopped and displayed on the variable display portions 21 to 25 with no relation to the activated pay line and the probability that two symbols "SARDINE" are stopped increases in the probability change mode. Further, the symbol "SARDINE" is also the shift symbol to shift the game state to the bonus game and the probability to shift to the bonus game increases based on the number of symbol "SARDINE" increases. Therefore, based on that the game state shifts to the probability change mode, the player can get more payout than the normal mode with the same bet number (payout rate increases).

And when the predetermined termination condition is satisfied, the probability change mode is terminated with the game in which the predetermined termination condition is satisfied. The termination condition in the slot machine 1 of the first embodiment corresponds to any one of cases: (1) if three symbols "SARDINE" are stopped and displayed during the probability change mode at the same time with no relation to the activated pay lines; (2) if five symbols "WILD" are stopped on the pay line; (3) if the JP is obtained; (4) if any of the winning symbol combinations shown in Fig. 12 is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10: 45), 13 o'clock and 15 minutes (13: 15) and 21 o'clock and 45 minutes (21: 45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits. And if such termination condition is satisfied, the probability change mode is terminated in such game.

Next, the termination conditions mentioned in the above will be described.

At first, each of the termination conditions; (1) if three symbols "SARDINE" are stopped and displayed during the probability change mode at the same time with no relation to the activated pay lines, (2) if five symbols "WILD" are stopped on the pay line and (3) if the JP is obtained, is as same as the start condition of the probability change mode and such termination condition is satisfied according to the symbols stopped and displayed on the variable display portions 21 to 25. Here, obtainment of the JP is realized in a case that five symbols "LOBSTER" are successively stopped and displayed on the pay line in the variable display portions 21 to 25 if the game is started with the MAX bet (if all of twenty-five pay lines (25) are activated and the bet number against each activated pay line is set to eight (8)). And the CPU 50 determines that the symbols are stopped and displayed, thereby terminates the probability change mode after the present game is finished.

And each of the termination conditions; (4) if any of the winning symbol combinations shown in Fig. 12 is won in fifteen times after the game state shifts to the probability change mode, (5) if coins obtained by the player from start of the game become more than 10,000 coins (if the obtained credits of the player exceed 10,000 credits), (6) if coins obtained by the player exceed 1,000 coins after the game state shifts to the probability change mode (if the obtained credits exceed 1,000 credits), (7) if the game number done by the player from start of the game exceeds 500 games and (8) if the game number exceeds 20 games after the game state shifts to the probability change mode, is satisfied based on that a predetermined number concerning with the game (the number of win of the winning symbol combination, the credit number obtained, the game number conducted) is counted at the time that the player, who is presently conducting games in the slot machine 1, starts the game or the game state shifts to the present probability change mode and the counter value reaches to a predetermined value.

Here, each of the above counter numbers is accumulatively counted in the RAM 52 and if the slot machine 1 is presently in the probability change mode, the number of times according to which the winning combination is won after the game state shifts to the probability change mode, is stored in the winning symbol combination counter 52A. And the credits which are obtained by the present player after the game is started, are stored in the total credit counter 52B. And the credits which are obtained after the game is started if the slot machine 1 is in the probability change mode, are stored in the credit counter 52C. And the game number according to which the present player conducts after the game is started, is stored in the total game number counter 52D. Further, the game number according to which the games are conducted after the game state shifts to the probability change mode if the slot machine 1 is in the probability change mode, is stored in the game number counter 52E. And the CPU 50 determines that the counter value stored in the RAM 52 reaches to a predetermined value and terminates the probability change mode after the present game is finished.

And each of the termination conditions; (9) if the present time becomes any of 10 o'clock and 45 minutes (10: 45), 13 o'clock and 15 minutes (13: 15) and 21 o'clock and 45 minutes (21: 45) and (10) if three minutes elapse after the game state shifts to the probability change mode, is satisfied based on the present time and an elapsing time after the game state shifts to the probability change mode. Here, the present time and the elapsing time after the game sate shifts to the probability change mode are measured by the timer 87 (see Fig. 6). And the CPU 50 determines that the time measured by the timer 87 reaches to a predetermined time and terminates the probability change mode after the present game is finished.

And the termination condition; (11) if termination of the probability change mode is determined in the lottery done every one game, is satisfied based on the lottery result conducted every one game (here, one game means a time till variable display of the symbols is started on each of the variable display portions 21 to 25, thereafter the symbols are stopped and displayed thereon) is terminated in the probability change mode. Fig. 11 is a termination lottery table of the probability change mode which is utilized to obtain the above lottery result.

As shown in Fig. 11, the termination table 51B is a lottery table to conduct the lottery based on the random numbers "0"~"9" sampled by the random number sampling circuit 56 every one game is terminated in the probability change mode. And based on the obtained random number, it is determined whether the probability change mode is continuously retained or is terminated by the CPU 50.

Concretely, if the random number lies in the range of "0" ~ "8", the probability change mode is continuously retained. On the other hand, if the random number is "9", the probability change mode is terminated after the present game is finished.

Further, the termination condition; (12) if the payout rate exceeds 90%, is satisfied based on a rate (payout rate) of the credits which are paid out against the credit number betted by the player. The CPU 50 calculates the payout rate based on the total credit counter 52B and the bet credit counter 52G in the RAM 52 and when the CPU 50 determines that the present payout rate exceeds 90%, the probability change mode is terminated after the present game is finished.

Further, the termination condition; (13) if the present credit number displayed in the JP sum display portion 11 exceeds 100,000 credits, is satisfied based on the credit number of the JP accumulated by the present time. In the slot machine 1 according to the first embodiment, 10% of the credit number (one credit corresponds to one coin) betted through operation of the control panel 5 is accumulated among twenty slot machines including the slot machine 1 installed in the game arcade. And the present JP sum is stored in the JP sum storing area 52F (see Fig. 9) of the RAM 52 and the JP credit number presently accumulated is displayed in the JP sum display portion 11. Further, the CPU 50 determines that the JP sum exceeds 100,000 credits stored in the JP sum storing area 52F and the probability change mode is terminated after the present game is finished.

Here, the termination condition may be set to a case that more than two termination conditions of (1) ~ (13) mentioned in the above are satisfied, instead of the case that any one of the termination conditions of (1) - (13) is satisfied. For example, in a case that the game number exceeds 20 games after the game state shifts to the probability change mode and three symbols "SARDINE" are stopped and displayed at the same time, the probability change mode may be terminated.

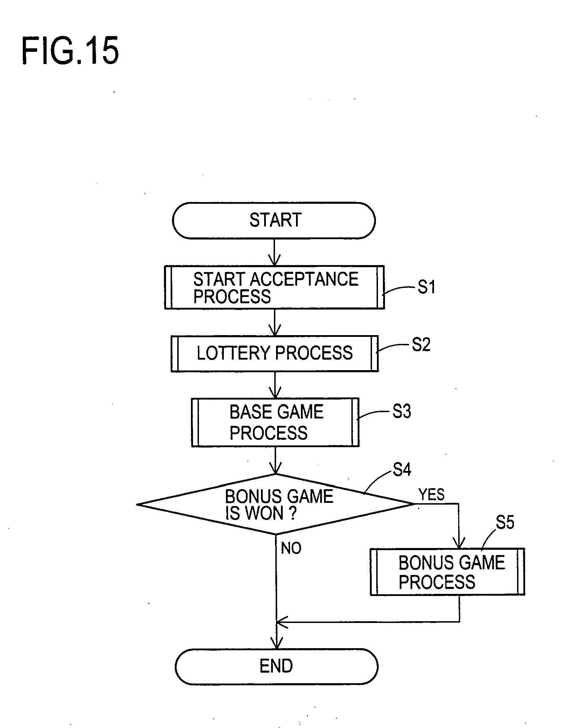

Next, the main process program done in the slot machine 1 will be described with reference to Fig. 15. Fig. 15 is a flowchart of the main process program. Here, programs shown by the flowcharts shown in Figs. 15 to 20 are stored in the ROM 51 and the RAM 52 provided in the slot machine 1 and are executed by the CPU 50.

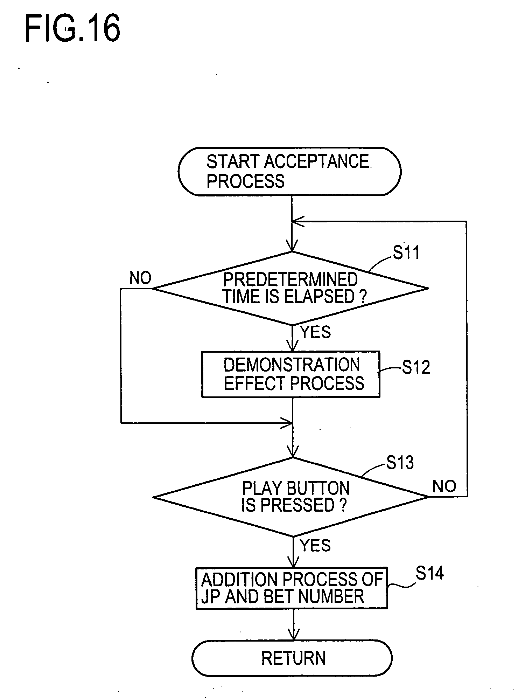

In Fig. 15, at first, in step (abbreviated as "S" hereinafter) 1, a start acceptance process shown in Fig. 16 is done. This process is a process for accepting the switch signal output from the 1-BET switch 57, the 2-BET switch 58, the 3-BET switch 59, the 5-BET switch 60, the 8-BET switch 61, the 1-LINE switch 62, the 2-LINES switch 63, the 5-LINES switch 64, the 20-LINES switch 65, the 25-LINES switch 66, based on operation of the BET 1 PER LINE button 33, the BET 2 PER LINES button 34, the BET 3 PER LINES button 35, the BET 5 PER LINES 36, the BET 8 PER LINES button 37, the RED PLAY 1 LINE button 39, the PLAY 2 LINES button 40, the PLAY 5 LINES button 41, the PLAY 20 LINES button 42 or the BLACK PLAY 25 LINES button 43. When the switch signal output from each switch is accepted, the game is started.

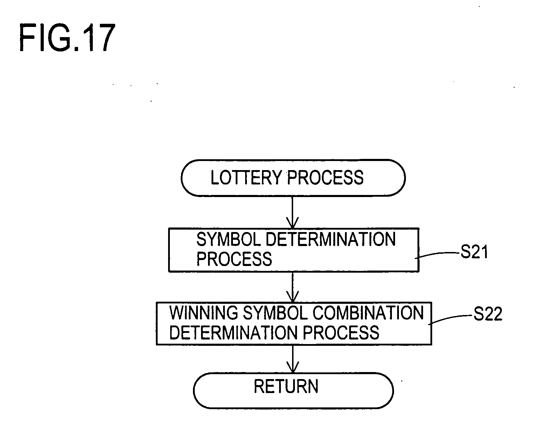

And in S2, a lottery process shown in Fig. 17 mentioned later is done based on the switch signal output from the 1-LINE switch 62, the 2-LINES switch 63, the 5-LINES switch 64, the 20-LINES switch 65, the 25-LINES switch 66.

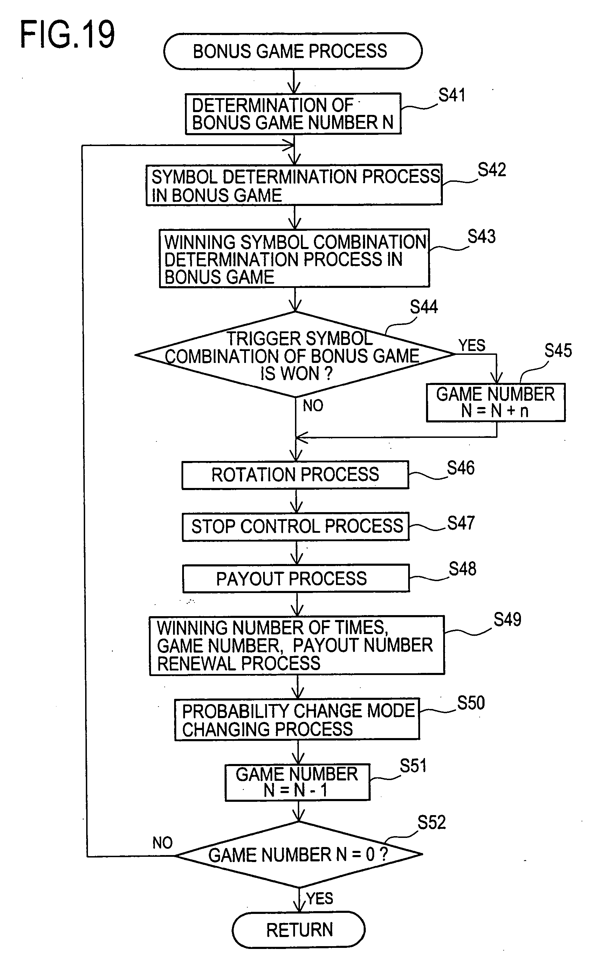

Here, if the bonus game is won (if more than four symbols "SARDINE" are stopped and displayed on the variable display portions 21 to 25 at the same time with no relation to the pay line), the bonus game is conducted mentioned later (see Fig. 19) after the present base game is terminated.

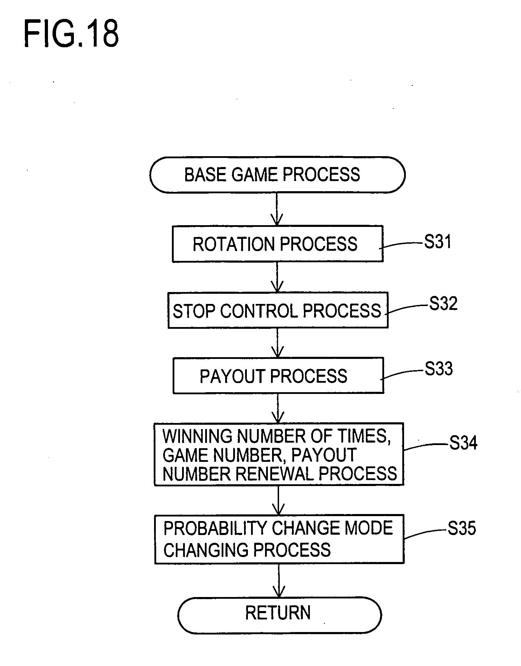

Next, in S3, a base game process shown in Fig. 18 mentioned later is done. Thereafter, procedure shifts to S4 and it is determined whether or not the bonus game is won. Concretely, in the lottery process in S2, if more than four symbols "SARDINE" totally are stopped and displayed on the variable display portions 21 to 25 with no relation to the activated pay lines, the bonus game is won (S4:YES). Thereby, procedure shifts to S5 and the main process program is terminated after the bonus game process shown in Fig. 19 mentioned later is done. On the other hand, in the lottery process of S2, if more than four symbols "SARDINE" are not totally stopped and displayed on the variable display portions 21 to 25 with no relation to the activated pay lines, the bonus game is not won (S4: NO), thereby the main process program is terminated.

Next, the start acceptance process conducted in S1 in the slot machine 1 according to the first embodiment will be described with reference to Fig. 16. Fig. 16 is a flowchart of the start acceptance process program executed in the slot machine 1 according to the first embodiment.

In the start acceptance process, at first, the CPU 50 determines in S11 whether or not a predetermined time (for example, 15 seconds) is elapsed. Here, if it is determined that the predetermined time is not elapsed (S11: NO), procedure shifts to S13, and on the other hand, if it is determined that the predetermined time is elapsed (S11: YES), demonstration effect is done on the upper liquid crystal display 3 or the lower liquid crystal display 4 in S12, thereafter procedure shifts to S13.

And in S13, it is determined whether or not operation of the RED PLAY 1 LINE button 39, the PLAY 2 LINES button 40, the PLAY 5 LINES button 41, the PLAY 20 LINES button 42 or the BLACK PLAY 25 LINES button 43 is done. Here, if it is determined that operation of the RED PLAY 1 LINE button 39 and the like is not done (S13: NO), procedure returns to S11 and the above procedures are repeated. On the other hand, if it is determined that operation of the RED PLAY 1 LINE button 39 and the like is done (S13: YES), procedure returns to the main process program of Fig. 15 and shifts to the lottery process in S2 even while the demonstration effect is done.

Here, in the determination process in S13, such determination in S 13 may be conducted based on the other input signals other than the above operation signals.

Thereafter, in S14, an addition process of the JP and the bet number is done. In the addition process of the JP and the bet number, total credit number betted in the present game is added in the bet credit counter 52G of the RAM 52. Here, the credit number in one game is calculated by "number of the activated pay lines x bet number per one pay line". For example, in the S13, if the BET 3 PER LINE button 35 and the PLAY 20 LINES button 42 are successively pressed, 3 credits are betted to each of 20 activated pay lines, thus total 60 credits are counted by the credit counter 52G.

And 10% of the credit number (one credit corresponds to one coin) betted in the present game is accumulatively added as the JP. The present JP credit number is stored in the JP sum storing area 52F of the RAM 52 and such JP sum is renewed by newly betting. And the JP sum displayed in the JP sum display portion 11 is also renewed according thereto. For example, in a case that BET 3 PER LINE button 35 and the PLAY 20 LINES button 42 are successively pressed in S13, 3 credits are betted to each of the 20 activated pay lines, therefore 6 credits, which is 10% of 60 credits, are added to the JP sum in the JP sum storing area 52F.

Next, the lottery process program done in S2 in the slot machine 1 according to the first embodiment will be described with reference to Fig. 17. Fig. 17 is a flowchart of the lottery process program in the slot machine according to the first embodiment.

In the lottery process, at first, a symbol determination process is done in S21. Here, in the base game, the symbol stopped and displayed on the first pay line L1 is determined every each of the variable display portions 21 to 25. Concretely, five random numbers corresponding to each of the variable display portions 21 to 25 are sampled by the random number sampling circuit 56 and the code Nos. are determined with reference to the symbol lottery table 51A shown in Fig. 10. Further, based on the code No. and each of the first reel strip 101 - the sixth reel strip 106, the symbol stopped and displayed every each of the variable display portions 21 to 25 is determined. At that time, although the symbol stopped and displayed on the variable display portion 21 is determined by utilizing the first reel strip 101 in the normal mode, such symbol stopped and displayed is determined by utilizing the sixth reel strip 106 in the probability change mode instead of the first reel strip 101.

And after the symbols stopped and displayed on the activated pay line, a winning symbol combination determination process is done in S22, thereafter procedure returns to the main process program in Fig. 15 and shifts to the base game process in S3. Here, concretely speaking, in the winning symbol combination determination process, the winning symbol combination and the payout thereof are determined based on the symbol determined in S21 and the payout table 51C of Fig. 12.

Here, if the slot machine 1 is in the probability change mode, as mentioned, the symbol of the variable display portion 21 is variably moved, stopped and displayed by utilizing the sixth reel strip 106 (see Fig. 14) instead of the first reel strip 101. And kinds of the symbols on the first reel strip 101 and the sixth reel strip 106 are differently set with each other (the symbol "WILD" and "SARDINE" are more included in the sixth reel strip 106 than in the first reel strip 101), thereby the probability to win the winning symbol combination is made different (probability to win the winning symbol combination is set higher in the probability change mode than in the normal mode).

Next, the base game process done in S3 in the slot machine 1 according to the first embodiment will be described with reference to Fig. 18. Fig. 18 is a flowchart of the base game process program in the slot machine according to the first embodiment.

In the base game process, at first, in S31, scroll of each of the symbols is done on the variable display portions 21 to 25 based on the switch signal output from the 1-LINE switch 62, the 2-LINES switch 63, the 5-LINES switch 64, the 20-LINES switch 65 or the 25-LINES switch 66, the switch signal being accepted in S1 of Fig. 15.

And in S32, the scroll of each symbol scrolled on each of the variable display portions 21 to 25 is stopped.

Further, in S33, according to the symbol combination corresponding to the winning symbol combination stopped and displayed on each of the variable display portions 21 to 25, credits and the like corresponding to the payout determined on the basis of the payout table 51C in the Fig. 12 are paid out.

Thereafter, in S34, renewal process of the winning number of times determined based on that the winning symbol combination is won in S22, the game number (including the base game and the bonus game)' according to which the game is done by the player by the present time and the payout number of the credits paid out in the payout process of S33, is conducted. Each value of the winning number of times, the game number and the payout number is accumulatively calculated by the CPU 50 according to continuity of the game and the calculated result is stored in the RAM 52.

Concretely, the credits obtained by the present player from start of the game are counted and such counted value is stored in the total credit counter 52B. And the game number according to which the present player conducts the game from start of the game is counted and such counted value is stored in the total game number counter 52D.

Further, in addition to the above, if the slot machine 1 is in the probability change mode at present, the number of times that the winning symbol combination is won after the game state shifts to the probability change mode is counted and such counted value is stored in the winning symbol combination counter 52A. The credits obtained after the game state shifts to the probability change mode are counted and such counted value is stored in the credit counter 52C. The game number of the games conducted after the game state shifts to the probability change mode is counted and such counted value is stored in the game number counter 52E.

Thereafter, in S35, it is conducted the probability change mode changing process that the present game state in the slot machine 1 is changed between the probability change mode and the normal mode (the game state (including the base game and the bonus game) other than the probability change mode). Here, the probability change mode changing process will be explained later. And after the process in S35 is done, procedure returns to the main process program and shifts to the determination process in S4.

Next, the bonus game process executed in S5 in the slot machine 1 according to the first embodiment will be described with reference to Fig. 19. Fig. 19 is a flowchart of the bonus game process conducted in the slot machine of the first embodiment.

In the bonus game process, at first, the game number N of the bonus game is set in S41. The bonus game number is selected among 10 - 25 games based on the random number sampled through the random number sampling circuit 56. The bonus game number N set is stored in the RAM 52.

Next, the symbol determination process in the bonus game is done in S41. Here, in the bonus game, the symbols stopped and displayed on the first pay line L1 are determined every each of the variable display portions 21 to 25. Concretely, as mentioned, five random numbers are sampled through the random number sampling circuit 56 so as to correspond to each of the variable display portions 21 to 25, and the code Nos. are determined according to the symbol lottery table 51A shown in Fig. 10. Further, based on the code Nos. and the first reel strip 101 - the sixth reel strip 106, the symbols each of which is stopped and displayed on each of the variable display portions 21 to 25 are determined. At that time, although the symbol stopped and displayed on the variable display portion 21 is determined by utilizing the first reel strip 101 in the normal mode, such symbol is determined by utilizing the sixth reel strip 106 in the probability change mode instead of the first reel strip 101.

And if the symbols stopped and displayed on the activated pay line, the winning symbol combination and the payout thereof are determined in S43 based on the symbols determined in S21 and the payout table 51C in Fig. 12. However, in the bonus game, the symbol "SHARK" is handled as the symbol "LOBSTER".

Here, in a case that the slot machine 1 is in the probability change mode, as mentioned, the symbol of the variable display portion 21 is variably moved, stopped and displayed by the sixth reel strip 106 (see Fig. 16) instead of the first reel strip 101. And kinds of the symbols on the first reel strip 101 and the sixth reel strip 106 are differently set with each other (the symbol "WILD" and "SARDINE" are more included in the sixth reel strip 106 than in the first reel strip 101), thereby the probability to win the winning symbol combination is made different (probability to win the winning symbol combination is set higher in the probability change mode than in the normal mode).

Further, in the winning symbol combination determination process of S43, it is determined whether or not the trigger symbol combination to shift to the bonus game is won (a case that four symbols "SARDINE" are stopped and displayed on the variable display portions 21 to 25 with no relation to the activated pay lines) (S44). And if it is determined that the trigger symbol combination of the bonus game is won (S44: YES), a repeat number n of the bonus game is newly determined by a lottery and such determined repeat number of times n is added to the game number N (S45). Thereby, if the bonus game is won during the bonus game, remaining repeat number of the bonus game is increased. Concretely speaking, for example, in a case that procedure shifts to the bonus game with 20 number of times for the first time and the bonus game with 17 number of times is won in the twelfth bonus game, the bonus games are conducted in 25 times (20 times - 12 times + 17 times) thereafter. On the other hand, if it is determined that the trigger symbol combination of the bonus game is not won (S44: NO), procedure shifts to S46.

In a rotation process of S46, scroll of each of the symbols is automatically done on the variable display portions 21 to 25.

And in a stop control process of S47, scroll of the symbols scrolled on the variable display portions 21 to 25 is stopped.

Here, although the symbols are variably moved, stopped and displayed on the variable display portions 21 to 25 by utilizing the first reel strip 101 - the fifth reel strip 105 (see Fig. 4) in the normal mode, the symbol of the variable display portion 21 is variably moved, stopped and displayed by utilizing the sixth reel strip 106 (see Fig. 14) if the slot machine 1 is in the probability change mode.

And in a payout process of S48, according to the symbol combination corresponding to the winning symbol combination stopped and displayed on the variable display portions 21 to 25 in S47, credits corresponding to the payout determined based on the payout table 51C in Fig. 12 (however, the symbol "SHARK" is handled as the symbol "LOBSTER" in the bonus game).

Thereafter, in S49, renewal process of the winning number of times determined that the winning symbol combination is won in S43, the game number (including the base game and the bonus game) done by the player by the present time and the payout number of the credits paid out in the payout process of S48, is conducted. Each value of the winning number of times, the game number and the payout number is accumulatively calculated by the CPU 50 according to continuity of the game and the calculated result is stored in the RAM 52.

Concretely, the credits obtained by the present player from start of the game are counted and such counted value is stored in the total credit counter 52B. And the game number according to which the present player conducts the game from start of the game is counted and such counted value is stored in the total game number counter 52D.

Further, in addition to the above, if the slot machine 1 is in the probability change mode at present, the number of times that the winning symbol combination is won after the game state shifts to the probability change mode is counted and such counted value is stored in the winning symbol combination counter 52A. The credits obtained after the game state shifts to the probability change mode are counted and such counted value is stored in the credit counter 52C. The game number of the games conducted after the game state shifts to the probability change mode is counted and such counted value is stored in the game number counter 52E.

Next, in S50, it is conducted the probability change mode changing process that the present game state in the slot machine 1 is changed between the probability change mode and the normal mode (the game state (including the base game and the bonus game) other than the probability change mode). Here, the probability change mode changing process will be explained later. Thereafter, procedure shifts to S51.

In S51, the CPU 50 reads out the game number N of the bonus game stored in the RAM 52 and subtracts "1" from the game number value read out. Further, the subtracted game number N is again stored in the RAM 52.

Thereafter, in S52, the CPU 50 determines whether or not the game number of times N of the bonus game reaches to the number of times determined in S41. Concretely, this determination is done based on whether or not the game number N stored in the RAM 52 becomes "0". If the game number N is not "0", that is, if it is determined that the execution number of times of the bonus game does not reach to the number of times determined in S41 (S52: NO), procedure returns to S42 and the above procedures are repeated. On the other hand, if the game number N is "0", that is, if the execution number of times of the bonus game reaches to the number of times determined in S41 (S52: YES), the bonus game process program is terminated.

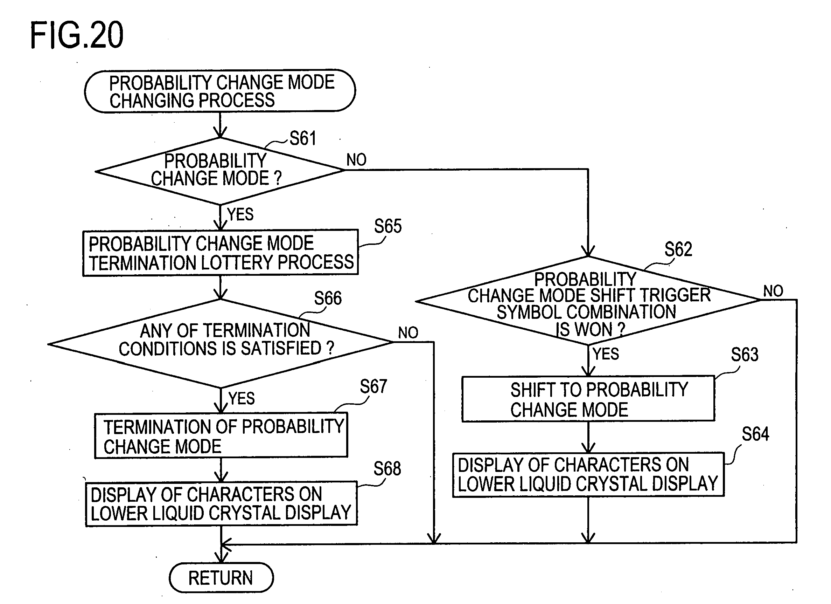

Next, the probability change mode changing process done in S35 and S50 will be described with reference to Fig. 20. Fig. 20 is a flowchart of the probability change mode changing process in the slot machine according to the first embodiment.

In the probability change mode changing process, at first, the CPU 50 determines in S61 whether or not the slot machine 1 at present is in the probability change mode. Here, the slot machine 1 has two gaming states of the base game and the bonus game, and in addition, each of the base game and the bonus game has two game modes of the probability change mode and the normal mode (the game state (including the base game and the bonus game) other than the probability change mode. And if a predetermined condition is satisfied, each mode is mutually changed.

If the slot machine 1 is not in the probability change mode at present (S61: NO), it is determined whether or not the winning symbol combination determined in S22 or S43 becomes the trigger symbol combination to shift to the probability change mode (S62). In the slot machine 1 of the first embodiment, as mentioned, the game state shifts to the probability change mode (1) if three symbols "SARDINE" are stopped and displayed at the same time with no relation to the activated pay lines, (2) if five symbols "WILD" are stopped on the activated pay line, (3) if the game is started with the MAX bet (the state that all of twenty-five pay lines are activated and the bet number is set to 8 for each of the activated pay lines) and five symbols "LOBSTER" are successively stopped and displayed on the activated pay line through the variable display portions 21 to 25. Therefore, the CPU 50 determines whether or not the winning symbol combination satisfying one of the above conditions (1) ~ (3) is won.

And in a case that the winning symbol combination is won (S62: YES), the game state shifts to the probability change mode in S63. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the winning symbol combination is not won (S62: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S64). Thereby, it can be notified to the player that the probability change mode is realized. Thereafter, the probability change mode changing process is terminated.

On the other hand, if the game state at present is in the probability change mode (S61: YES), a termination lottery process of the probability change mode, which is one of the termination conditions of the probability change mode, is conducted (S65). The termination lottery process of the probability change mode is executed by conducting a lottery based on the random numbers of "0" - "9" sampled through the random number sampling circuit 56 in use of the termination lottery table 51B (see Fig. 11) of the probability change mode. And if the random number is "9", one of the termination conditions in S66 is satisfied.

Next, it is determined whether or not any one of the termination conditions to terminate the probability change mode is satisfied (S66). In the slot machine 1 of the first embodiment, as the termination conditions mentioned in the above, there are set cases: (1) if three symbols "SARDINE" are stopped and displayed during the probability change mode at the same time with no relation to the activated pay lines; (2) if five symbols "WILD" are stopped on the pay line; (3) if the game is started with the MAX bet (the state that all of twenty-five pay lines are activated and the bet number is set to 8 for each of the activated pay lines) and five symbols "LOBSTER" are successively stopped and displayed on the activated pay line through the variable display portions 21 to 25; (4) if any of the winning symbol combinations shown in Fig. 12 is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10: 45), 13 o'clock and 15 minutes (13: 15) and 21 o'clock and 45 minutes (21: 45); (10) if three minutes elapse after the game state shifts to the probability change mode; (11) if termination of the probability change mode is determined in the lottery done every one game; (12) if the payout rate exceeds 90% and (13) if the present credit number-displayed in the JP sum display portion 11 exceeds 100,000 credits. And if such termination condition is satisfied, the probability change mode is terminated in such game.

Concretely, the termination conditions of (1) ~ (3) are determined based on the winning symbol combination determined in S22 or S43. And the termination conditions of (4) - (8) are determined based on the count value stored in each of the winning symbol counter 52A of the RAM 52, the total credit counter 52B, the credit counter 52C, the total game number counter 52D and the game number counter 52E. And the termination conditions of (9) - (10) are determined based on the measured value of the timer 87 connected to the CPU 50. And the termination condition of (11) is determined based on the termination lottery result of the probability change mode in S65. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that any one of the termination conditions is satisfied (S66: YES), the probability change mode is terminated (S67). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101 - the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S68). Thereby, it can be notified to the player that the probability change mode is terminated. Thereafter, the probability change mode changing process is terminated.

On the other hand, if it is determined that any one of the termination conditions is not satisfied (S66: NO), the probability change mode is continued and the probability change mode changing process is terminated.

As mentioned, in the slot machine 1 of the first embodiment, in a case that the symbol combination stopped and displayed through the variable display portions 21 to 25 becomes three symbols "SARDINE" which are stopped and displayed at the same time with no relation to the activated pay lines in the base game or the bonus game, or in a case that five symbols "WILD" are stopped and displayed on the activated pay line, or in a case that the JP is won (S62: YES), the first reel strip 101 variably moving, stopping and displaying the symbols on the variable display portion 21 is changed to the sixth reel strip 106 in which more the symbol "WILD" and the symbol "SARDINE" are included, till any one of the termination conditions is satisfied from the next game, thereby the game state shifts to the probability change mode in which the probability to win the winning symbol combination increases in comparison with the normal mode (S63). Therefore, the game state can be variously changed at the timing that the player cannot predict during the game and a wave in the payout of the game media can be produced. Thus, the game state of the slot machine 1 can be variegated and the player never loses interest for games.

And after the game state shifts to the probability change mode, the characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S64). Thereby, the player can acknowledge during the game that the probability change mode is realized, thus expectation for games can be raised. And in the probability change mode, strategy for games to increase the bet number and the like can be improved.

Further, after the probability change mode is terminated, the characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S68). Thereby, it can be notified to the player that the probability change mode is terminated. Therefore, the player can acknowledge that the probability change mode is terminated, thus after the probability change mode is terminated, strategy for games to reduce the bet number and the like can be improved.

### (Second Embodiment)

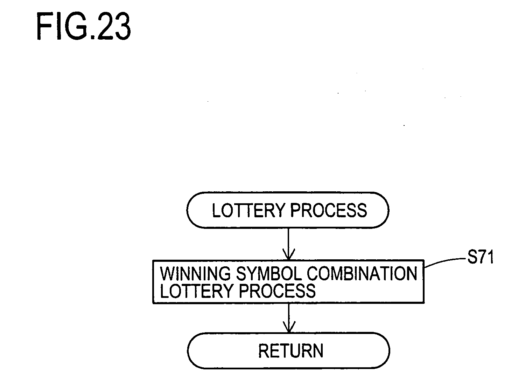

Next, the slot machine according to the second embodiment will be described with reference to Figs. 23 to 26. Here, in the explanation mentioned later, the same signs used in the slot machine 1 of the first embodiment described on the basis of Figs. 1 to 22 indicate the constructive elements which are same as those or correspond to those in the slot machine 1 of the second embodiment.

The outline construction of the slot machine according to the second embodiment is substantially as same as that of the slot machine 1 in the first embodiment. And various control processes in the second embodiment are substantially as same as those in the slot machine 1 of the first embodiment.

However, the slot machine in the second embodiment is different from the slot machine 1 in the first embodiment in following points. That is, in the slot machine 1 of the first embodiment, when the symbols are controlled to stop on the variable display portions 21 to 25, five random numbers corresponding to each of the variable display portions 21 to 25 are sampled by the random number sampling circuit 56, and based on the code Nos. determined by the sampled random numbers and the symbol lottery table 51A of Fig. 10 and the first reel strip 101 - the fifth reel strip 105 (in the probability change mode, the second reel strip 102 - the sixth reel strip 106), the stop display symbols are determined (S21, S42), and further the winning symbol combination and the payout thereof are determined on the basis of the stop display symbols and the payout table 51C of Fig. 12. On the contrary, in the slot machine of the second embodiment, the winning combination is directly determined based on the random number.

And in the slot machine 1 during the probability change mode, the symbols are variably moved, stopped and displayed on the variable display portion 21 by changing the first reel strip 101 to the sixth reel strip 106, thereby the probability to win the winning symbol combination increases. On the contrary, in the slot machine of the second embodiment, the table used when the winning symbol combination is determined on the basis of the random number is changed instead of the reel strip. Therefore, in the slot machine of the second embodiment, in order to increase the probability to win the winning symbol combination, it is not required to change the reel symbols. Therefore, the second embodiment can be adopted to not only the slot machine using vide reels explained hereinafter but also the slot machine using mechanical reels.

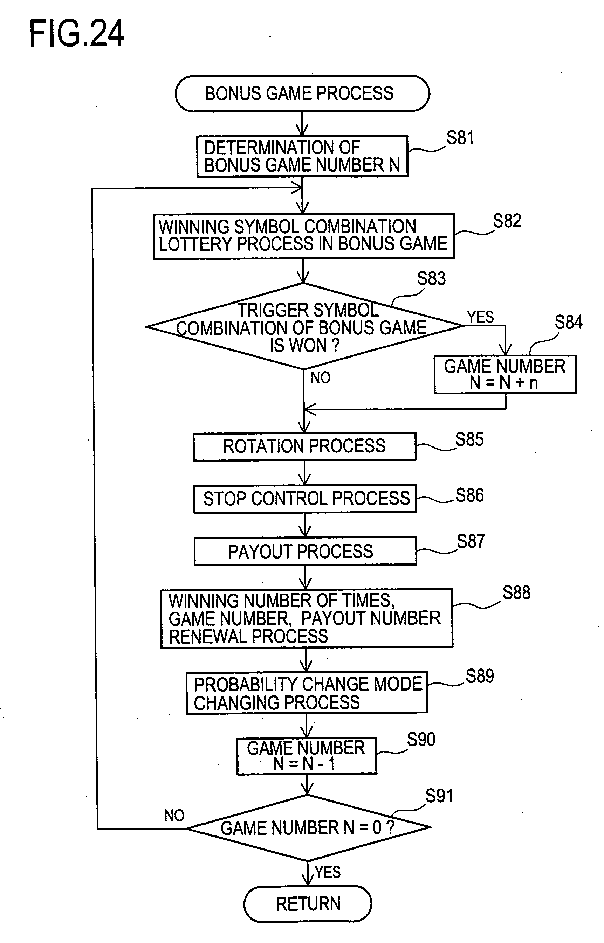

First, in the slot machine of the second embodiment, the lottery process executed in S2 of the main process program will be described with reference to Fig. 23. Fig. 23 is a flowchart of a lottery process program executed in the slot machine of the second embodiment. Here, programs shown by flowcharts in Figs. 23 and 24 are stored in the ROM 51 and RAM 52 provided in the slot machine of the second embodiment and are executed by the CPU 50.

In the lottery process, at first, a lottery process of the winning symbol combination is conducted. Here, it is done by the CPU 50 the lottery of the winning symbol combination controlled to stop on the variable display portions 21 to 25 in the base game by utilizing the winning symbol combination lottery table 51D and 51E. And after the winning symbol combination is determined, procedure returns to the main process program in Fig. 15 and shifts to the base game process in S3. Further, in the base game process, the symbols are controlled to stop based on the winning symbol combination determined by the lottery.

Hereinafter, the winning symbol combination lottery table 51D and 51E, which are utilized in the winning symbol combination lottery process in S71, will be described.

In the slot machine of the second embodiment, the winning symbol combination lottery table 51D which is utilized in the lottery of the winning symbol combination in the normal mode (game state other than the probability change mode) and the winning symbol combination lottery table 51E which is utilized in the lottery of the winning symbol combination in the probability change mode, are stored in the ROM 51. In the normal mode, the winning symbol combination is determined based on the winning symbol combination lottery table 51d for the normal mode, and in the probability change mode, the winning symbol combination is determined based on the winning symbol combination lottery table 51E for the probability change mode.

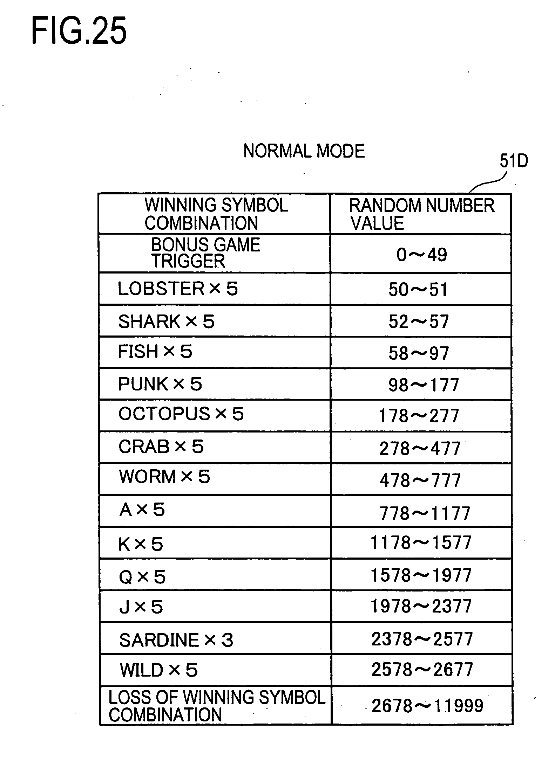

At first, with reference to Fig. 25, the winning symbol combination lottery table 51D for the normal mode utilized in the normal mode will be described. Fig. 25 is an explanatory view showing the winning symbol combination lottery table for the normal mode in the second embodiment.

As shown in Fig. 25, random numbers utilized in the winning symbol combination lottery table 51D lie in the range of 0 - 11999. If the random number value sampled by the random number sampling circuit 56 lies in the range of 0 - 49, the trigger of the bonus game is won. In this case, more than four symbols "SARDINE" are stopped and displayed at the same time with no relation to the activated pay lines and the game state shifts to the bonus game. And if the random number value sampled by the random number sampling circuit 56 lies in the range of 50~51, the winning symbol combination of "LOBSTER" is won. And more than five symbols "LOBSTER" are stopped and displayed on the activated pay line. And if the random number value lies sampled by the random number sampling circuit 56 lies in the range of 52 - 57, the winning symbol combination of "SHARK" is won. In this case, five symbols "SHARK" are stopped and displayed on the activated pay line. Similarly to the above, if the random number value lies in the range of 58 - 97, the winning symbol combination of "FISH" is won. If the random number value lies in the range of 98 - 177, the winning symbol combination of "PUNK" is won. If the random number value lies in the range of 178 - 277, the winning symbol combination of "OCTOPUS" is won. If the random number value lies in the range of 278 - 477, the winning symbol combination of "CRAB" is won. If the random number value lies in the range of 478 - 777, the winning symbol combination of "WORM" is won. If the random number value lies in the range of 778 - 1177, the winning symbol combination of "A" is won. If the random number value lies in the range of 1178 ~ 1577, the winning symbol combination of "K" is won. If the random number value lies in the range of 1578 - 1977, the winning symbol combination of "Q" is won. If the random number value lies in the range of 1978 ~ 2377, the winning symbol combination of "J" is won. If the random number value lies in the range of 2378 - 2577, the winning symbol combination of "SARDINE" is won. In this case, three symbols "SARDINE" are stopped and displayed with no relation to the activated pay lines. If the random number value lies in the range of 2578 - 2677, the winning symbol combination of "WILD" is won. In this case, five symbols "WILD" are stopped and displayed on the activated pay line.

On the other hand, if the random number value lies in the range of 2678 - 11999, the winning symbol combination is lost. In this case, the symbol combination other than the winning symbol combination is stopped and displayed.

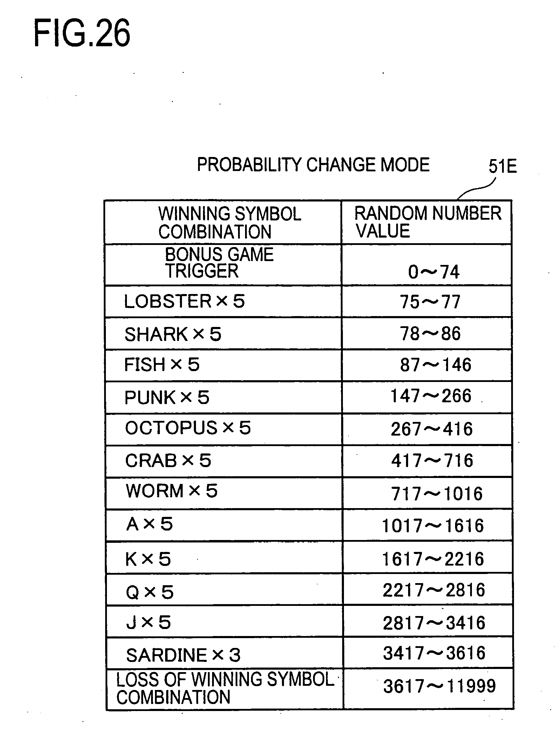

Next, with reference to Fig. 26, the winning symbol combination lottery table 51E for the probability change mode utilized in the probability change mode will be described. Fig. 26 is an explanatory view showing the winning symbol combination lottery table for the probability change mode in the second embodiment.

As shown in Fig. 26, random numbers utilized in the winning symbol combination lottery table 51E lie in the range of 0 - 11999, similar to the winning symbol combination lottery table 51D for the normal mode. If the random number value sampled by the random number sampling circuit 56 lies in the range of 0 - 74, the trigger of the bonus game is won. In this case, more than four symbols "SARDINE" are stopped and displayed at the same time with no relation to the activated pay lines and the game state shifts to the bonus game. And if the random number value sampled by the random number sampling circuit 56 lies in the range of 75 - 77, the winning symbol combination of "LOBSTER" is won. And more than five symbols "LOBSTER" are stopped and displayed on the activated pay line. And if the random number value lies sampled by the random number sampling circuit 56 lies in the range of 78 - 86, the winning symbol combination of "SHARK" is won. In this case, five symbols "SHARK" are stopped and displayed on the activated pay line. Similarly to the above, if the random number value lies in the range of 87 - 146, the winning symbol combination of "FISH" is won. If the random number value lies in the range of 147 - 266, the winning symbol combination of "PUNK" is won. If the random number value lies in the range of 267 - 416, the winning symbol combination of "OCTOPUS" is won. If the random number value lies in the range of 417 - 716, the winning symbol combination of "CRAB" is won. If the random number value lies in the range of 717 - 1016, the winning symbol combination of "WORM" is won. If the random number value lies in the range of 1017 - 1616, the winning symbol combination of "A" is won. If the random number value lies in the range of 1617 - 2216, the winning symbol combination of "K" is won. If the random number value lies in the range of 2217 - 2816, the winning symbol combination of "Q" is won. If the random number value lies in the range of 2817 - 3416, the winning symbol combination of "J" is won. If the random number value lies in the range of 3417 - 3616, the winning symbol combination of "SARDINE" is won. In this case, three symbols "SARDINE" are stopped and displayed with no relation to the activated pay lines.

On the other hand, if the random number value lies in the range of 3617 - 11999, the winning symbol combination is lost. In this case, the symbol combination other than the winning symbol combination is stopped and displayed.

Here, for example, the probability that the bonus trigger is won and more than four symbols "SARDINE" are stopped and displayed at the same time is 50/12000 in the normal mode and 75/12000 in the probability change mode. And the probability that the symbol combination of "LOBSTER" is won and more than five symbols "LOBSTER" are stopped and displayed on the activated pay line is 2/12000 in the normal mode and 3/12000 in the probability change mode. Similarly to the above, in the other winning symbol combinations, the probability to win the winning symbol combination is made higher in the probability change mode than in the normal mode. Therefore, based on that the game state shifts to the probability change mode, the player can obtain more higher payout with the same bet number than in the normal mode (payout rate increases).

Next, the bonus game process done in S5 in the slot machine of the second embodiment will be described with reference to Fig. 24. Fig. 24 is a flowchart of the bonus game process in the slot machine of the second embodiment.

In the bonus game process, at first, the game number N of the bonus game is set in S81. The game number of the bonus game is selected by the lottery among 10 - 25 games, based on a random number value sampled through the random number sampling circuit 56. The game number N of the bonus game is stored in the RAM 52.

Next, in S82 it is conducted the winning symbol combination lottery process in the bonus game. Here, in the bonus game, a lottery of the winning symbol combination controlled to stop on the variable display portions 21 to 25 is executed by utilizing the winning symbol combination lottery table through the CPU 50. Concretely, as mentioned, the random number is sampled by the random number sampling circuit 56 and the lottery of the winning symbol' combination is done in the normal mode based on the winning symbol combination lottery table 51D for the normal mode. And the lottery of the winning symbol combination is done in the probability change mode based on the winning symbol combination lottery table 51E for the probability change mode.

Further, in the winning symbol combination lottery process of S82, it is determined whether or not the trigger symbol combination to shift to the bonus game is won (S83). And if it is determined that the trigger symbol combination for the bonus game is won (S83: YES), the repeat number of times n of the bonus game is newly determined by the lottery (S84). Thereby, if the bonus game is won during the bonus game, remaining repeat number of the bonus game is increased. Concretely speaking, for example, in a case that procedure shifts to the bonus game with 20 number of times for the first time and the bonus game with 17 number of times is won in the twelfth bonus game, the bonus games are conducted in 25 times (20 times - 12 times + 17 times) thereafter. On the other hand, if it is determined that the trigger symbol combination of the bonus game is not won (S83: NO), procedure shifts to S86.

And in the rotation process in S85, scroll of the symbols are automatically conducted on the variable display portions 21 to 25.

Further, in the stop control process in S86, scroll of the symbols scrolling on the variable display portions 21 to 25 is stopped based on the lottery result of the winning symbol combination in S82.

And in the payout process in S87, credits corresponding to the payout determined based on the payout table 51C in Fig. 12 (however, the symbol "SHARK" is handled as the symbol "LOBSTER" in the bonus game) are paid out.

Thereafter, in S88, renewal process of the winning number of times of the winning symbol combination determined on the basis of the lottery result in S82, the game number (including the base game and the bonus game) done by the player by the present time and the payout number of the credits paid out in the payout process of S87, is conducted. Each value of the winning number of times, the game number and the payout number is accumulatively calculated by the CPU 50 according to continuity of the game and the calculated result is stored in the RAM 52.

Concretely, the credits obtained by the present player from start of the game are counted and such counted value is stored in the total credit counter 52B. And the game number according to which the present player conducts the game from start of the game is counted and such counted value is stored in the total game number counter 52D.

Further, in addition to the above, if the slot machine 1 is in the probability change mode at present, the number of times that the winning symbol combination is won after the game state shifts to the probability change mode is counted and such counted value is stored in the winning symbol combination counter 52A. The credits obtained after the game state shifts to the probability change mode are counted and such counted value is stored in the credit counter 52C. The game number of the games conducted after the game state shifts to the probability change mode is counted and such counted value is stored in the game number counter 52E.

Next, in S89, it is conducted the probability change mode changing process (S50, see Fig. 20) that the present game state in the slot machine 1 is changed between the probability change mode and the normal mode (the game state (including the base game and the bonus game) other than the probability change mode). Thereafter, procedure shifts to S90.

In S90, the CPU 50 reads out the game number N of the bonus game stored in the RAM 52 and subtracts "1" from the game number value read out. Further, the subtracted game number N is again stored in the RAM 52.

Thereafter, in S91, the CPU 50 determines whether or not the game number of times N of the bonus game reaches to the number of times determined in S81. Concretely, this determination is done based on whether or not the game number N stored in the RAM 52 becomes "0". If the game number N is not "0", that is, if it is determined that the execution number of times of the bonus game does not reach to the number of times determined in S81 (S91: NO), procedure returns to S82 and the above procedures are repeated. On the other hand, if the game number N is "0", that is, if the execution number of times of the bonus game reaches to the number of times determined in S81 (S91: YES), the bonus game process program is terminated.

As mentioned in the above, in the slot machine 1 of the second embodiment, in a case that the symbol combination stopped and displayed through the variable display portions 21 to 25 becomes three symbols "SARDINE" which are stopped and displayed at the same time with no relation to the activated pay lines in the base game or the bonus game, or in a case that five symbols "WILD" are stopped and displayed on the activated pay line, or in a case that the JP is won (S62: YES), the winning symbol combination lottery table utilized for lottery of the winning symbol combination in the winning symbol combination lottery process is changed from the winning symbol combination lottery table 51D for the normal mode to the winning symbol combination lottery table 51E for the probability change mode, till any one of the termination conditions is satisfied from the next game, thereby the game state shifts to the probability change mode in which the probability to win the winning symbol combination increases in comparison with the normal mode (S63). Therefore, different from a case that the game state shifts to the bonus game, the game state can be variously changed at the timing that the player cannot predict during the game and a wave in the payout of the game media can be produced. Thus, the game state of the slot machine 1 can be variegated and the player never loses interest for games.

### (Third Embodiment)

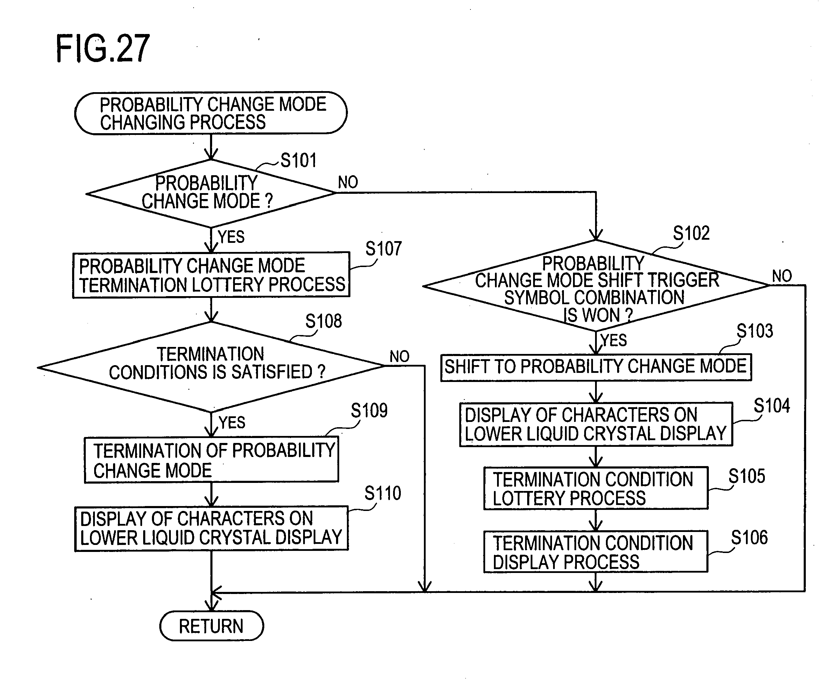

Next, the slot machine according to the third embodiment will be described with reference to Figs. 27 to 29. Here, in explanation mentioned hereinafter, the same signs used in the slot machine 1 of the first embodiment described on the basis of Figs. 1 to 22 indicate the constructive elements which are same as those or correspond to those in the slot machine 1 of the first embodiment.

The outline construction of the slot machine according to the third embodiment is substantially as same as that of the slot machine 1 in the first embodiment. And various control processes in the third embodiment are substantially as same as those in the slot machine 1 of the first embodiment.

However, the slot machine in the third embodiment is different from the slot machine 1 in the first embodiment in following points. That is, in the slot machine 1 of the first embodiment, thirteen kinds of conditions are set as the termination condition of the probability change mode and when any one of such conditions is satisfied, the probability change mode at present is terminated. On the contrary, in the slot machine of the third embodiment, one condition is selected among thirteen termination conditions and the probability change mode is terminated by utilizing the selected termination condition.

Next, the probability change mode changing process executed in the slot machine of the third embodiment will be described with reference to Fig. 27. Fig. 27 is a flowchart of the probability change mode changing process program in the slot machine of the third embodiment. Here, program shown by the flowchart in Fig. 27 is stored in the ROM 51 or the RAM 52 provided in the slot machine of the third embodiment and is executed by the CPU 50.

In the probability change mode changing process, at first, the CPU 50 determines in S101 whether or not the slot machine at present is in the probability change mode. Here, the slot machine has two gaming states of the base game and the bonus game, and in addition, each of the base game and the bonus game has two game modes of the probability change mode and the normal mode (the game state (including the base game and the bonus game) other than the probability change mode. And if a predetermined condition is satisfied, each mode is mutually changed.

If the slot machine is not in the probability change mode at present (S101: NO), it is determined whether or not the winning symbol combination determined in S22 or S43 becomes the trigger symbol combination to shift to the probability change mode (S101). In the slot machine of the third embodiment, as mentioned, the game state shifts to the probability change mode (1) if three symbols "SARDINE" are stopped and displayed at the same time with no relation to the activated pay lines, (2) if five symbols "WILD" are stopped on the activated pay line, (3) if the game is started with the MAX bet (the state that all of twenty-five pay lines are activated and the bet number is set to 8 for each of the activated pay lines) and five symbols "LOBSTER" are successively stopped and displayed on the activated pay line through the variable display portions 21 to 25. Therefore, it is determined whether or not the winning symbol combination satisfying one of the above conditions (1) ~ (3) is won.

And in a case that the winning symbol combination is won (S102: YES), the game state shifts to the probability change mode in S103. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the winning symbol combination is not won (S102: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S104). Thereby, it can be notified to the player that the probability change mode is realized.

Next, in S105, the termination condition lottery process to conduct a lottery of the termination condition is executed. In the slot machine according to the third embodiment, there are set beforehand 13 kinds of the termination conditions as the conditions to terminate the probability change mode. Concretely, such conditions are: (1) if three symbols "SARDINE" are stopped and displayed during the probability change mode at the same time with no relation to the activated pay lines; (2) if five symbols "WILD" are stopped on the pay line; (3) if the JP is won; (4) if any of the winning symbol combinations is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10: 45), 13 o'clock and 15 minutes (13: 15) and 21 o'clock and 45 minutes (21: 45); (10) if three minutes elapse after the game state shifts to the probability change mode; (11) if termination of the probability change mode is determined in the lottery done every one game; (12) if the payout rate exceeds 90% and (13) if. the present credit number displayed in the JP sum display portion 11 exceeds 100,000 credits.

And in the slot machine of the third embodiment, one condition is selected among the above 13 termination conditions set in the above and such selected termination condition is made as the termination condition to terminate the probability change mode.

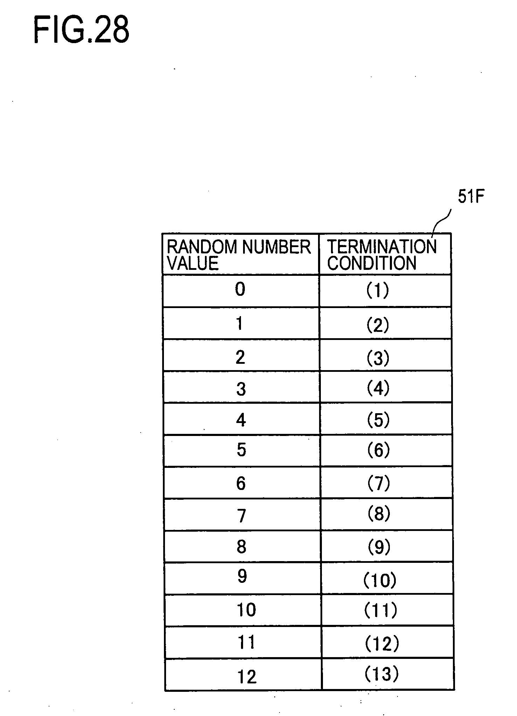

In a termination condition display process, a lottery is executed based on random numbers "0" ~ "12" sampled through the random number sampling circuit 56 by utilizing a termination condition lottery table 51F shown in Fig. 28. Fig. 28 is an explanatory view showing a termination condition lottery table utilized in the termination condition lottery process.

As shown in Fig. 28, the termination condition lottery table 51F is a lottery table to conduct a lottery of the termination condition based on the random numbers "0" ~ "12"b sampled through the random number sampling circuit 56 when the game state shifts to the probability change mode. And the termination condition to terminate the probability change mode is determined based on the obtained random number by the CPU 50.

Concretely, if the random number is "0", the termination condition is set to the condition that (1) three symbols "SARDINE" are stopped and displayed during the probability change mode at the same time with no relation to the activated pay lines. If the random number is "1", the termination condition is set to the condition that (2) five symbols "WILD" are stopped on the pay line. If the random number is "2", the termination condition is set to the condition that (3) the JP is won. If the random number is "3", the termination condition is set to the condition that (4) any of the winning symbol combinations is won in fifteen times after the game state shifts to the probability change mode. If the random number is "4", the termination condition is set to the condition that (5) coins obtained by the player from start of the game become more than 10,000 coins (if the obtained credits of the player exceed 10,000 credits). If the random number is "5", the termination condition is set to the condition that (6) coins obtained by the player exceed 1,000 coins after the game state shifts to the probability change mode (if the obtained credits exceed 1,000 credits). If the random number is "6", the termination condition is set to the condition that (7) the game number done by the player from start of the game exceeds 500 games. If the random number is "7", the termination condition is set to the condition that (8) the game number exceeds 20 games after the game state shifts to the probability change mode. If the random number is "8", the termination condition is set to the condition that (9) the present time becomes any of 10 o'clock and 45 minutes (10: 45), 13 o'clock and 15 minutes (13: 15) and 21 o'clock and 45 minutes (21: 45). If the random number is "9", the termination condition is set to the condition that (10) three minutes elapse after the game state shifts to the probability change mode. If the random number is "10", the termination condition is set to the condition that (11) termination of the probability change mode is determined in the lottery done every one game. If the random number is "11", the termination condition is set to the condition that (12) the payout rate exceeds 90%. And If the random number is "12", the termination condition is set to the condition that (13) the present credit number displayed in the JP sum display portion 11 exceeds 100,000 credits.

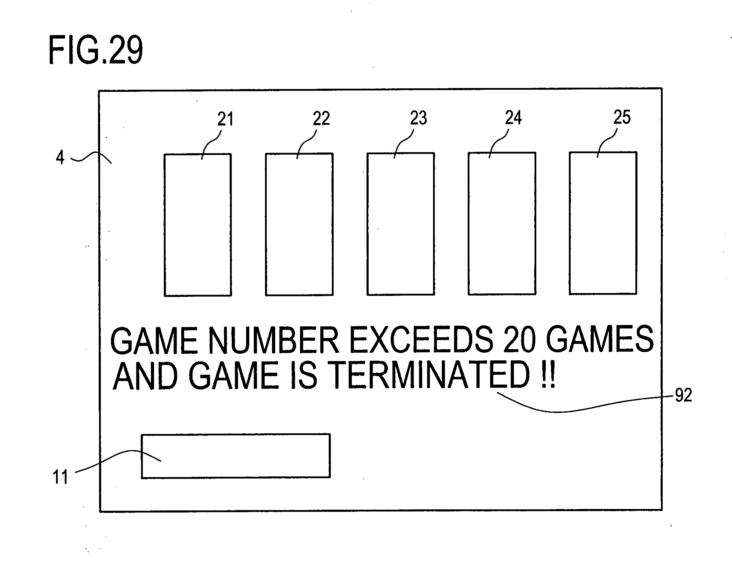

And after the lottery of the termination condition is executed, the termination condition selected based on the lottery result is displayed on the display area other than the variable display portions 21 to 25 and the JP sum display portion 11 on the lower liquid crystal display 4 (S106). Fig. 29 is a front view showing the lower liquid crystal display 4 on which the termination condition is displayed.

In Fig. 29, it is displayed a case that the termination condition becomes the condition that (8) the game number exceeds 20 games after the game state shifts to the probability change mode in the termination condition lottery process of S 105. As shown in Fig. 29, based on that characters 92 showing the termination condition displayed on the lower liquid crystal display 4 are displayed, the termination condition during the game can be notified to the player. Therefore, the player conducting the game can acknowledge that the probability change mode is terminated based on which condition.

On the other hand, if the game state at present is in the probability change mode (S101: YES), a termination lottery process of the probability change mode, which is one of the termination conditions of the probability change mode, is conducted (S107). The termination lottery process of the probability change mode is executed by conducting a lottery based on the random numbers of "0" - "9" sampled through the random number sampling circuit 56 in use of the termination lottery table 51B (see Fig. 11) of the probability change mode. And if the random number is "9", one of the termination conditions in S108 is satisfied.

Next, it is determined whether or not one termination condition selected in S105 is satisfied among the conditions (1) ~ (13) (S108). Concretely, the termination conditions of (1) ~ (3) are determined based on the winning symbol combination determined in S22 or S43. And the termination conditions of (4) - (8) are determined based on the count value stored in each of the winning symbol counter 52A of the RAM 52, the total credit counter 52B, the credit counter 52C, the total game number counter 52D and the game number counter 52E. And the termination conditions of (9) - (10) are determined based on the measured value of the timer 87 connected to the CPU 50. And the termination condition of (11) is determined based on the termination lottery result of the probability change mode in S107. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that the selected termination condition is satisfied (S108: YES), the probability change mode is terminated (S109). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101 ~ the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S110). Thereby, it can be notified to the player that the probability change mode is terminated. Thereafter, the probability change mode changing process is terminated.

On the other hand, if it is determined that the selected termination condition is not satisfied (S108: NO), the probability change mode is continued and the probability change mode changing process is terminated.

As mentioned in the above, in the slot machine 1 according to the third embodiment, in a case that the symbol combination stopped and displayed through the variable display portions 21 to 25 becomes three symbols "SARDINE" which are stopped and displayed at the same time with no relation to the activated pay lines in the base game or the bonus game, or in a case that five symbols "WILD" are stopped and displayed on the activated pay line, or in a case that the JP is won (S102: YES), the first reel strip 101 variably moving, stopping and displaying the symbols on the variable display portion 21 is changed to the sixth reel strip in which more the symbol "WILD" and the symbol "SARDINE" are included; till the termination condition determined by the lottery (S105) is satisfied from the next game, thereby the game state shifts to the probability change mode in which the probability to win the winning symbol combination increases in comparison with the normal mode (S103). Therefore, the game state can be variously changed at the timing that the player cannot predict during the game and a wave in the payout of the game media can be produced. Thus, the game state of the slot machine 1 can be variegated and the player never loses interest for games. Further, since the termination condition to terminate the probability change mode is changed according to the lottery which is conducted every time the game state shifts to the probability change mode (S105), a game pattern is increased and game characteristic is improved. And since the termination condition is displayed on the lower liquid crystal display 4 (S106), the player conducting the game can acknowledge that the probability change mode is terminated and intention of the player is increased. Further, strategy for games is improved.

### (Fourth Embodiment)

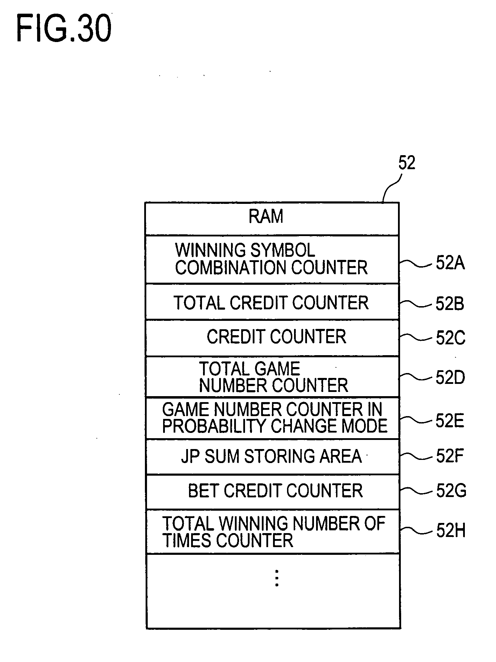

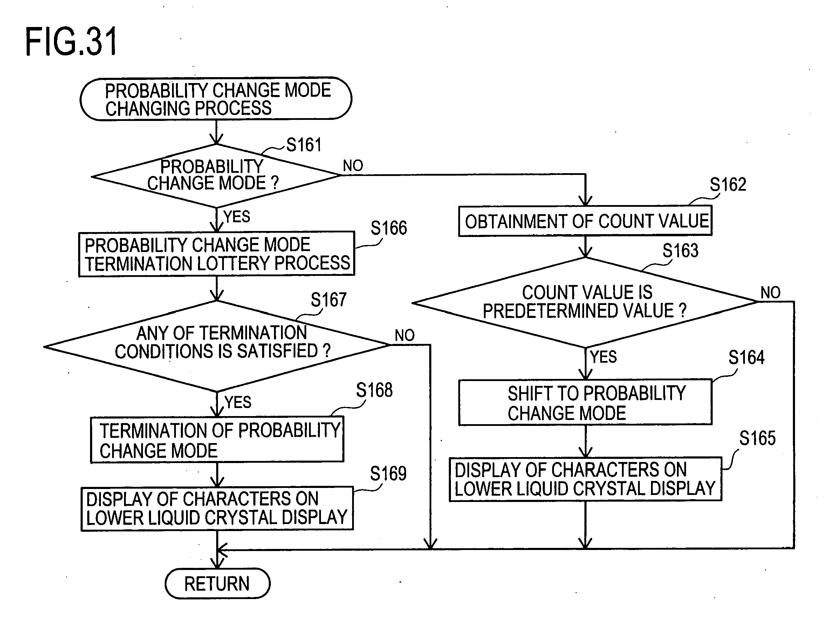

Next, the slot machine according to the fourth embodiment will be described with reference to Figs. 30 and 31. Here, in the explanation mentioned later, the same signs used in the slot machine 1 of the first embodiment described on the basis of Figs. 1 to 22 indicate the constructive elements which are same as those or correspond to those in the slot machine 1 of the fourth embodiment.

The outline construction of the slot machine according to the fourth embodiment is substantially as same as that of the slot machine 1 in the first embodiment. And various control processes in the fourth embodiment are substantially as same as those in the slot machine 1 of the first embodiment.

However, the slot machine in the fourth embodiment is different from the slot machine 1 in the first embodiment in the following point. That is, in the slot machine 1 of the first embodiment, if a predetermined condition (one of the conditions that three of the symbol "SARDINE" are stopped and displayed at the same time, five of the symbol "WILD" are stopped on the pay line and the JP is won, with no relation to the pay lines) is realized, the game state shifts to the probability change mode in which the probability to win the winning combination (see Fig. 12) becomes higher than the normal mode. On the contrary, in the slot machine of the fourth embodiment, in a case that any of the winning symbol combinations is won in 30 times, or the number of coins obtained by the player from start of the game exceeds 1000 coins or 5000 coins (credits of the player exceed 1000 credits or 5000 credits) or the number of games conducted by the player exceeds 100 games or 300 games, the game state shifts to the probability change mode in which the probability that the winning symbol combination is stopped so as to align on the pay line increases.

In order to realize the above, in the RAM 52 of the slot machine according to the fourth embodiment, in addition to the winning symbol combination counter 52A, the total credit counter 52B, the credit counter 52C for counting credits obtained after the game state shifts to the probability change mode in a case of the probability change mode, the total game number counter 52D, the game number counter 52E, the JP sum storing area 52F, the bet credit counter 52G, each being as same as those shown in Fig. 9, a total winning number of times counter 52H is provided. This total winning number of times counter 52H counts the number of times according to which the winning symbol combinations are won after the game is started.

And in the slot machine 1 according to the fourth embodiment, if a predetermined condition is realized during the base game and the bonus game, the game state shifts to the probability change mode. Here, the probability change mode means a special game mode which is realized if any of the winning symbol combination is won in 30 times, if the number of coins obtained by the player from start of the game exceeds 1000 coins or 5000 coins (credits of the player exceed 1000 credits or 5000 credits) or if the number of games conducted by the player exceeds 100 games or 300 games.

If one of the above conditions is satisfied, the game state shifts to the probability change mode in which the probability to win the winning combination (see Fig. 12) becomes higher than the normal game state till a predetermined termination condition is satisfied from the next game (here, one game means a time till variable display of the symbols is started on each of the variable display portions 21 to 25, thereafter the symbols are stopped and displayed thereon). And it is determined whether or not such condition is satisfied, based on that a predetermined number (winning number of times of the winning symbol combination, credit number obtained, game number conducted) concerning with game conducted from a time that the player conducting games with the slot machine at present starts to play games. Here, each of count values is accumulatively counted in the RAM 52 and it is stored in the total credit counter 52B the credits obtained by the present player since the game is started. And it is stored in the total game number counter 52D the game number conducted by the present player since the game is started. Further, it is stored in the total winning number counter 52H the winning number of times that the present player wins the winning symbol combination since the game is started. And the CPU 50 determines that the count value stored in the RAM 52 reaches to a predetermined value, thereby the game state shifts to the probability change mode in which the probability to win the winning combination (see Fig. 12) becomes higher than the normal game state till a predetermined termination condition is satisfied from the next game (here, one game means a time till variable display of the symbols is started on each of the variable display portions 21 to 25, thereafter the symbols are stopped and displayed thereon).

Next, the probability change mode changing process done in S35 and S50 will be described with reference to Fig. 31. Fig. 31 is a flowchart of the probability change mode changing process in the slot machine according to the fourth embodiment.

In the probability change mode changing process, at first, the CPU 50 determines in S161 whether or not the slot machine 1 at present is in the probability change mode. Here, the slot machine 1 has two gaming states of the base game and the bonus game, and in addition, each of the base game and the bonus game has two game modes of the probability change mode and the normal mode (the game state (including the base game and the bonus game) other than the probability change mode). And if a predetermined condition is satisfied, each mode is mutually changed.

If the slot machine 1 is not in the probability change mode at present (S161: NO), each of count values in the total credit counter 52B, the total game number counter 52D and the total winning number counter 52H of the RAM 52 is obtained (S162).

Thereafter, the CPU 50 determines whether or not the obtained count value is a predetermined value (S163). Here, in the slot machine of the fourth embodiment, the game state shifts to the probability change mode if any of the winning symbol combination is won in 30 times, if the number of coins obtained by the player from start of the game exceeds 1000 coins or 5000 coins (credits of the player exceed 1000 credits or 5000 credits) or if the number of games conducted by the player exceeds 100 games or 300 games.

Therefore, the CPU 50 determines whether the count value of the total winning number counter 52H is 30 or not, the count value of the total credit counter 52B is 1000 or 5000 and the count value of the total game number counter 52D is 100 or 300.

And if it is determined that the obtained count value is the predetermined value mentioned above (S163: YES), the game state shifts to the probability change mode in S164. After the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination - shown in Fig. 12 increases. Therefore, based on that the game state shifts to the probability change mode, the player can obtain more payout than that in the normal mode, with the same bet number (payout rate increases).

On the other hand, if it is determined that the obtained count value is not the predetermined value mentioned above (S163: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S165). Thereby, it can be notified to the player that the probability change mode is realized. Thereafter, the probability change mode changing process is terminated.

On the other hand, if the game state at present is in the probability change mode (S161: YES), a termination lottery process of the probability change mode, which is one of the termination conditions of the probability change mode, is conducted (S166). The termination lottery process of the probability change mode is executed by conducting a lottery based on the random numbers of "0" ~ "9" sampled through the random number sampling circuit 56 in use of the termination lottery table 51B (see Fig. 11) of the probability change mode. And if the random number is "9", one of the termination conditions in S167 is satisfied.

Next, it is determined whether or not any one of the termination conditions to terminate the probability change mode is satisfied (S167). In the slot machine 1 of the fourth embodiment, as the termination conditions mentioned in the above, there are set cases: (1) if three symbols "SARDINE" are stopped and displayed during the probability change mode at the same time with no relation to the activated pay lines; (2) if five symbols "WILD" are stopped on the pay line; (3) if the game is started with the MAX bet (the state that all of twenty-five pay lines are activated and the bet number is set to 8 for each of the activated pay lines) and five symbols "LOBSTER" are successively stopped and displayed on the activated pay line through the variable display portions 21 to 25; (4) if any of the winning symbol combinations shown in Fig. 12 is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10: 45), 13 o'clock and 15 minutes (13: 15) and 21 o'clock and 45 minutes (21: 45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits. And if such termination condition is satisfied, the probability change mode is terminated in such game.

Concretely, the termination conditions of (1) ~ (3) are determined based on the winning symbol combination determined in S22 or S43. And the termination conditions of (4) - (8) are determined based on the count value stored in each of the winning symbol counter 52A of the RAM 52, the total credit counter 52B, the credit counter 52C, the total game number counter 52D and the game number counter 52E. And the termination conditions of (9) - (10) are determined based on the measured value of the timer 87 connected to the CPU 50. And the termination condition of (11) is determined based on the termination lottery result of the probability change mode in S65. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that any one of the termination conditions is satisfied (S167:YES), the probability change mode is terminated (S168). After the probability change mode is terminated, the reel strip to display the symbols on the variable display portion 21 is changed form the sixth reel strip 106 to the first reel strip 101 and the symbols of the variable display portions 21 to 25 are variably moved, stopped and displayed by utilizing the first reel strip 101 - the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S169). Thereby, it can be notified to the player that the probability change mode is terminated. Thereafter, the probability change mode changing process is terminated.

On the other hand, if it is determined that any one of the termination conditions is not satisfied (S167: NO), the probability change mode is continued and the probability change mode changing process is terminated.

As mentioned, in the slot machine 1 of the fourth embodiment, during the base game or the bonus game, in a case that any of the winning symbol combination is won in 30 times, or in a case that the number of coins obtained by the player from start of the game exceeds 1000 coins or 5000 coins or in a case that the number of games conducted by the player exceeds 100 games or 300 games (S163: YES), the first reel strip 101 variably moving, stopping and displaying the symbols on the variable display portion 21 is changed to the sixth reel strip 106 in which more the symbol "WILD" and the symbol "SARDINE" are included, till any one of the termination conditions is satisfied from the next game, thereby the game state shifts to the probability change mode in which the probability to win the winning symbol combination increases in comparison with the normal mode (S164). Therefore, the game state can be variously changed at the timing that the player cannot predict during the game and a wave in the payout of the game media can be produced. Thus, the game state of the slot machine 1 can be variegated and the player never loses interest for games.

And after the game state shifts to the probability change mode, the characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S165). Thereby, the player can acknowledge during the game that the probability change mode is realized, thus expectation for games can be raised. And in the probability change mode, strategy for games to increase the bet number and the like can be improved.

Further, after the probability change mode is terminated, the characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S169). Thereby, it can be notified to the player that the probability change mode is terminated. Therefore, the player can acknowledge that the probability change mode is terminated, thus after the probability change mode is terminated, strategy for games to reduce the bet number and the like can be improved.

### (Fifth Embodiment)

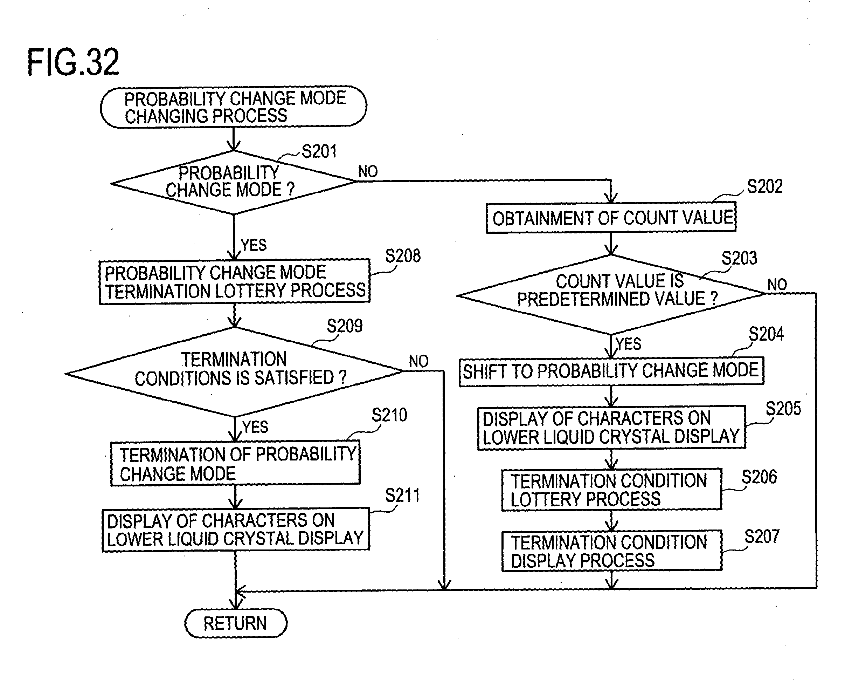

Next, the slot machine according to the fifth embodiment will be described with reference to Fig. 32. Here, in explanation mentioned hereinafter, the same signs used in the slot machine 1 of the fourth embodiment described on the basis of Figs. 30 and 31 indicate the constructive elements which are same as those or correspond to those in the slot machine 1 of the fourth embodiment.

The outline construction of the slot machine according to the fifth embodiment is substantially as same as that of the slot machine 1 in the fourth embodiment. And various control processes in the fifth embodiment are substantially as same as those in the slot machine 1 of the fourth embodiment.

However, the slot machine in the fifth embodiment is different from the slot machine in the fourth embodiment in following points. That is, in the slot machine of the fourth embodiment, thirteen kinds of conditions are set as the termination condition of the probability change mode and when any one of such conditions is satisfied, the probability change mode at present is terminated. On the contrary, in the slot machine of the fifth embodiment, one condition is selected among thirteen termination conditions and the probability change mode is terminated by utilizing the selected termination condition.

Next, the probability change mode changing process executed in the slot machine of the fifth embodiment will be described with reference to Fig. 32. Fig. 32 is a flowchart of the probability change mode changing process program in the slot machine of the fifth embodiment. Here, program shown by the flowchart in Fig. 32. is stored in the ROM 51 or the RAM 52 provided in the slot machine of the fifth embodiment and is executed by the CPU 50.

In the probability change mode changing process, at first, the CPU 50 determines in S201 whether or not the slot machine at present is in the probability change mode. Here, the slot machine has two gaming states of the base game and the bonus game as mentioned, and in addition, each of the base game and the bonus game has two game modes of the probability change mode and the normal mode (the game state (including the base game and the bonus game) other than the probability change mode). And if a predetermined condition is satisfied, each mode is mutually changed.

If the slot machine is not in the probability change mode at present (S201: NO), each of count values in the total credit counter 52B, the total game number counter 52D and the total winning number counter 52H of the RAM 52 is obtained (S202).

Thereafter, it is determined whether or not the obtained count value is the predetermined value (S203). Here, in the slot machine of the fifth embodiment, the game state shifts to the probability change mode if any of the winning symbol combination is won in 30 times, if the number of coins obtained by the player from start of the game exceeds 1000 coins or 5000 coins or if the number of games conducted by the player exceeds 100 games or 300 games.

Therefore, the CPU 50 determines whether the count value of the total winning number counter 52H is 30 or not, the count value of the total credit counter 52B is 1000 or 5000 and the count value of the total game number counter 52D is 100 or 300.

And if it is determined that the obtained count value is the predetermined value mentioned in the above (S203: YES), the game state shifts to the probability change mode in S204. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the obtained count value is not the predetermined value mentioned in the above (S203: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S205). Thereby, it can be notified to the player that the probability change mode is realized.

Next, in S206, the termination condition lottery process to conduct a lottery of the termination condition is executed. In the slot machine according to the third embodiment, there are set beforehand 13 kinds of the termination conditions as the conditions to terminate the probability change mode. Concretely, such conditions are: (1) if three symbols "SARDINE" are stopped and displayed during the probability change mode at the same time with no relation to the activated pay lines; (2) if five symbols "WILD" are stopped on the pay line; (3) if the JP is won; (4) if any of the winning symbol combinations is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10 : 45), 13 o'clock and 15 minutes (13: 15) and 21 o'clock and 45 minutes (21 : 45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits.

And in the slot machine of the fifth embodiment, one condition is selected among the above 13 termination conditions set in the above and such selected termination condition is made as the termination condition to terminate the probability change mode.

In a termination condition display process, a lottery is executed based on random numbers "0" - "12" sampled through the random number sampling circuit 56 by utilizing a termination condition lottery table 51F shown in Fig. 28. Fig. 28 is an explanatory view showing a termination condition lottery table utilized in the termination condition lottery process.

As shown in Fig. 28, the termination condition lottery table 51F is a lottery table to conduct a lottery of the termination condition based on the random numbers "0" ~ "12"b sampled through the random number sampling circuit 56 when the game state shifts to the probability change mode. And the termination condition to terminate the probability change mode is determined based on the obtained random number by the CPU 50.

Concretely, if the random number is "0", the termination condition is set to the condition that (1) three symbols "SARDINE" are stopped and displayed during the probability change mode at the same time with no relation to the activated pay lines. If the random number is "1", the termination condition is set to the condition that (2) five symbols "WILD" are stopped on the pay line. If the random number is "2", the termination condition is set to the condition that (3) the JP is won. If the random number is "3", the termination condition is set to the condition that (4) any of the winning symbol combinations is won in fifteen times after the game state shifts to the probability change mode. If the random number is "4", the termination condition is set to the condition that (5) coins obtained by the player from start of the game become more than 10,000 coins (if the obtained credits of the player exceed 10,000 credits). If the random number is "5", the termination condition is set to the condition that (6) coins obtained by the player exceed 1,000 coins after the game state shifts to the probability change mode (if the obtained credits exceed 1,000 credits). If the random number is "6", the termination condition is set to the condition that (7) the game number done by the player from start of the game exceeds 500 games. If the random number is "7", the termination condition is set to the condition that (8) the game number exceeds 20 games after the game state shifts to the probability change mode. If the random number is "8", the termination condition is set to the condition that (9) the present time becomes any of 10 o'clock and 45 minutes (10: 45), 13 o'clock and 15 minutes (13: 15) and 21 o'clock and 45 minutes (21: 45). If the random number is "9", the termination condition is set to the condition that (10) three minutes elapse after the game state shifts to the probability change mode. If the random number is "10", the termination condition is set to the condition that (11) termination of the probability change mode is determined in the lottery done every one game. If the random number is "11", the termination condition is set to the condition that (12) the payout rate exceeds 90%. And If the random number is "12", the termination condition is set to the condition that (13) the present credit number displayed in the JP sum display portion 11 exceeds 100,000 credits.

And after the lottery of the termination condition is executed, the termination condition selected based on the lottery result is displayed on the display area other than the variable display portions 21 to 25 and the JP sum display portion 11 on the lower liquid crystal display 4 (S207). Fig. 29 is a front view showing the lower liquid crystal display 4 on which the termination condition is displayed.

In Fig. 29, it is displayed a case that the termination condition becomes the condition that (8) the game number exceeds 20 games after the game state shifts to the probability change mode in the termination condition lottery process of S106. As shown in Fig. 29, based on that characters 92 showing the termination condition displayed on the lower liquid crystal display 4 are displayed, the termination condition during the game can be notified to the player. Therefore, the player conducting the game can acknowledge that the probability change mode is terminated based on which condition.

On the other hand, if the game state at present is in the probability change mode (S201: YES), a termination lottery process of the probability change mode, which is one of the termination conditions of the probability change mode, is conducted (S208). The termination lottery process of the probability change mode is executed by conducting a lottery based on the random numbers of "0" - "9" sampled through the random number sampling circuit 56 in use of the termination lottery table 51B (see Fig. 11) of the probability change mode. And if the random number is "9", one of the termination conditions in S209 is satisfied.

Next, it is determined whether or not one termination condition selected in S105 is satisfied among the conditions (1) ~ (13) (S209). Concretely, the termination conditions of (1) ~ (3) are determined based on the winning symbol combination determined in S22 or S43. And the termination conditions of (4) - (8) are determined based on the count value stored in each of the winning symbol counter 52A of the RAM 52, the total credit counter 52B, the credit counter 52C, the total game number counter 52D and the game number counter 52E. And the termination conditions of (9) - (10) are determined based on the measured value of the timer 87 connected to the CPU 50. And the termination condition of (11) is determined based on the termination lottery result of the probability change mode in S107. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that the selected termination condition is satisfied (S209: YES), the probability change mode is terminated (S210). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101 - the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S211). Thereby, it can be notified to the player that the probability change mode is terminated. Thereafter, the probability change mode changing process is terminated.

On the other hand, if it is determined that the selected termination condition is not satisfied (S209: NO), the probability change mode is continued and the probability change mode changing process is terminated.

As mentioned in the above, in the slot machine 1 according to the fifth embodiment, during the base game or the bonus game, in a case that the symbol combination stopped and displayed through the variable display portions 21 to 25 is won in 30 times since the player starts to play the game, or in a case that the number of coins obtained by the player from start of the game exceeds 1000 coins or 5000 coins or in a case that the number of games conducted by the player exceeds 100 games or 300 games (S203: YES), the first reel strip 101 variably moving, stopping and displaying the symbols on the variable display portion 21 is changed to the sixth reel strip in which more the symbol "WILD" and the symbol "SARDINE" are included, till the termination condition determined by the lottery (S205) is satisfied from the next game, thereby the game state shifts to the probability change mode in which the probability to win the winning symbol combination increases in comparison with the normal mode (S204). Therefore, the game state can be variously changed at the timing that the player cannot predict during the game and a wave in the payout of the game media can be produced. Thus, the game state of the slot machine 1 can be variegated and the player never loses interest for games. Further, since the termination condition to terminate the probability change mode is changed according to the lottery which is conducted every time the game state shifts to the probability change mode (S205), a game pattern is increased and game characteristic is improved. And since the termination condition is displayed on the lower liquid crystal display 4 (S206), the player conducting the game can acknowledge that the probability change mode is terminated and intention of the player is increased. Further, strategy for games is improved.

### (Sixth Embodiment)

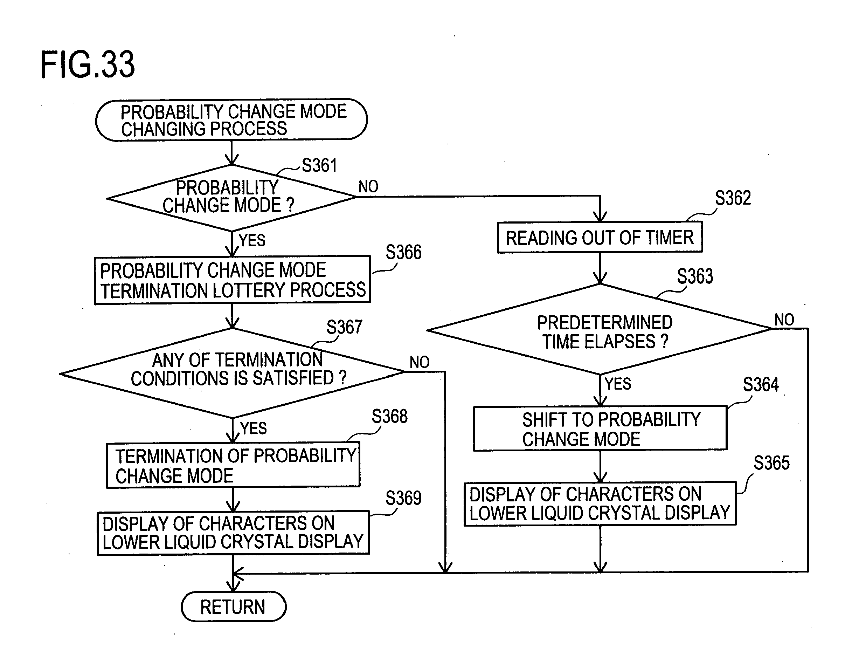

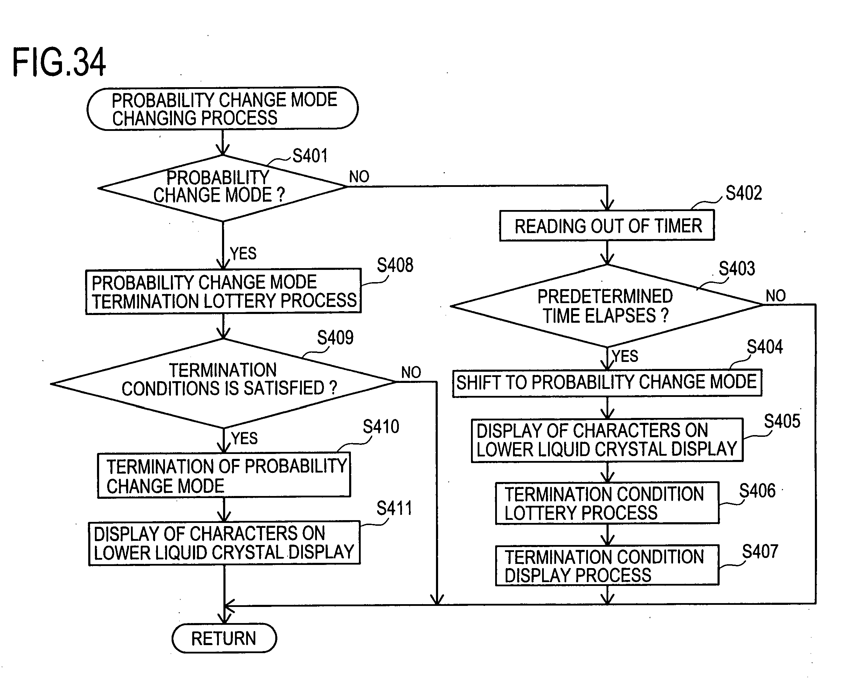

Next, the slot machine according to the sixth embodiment will be described with reference to Figs. 33 and 34. Here, in the explanation mentioned later, the same signs used in the slot machine 1 of the first embodiment described on the basis of Figs. 1 to 22 indicate the constructive elements which are same as those or correspond to those in the slot machine 1 of the sixth embodiment.

The outline construction of the slot machine according to the sixth embodiment is substantially as same as that of the slot machine 1 in the first embodiment. And various control processes in the sixth embodiment are substantially as same as those in the slot machine 1 of the first embodiment.

However, the slot machine in the sixth embodiment is different from the slot machine 1 in the first embodiment in the following point. That is, in the slot machine 1 of the first embodiment, if a predetermined condition (one of the conditions that three of the symbol "SARDINE" are stopped and displayed at the same time, five of the symbol "WILD" are stopped on the pay line and the JP is won, with no relation to the pay lines) is realized, the game state shifts to the probability change mode in which the probability to win the winning combination (see Fig. 12) becomes higher than the normal mode. On the contrary, in the slot machine of the sixth embodiment, in a case that the time becomes a time to open the game arcade (9: 00 PM in the sixth embodiment), 12 o'clock and 21 o'clock, the game state shifts to the probability change mode in which the probability that the winning symbol combination is stopped so as align on the pay line increases. Here, each of times mentioned is counted by the timer 87 (see Fig. 6) which can count the time since the game arcade is opened.

And in the slot machine 1 according to the sixth embodiment, if a predetermined condition is realized during the base game and the bonus game, the game state shifts to the probability change mode. Here, the probability change mode means a special game mode which is realized if the time becomes the opening time of the game arcade (in the sixth embodiment, 9: 00 AM) or if the time becomes 12 o'clock or if the time becomes 21 o'clock. And it is determined whether or not such conditions are realized based on the time count information from the timer 87 connected to the CPU 50. Here, the timer 87 is a device counting the time from the opening of the game arcade and the CPU 50 determines that the time transmitted from the timer 87 becomes the opening time (9 o'clock), 12 o'clock (three hours elapse) and 21 o'clock (twelve hours elapse), thereby the game state shifts to the probability change mode in which the probability to win the winning combination (see Fig. 12) becomes higher than the normal game state till a predetermined termination condition is satisfied from the next game (here, one game means a time till variable display of the symbols is started on each of the variable display portions 21 to 25, thereafter the symbols are stopped and displayed thereon).

Next, the probability change mode changing process done in S35 and S50 will be described with reference to Fig. 33. Fig. 33 is a flowchart of the probability change mode changing process in the slot machine according to the sixth embodiment.

In the probability change mode changing process, at first, the CPU 50 determines in S361 whether or not the slot machine 1 at present is in the probability change mode. Here, the slot machine 1 has two gaming states of the base game and the bonus game, and in addition, each of the base game and the bonus game has two game modes of the probability change mode and the normal mode (the game state (including the base game and the bonus game) other than the probability change mode. And if a predetermined condition is satisfied, each mode is mutually changed.

If the slot machine 1 is not in the probability change mode at present (S361: NO), the CPU 50 obtains the time counted by the timer 87.

Thereafter, the CPU 50 determines whether or not the counted time is a predetermined time (S363). Here, in the slot machine of the sixth embodiment, the game state shifts to the probability change mode when the counted time becomes the opening time of the game arcade, the present time becomes 12 o'clock or 21 o'clock.

Therefore, the CPU 50 determines whether or not the time counted by the timer 87 from the opening of the game arcade becomes the opening time right after the game arcade is opened (9 o'clock), three hours elapse from start of counting of the time (12 o'clock) and twelve hours elapse from start of counting of the time (21 o'clock).

And if it is determined that the time becomes the predetermined time based on the counted time (S363: YES), the game state shifts to the probability change mode in S364. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the winning symbol combination is not won (S363: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S365). Thereby, it can be notified to the player that the probability change mode is realized. Thereafter, the probability change mode changing process is terminated.

On the other hand, if the game state at present is in the probability change mode (S361: YES), a termination lottery process of the probability change mode, which is one of the termination conditions of the probability change mode, is conducted (S366). The termination lottery process of the probability change mode is executed by conducting a lottery based on the random numbers of "0" ~ "9" sampled through the random number sampling circuit 56 in use of the termination lottery table 51B (see Fig. 11) of the probability change mode. And if the random number is "9", one of the termination conditions in S367 is satisfied.

Next, it is determined whether or not any one of the termination conditions to terminate the probability change mode is satisfied (S367). In the slot machine 1 of the first embodiment, as the termination conditions mentioned in the above, there are set cases: (1) if three symbols "SARDINE" are stopped and displayed during the probability change mode at the same time with no relation to the activated pay lines; (2) if five symbols "WILD" are stopped on the pay line; (3) if the game is started with the MAX bet (the state that all of twenty-five pay lines are activated and the bet number is set to 8 for each of the activated pay lines) and five symbols "LOBSTER" are successively stopped and displayed on the activated pay line through the variable display portions 21 to 25; (4) if any of the winning symbol combinations shown in Fig. 12 is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10: 45), 13 o'clock and 15 minutes (13: 15) and 21 o'clock and 45 minutes (21: 45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits. And if such termination condition is satisfied, the probability change mode is terminated in such game.

Concretely, the termination conditions of (1) ~ (3) are determined based on the winning symbol combination determined in S22 or S43. And the termination conditions of (4) - (8) are determined based on the count value stored in each of the winning symbol counter 52A of the RAM 52, the total credit counter 52B, the credit counter 52C, the total game number counter 52D and the game number counter 52E. And the termination conditions of (9) ~ (10) are determined based on the measured value of the timer 87 connected to the CPU 50. And the termination condition of (11) is determined based on the termination lottery result of the probability change mode in S65. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that any one of the termination conditions is satisfied (S367: YES), the probability change mode is terminated (S368). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101 - the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S369). Thereby, it can be notified to the player that the probability change mode is terminated. Thereafter, the probability change mode changing process is terminated.

On the other hand, if it is determined that any one of the termination conditions is not satisfied (S367: NO), the probability change mode is continued and the probability change mode changing process is terminated.

As mentioned, in the slot machine 1 of the first embodiment, during the base game or the bonus game, in a case that the present time becomes any one of 9 o'clock, 12 o'clock and 21 o'clock (S363: YES), the first reel strip 101 variably moving, stopping and displaying the symbols on the variable display portion 21 is changed to the sixth reel strip 106 in which more the symbol "WILD" and the symbol "SARDINE" are included, till any one of the termination conditions is satisfied from the next game, thereby the game state shifts to the probability change mode in which the probability to win the winning symbol combination increases in comparison with the normal mode (S364). Therefore, the game state can be variously changed at the timing that the player cannot predict during the game and a wave in the payout of the game media can be produced. Thus, the game state of the slot machine 1 can be variegated and the player never loses interest for games. And by changing the game state to the probability change mode at 9 o'clock AM right after the game arcade is opened, less players coming to the game arcade, there occurs difference from the other game arcade, thereby such game arcade can collect many customers.

And after the game state shifts to the probability change mode, the characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S365). Thereby, the player can acknowledge during the game that the probability change mode is realized, thus expectation for games can be raised. And in the probability change mode, strategy for games to increase the bet number and the like can be improved.

Further, after the probability change mode is terminated, the characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S369). Thereby, it can be notified to the player that the probability change mode is terminated. Therefore, the player can acknowledge that the probability change mode is terminated, thus after the probability change mode is terminated, strategy for games to reduce the bet number and the like can be improved.

### (Seventh Embodiment)

Next, the slot machine according to the seventh embodiment will be described with reference to Fig. 34. Here, in explanation mentioned hereinafter, the same signs used in the slot machine 1 of the sixth embodiment described on the basis of Figs. 33 indicate the constructive elements which are same as those or correspond to those in the slot machine 1 of the sixth embodiment.

The outline construction of the slot machine according to the seventh embodiment is substantially as same as that of the slot machine 1 in the sixth embodiment. And various control processes in the seventh embodiment are substantially as same as those in the slot machine 1 of the sixth embodiment.

However, the slot machine in the seventh embodiment is different from the slot machine in the sixth embodiment in following points. That is, in the slot machine of the sixth embodiment, thirteen kinds of conditions are set as the termination condition of the probability change mode and when any one of such conditions is satisfied, the probability change mode at present is terminated. On the contrary, in the slot machine of the seventh embodiment, one condition is selected among thirteen termination conditions and the probability change mode is terminated by utilizing the selected termination condition.

Next, the probability change mode changing process executed in the slot machine of the seventh embodiment will be described with reference to Fig. 34. Fig. 34 is a flowchart of the probability change mode changing process program in the slot machine of the seventh embodiment. Here, program shown by the flowchart in Fig. 34 is stored in the ROM 51 or the RAM 52 provided in the slot machine of the seventh embodiment and is executed by the CPU 50.

In the probability change mode changing process, at first, the CPU 50 determines in S401 whether or not the slot machine at present is in the probability change mode. Here, the slot machine has two gaming states of the base game and the bonus game as mentioned, and in addition, each of the base game and the bonus game has two game modes of the probability change mode and the normal mode (the game state (including the base game and the bonus game) other than the probability change mode). And if a predetermined condition is satisfied, each mode is mutually changed.

And if it is determined that the present time is not the probability change mode (S401: NO), the CPU 50 obtains the time counted by the timer 87 (S402).

Thereafter, the CPU 50 determines whether or not the obtained time is the predetermined time (S403). In the slot machine of the seventh embodiment, the game state shifts to the probability change mode when the time becomes the opening time right after the game arcade is opened, the present time becomes 12 o'clock or 21 o'clock. The CPU 50 determines whether or not the time counted by the timer 87 from the opening of the game arcade becomes the opening time right after the game arcade is opened (9 o'clock), three hours elapse from start of counting of the time (12 o'clock) and twelve hours elapse from start of counting of the time (21 o'clock).

And if it is determined that the counter time is the predetermined time (S403: YES), the game state shifts to the probability change mode in S404. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the obtained count value is not the predetermined value mentioned in the above (S403: NO), the probability change mode changing process is terminated.

Further, after the game state shifts to the probability change mode, as shown in Fig. 21, characters 90 showing "PROBABILITY CHANGE MODE IS REALIZED!!" . are displayed for 5 seconds on the display area of the lower liquid crystal display 4 other than the variable display portions 21 to 25 and the JP sum display portion 11 (S405). Thereby, it can be notified to the player that the probability change mode is realized.

Next, in S406, the termination condition lottery process to conduct a lottery of the termination condition is executed. In the slot machine according to the seventh embodiment, there are set beforehand 13 kinds of the termination conditions as the conditions to terminate the probability change mode. Concretely, such conditions are: (1) if three symbols "SARDINE" are stopped and displayed during the probability change mode at the same time with no relation to the activated pay lines; (2) if five symbols "WILD" are stopped on the pay line; (3) if the JP is won; (4) if any of the winning symbol combinations is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10:45), 13 o'clock and 15 minutes (13: 15) and 21 o'clock and 45 minutes (21:45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits.

And in the slot machine of the seventh embodiment, one condition is selected among the above 13 termination conditions set in the above and such selected termination condition is made as the termination condition to terminate the probability change mode.

In a termination condition display process, a lottery is executed based on random numbers "0" - "12" sampled through the random number sampling circuit 56 by utilizing a termination condition lottery table 51F shown in Fig. 28. Fig. 28 is an explanatory view showing a termination condition lottery table utilized in the termination condition lottery process.

As shown in Fig. 28, the termination condition lottery table 51F is a lottery table to conduct a lottery of the termination condition based on the random numbers "0" ~ "12"b sampled through the random number sampling circuit 56 when the game state shifts to the probability change mode. And the termination condition to terminate the probability change mode is determined based on the obtained random number by the CPU 50.

Concretely, if the random number is "0", the termination condition is set to the condition that (1) three symbols "SARDINE" are stopped and displayed during the probability change mode at the same time with no relation to the activated pay lines. If the random number is "1", the termination condition is set to the condition that (2) five symbols "WILD" are stopped on the pay line. If the random number is "2", the termination condition is set to the condition that (3) the JP is won. If the random number is "3", the termination condition is set to the condition that (4) any of the winning symbol combinations is won in fifteen times after the game state shifts to the probability change mode. If the random number is "4", the termination condition is set to the condition that (5) coins obtained by the player from start of the game become more than 10,000 coins (if the obtained credits of the player exceed 10,000 credits). If the random number is "5", the termination condition is set to the condition that (6) coins obtained by the player exceed 1,000 coins after the game state shifts to the probability change mode (if the obtained credits exceed 1,000 credits). If the random number is "6", the termination condition is set to the condition that (7) the game number done by the player from start of the game exceeds 500 games. If the random number is "7", the termination condition is set to the condition that (8) the game number exceeds 20 games after the game state shifts to the probability change mode. If the random number is "8", the termination condition is set to the condition that (9) the present time becomes any of 10 o'clock and 45 minutes (10: 45), 13 o'clock and 15 minutes (13: 15) and 21 o'clock and 45 minutes (21: 45). If the random number is "9", the termination condition is set to the condition that (10) three minutes elapse after the game state shifts to the probability change mode. If the random number is "10", the termination condition is set to the condition that (11) termination of the probability change mode is determined in the lottery done every one game. If the random number is "11", the termination condition is set to the condition that (12) the payout rate exceeds 90%. And If the random number is "12", the termination condition is set to the condition that (13) the present credit number displayed in the JP sum display portion 11 exceeds 100,000 credits.

And after the lottery of the termination condition is executed, the termination condition selected based on the lottery result is displayed on the display area other than the variable display portions 21 to 25 and the JP sum display portion 11 on the lower liquid crystal display 4 (S407). Fig. 29 is a front view showing the lower liquid crystal display 4 on which the termination condition is displayed.

In Fig. 29, it is displayed a case that the termination condition becomes the condition that (8) the game number exceeds 20 games after the game state shifts to the probability change mode in the termination condition lottery process of S406. As shown in Fig. 29, based on that characters 92 showing the termination condition displayed on the lower liquid crystal display 4 are displayed, the termination condition during the game can be notified to the player. Therefore, the player conducting the game can acknowledge that the probability change mode is terminated based on which condition.

On the other hand, if the game state at present is in the probability change mode (S401: YES), a termination lottery process of the probability change mode, which is one of the termination conditions of the probability change mode, is conducted (S408). The termination lottery process of the probability change mode is executed by conducting a lottery based on the random numbers of "0" - "9" sampled through the random number sampling circuit 56 in use of the termination lottery table 51B (see Fig. 11) of the probability change mode. And if the random number is "9", one of the termination conditions in S409 is satisfied.

Next, it is determined whether or not one termination condition selected in S406 is satisfied among the conditions (1)~(13) (S409). Concretely, the termination conditions of (1)~(3) are determined based on the winning symbol combination determined in S22 or S43. And the termination conditions of (4) - (8) are determined based on the count value stored in each of the winning symbol counter 52A of the RAM 52, the total credit counter 52B, the credit counter 52C, the total game number counter 52D and the game number counter 52E. And the termination conditions of (9)~(10) are determined based on the measured value of the timer 87 connected to the CPU 50. And the termination condition of (11) is determined based on the termination lottery result of the probability change mode in S107. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that the selected termination condition is satisfied (S409: YES), the probability change mode is terminated (S410). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101 - the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S411). Thereby, it can be notified to the player that the probability change mode is terminated. Thereafter, the probability change mode changing process is terminated.

On the other hand, if it is determined that the selected termination condition is not satisfied (S409: NO), the probability change mode is continued and the probability change mode changing process is terminated.

As mentioned in the above, in the slot machine 1 according to the seventh embodiment, during the base game or the bonus game, in a case that the present time becomes any one of 9 o'clock, 12 o'clock and 21 o'clock (S403: YES), the first reel strip 101 variably moving, stopping and displaying the symbols on the variable display portion 21 is changed to the sixth reel strip in which more the symbol "WILD" and the symbol "SARDINE" are included, till the termination condition determined by the lottery (S405) is satisfied from the next game, thereby the game state shifts to the probability change mode in which the probability to win the winning symbol combination increases in comparison with the normal mode (S404). Therefore, the game state can be variously changed at the timing that the player cannot predict during the game and a wave in the payout of the game media can be produced. Thus, the game state of the slot machine 1 can be variegated and the player never loses interest for games. And by changing the game state to the probability change mode at 9 o'clock AM right after the game arcade is opened, less players coming to the game arcade, there occurs difference from the other game arcade, thereby such game arcade can collect many customers.

Further, since the termination condition to terminate the probability change mode is changed according to the lottery which is conducted every time the game state shifts to the probability change mode (S405), a game pattern is increased and game characteristic is improved. And since the termination condition is displayed on the lower liquid crystal display 4 (S406), the player conducting the game can acknowledge that the probability change mode is terminated and intention of the player is increased. Further, strategy for games is improved.

### (Eight Embodiment)

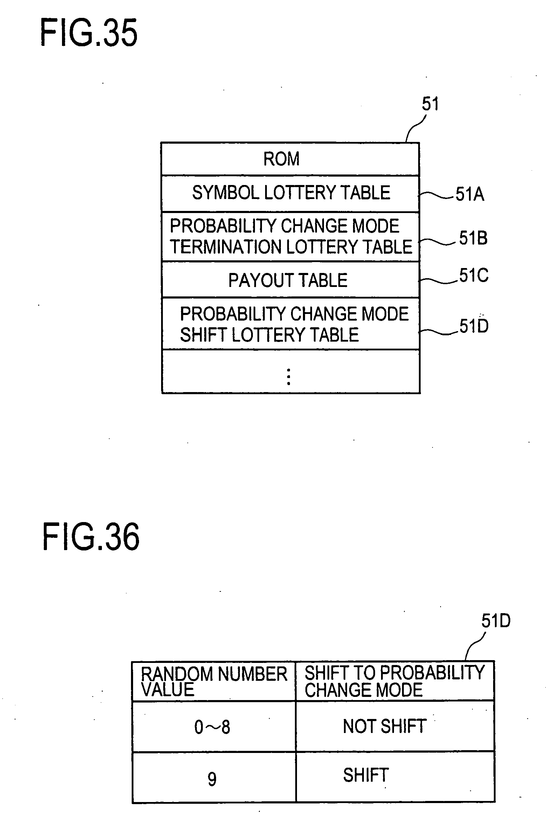

Next, the slot machine according to the eighth embodiment will be described with reference to Figs. 35 to 38. Here, in the explanation mentioned later, the same signs used in the slot machine 1 of the first embodiment described on the basis of Figs. 1 to 22 indicate the constructive elements which are same as those or correspond to those in the slot machine 1 of the eighth embodiment.

The outline construction of the slot machine according to the eighth embodiment is substantially as same as that of the slot machine 1 in the first embodiment. And various control processes in the eighth embodiment are substantially as same as those in the slot machine 1 of the first embodiment.

However, the slot machine in the eighth embodiment is different from the slot machine 1 in the first embodiment in the following point. That is, in the slot machine 1 of the first embodiment, if a predetermined condition (one of the conditions that three of the symbol "SARDINE" are stopped and displayed at the same time, five of the symbol "WILD" are stopped on the pay line and the JP is won, with no relation to the pay lines) is realized, the game state shifts to the probability change mode in which the probability to win the winning combination (see Fig. 12) becomes higher than the normal mode. On the contrary, in the slot machine of the eighth embodiment, after one game (here, one game means a time till variable display of the symbols is started on each of the variable display portions 21 to 25, thereafter the symbols are stopped and displayed thereon) is terminated, it is conducted a lottery whether or not the game state shifts to the probability change mode in which the probability that the winning symbol combination is stopped so as align on the pay line increases from the next game. As the lottery result, if it is determined that the game state shifts to the probability change mode, the game state becomes the probability change mode in the game till any of the termination conditions is satisfied from the next game.

In order to realize the above, as shown in Fig. 35, in the ROM 51 of the slot machine according to the eighth embodiment, a probability change mode shift lottery table 51D is provided, in addition to various programs, the symbol lottery table 51A for determining symbols stopped and displayed in each of the stop symbol areas 211~ 213, 221~223, 231~233, 241~243, 251~253 (see Fig. 2) of the variable display portions 21 to 25 based on random numbers, the lottery table 51B to determine whether or not the probability change mode is terminated every one game is finished if the game state is in the probability change mode and the payout table 51C in which the winning symbol combinations stopped and displayed on each of the stop display areas and payouts thereof are stored. Here, the probability change mode shift lottery table 51D is utilized for conducting a lottery to determine whether or not the probability change mode is to be started in case that the game state is not the probability change mode.

And in the slot machine of the eighth embodiment, during the base game and the bonus game, the game state shifts to the probability change mode if a predetermined condition is satisfied. Here, the probability change mode is a special game mode which is determined to be shifted or not, based on a lottery result obtained by a lottery conducted on the basis of a random number sampled through the random number sampling circuit 56 every one game is terminated. Here, the lottery is executed by utilizing the probability change mode shift lottery table 51D stored in the ROM 51. Fig. 36 is an explanatory view showing the probability change mode shift lottery table.

As shown in Fig. 36, the probability change mode shift lottery table 51D is a lottery table by which a lottery is executed based on the random numbers "0"~"9" sampled through the random number sampling circuit 56 every one game is terminated in the normal mode. And it is determined by the CPU 50 whether the game state is not shifted to the probability change mode based on the obtained random number, thereby the game is continues in the normal mode or the game state is shifted to the probability change mode.

Concretely, if the random number lies in the range of "0"~"8", the game state does not shift to the probability change mode and the game is continued in the normal mode. On the other hand, if the random number is "9", the game state shifts to the probability change mode after the present game is terminated. And if the game state shifts to the probability change mode, the probability to win the winning symbol combination (see Fig. 13) becomes higher than in the normal mode till a predetermined termination condition is satisfied from the next game (here, one game means a time till variable display of the symbols is started on each of the variable display portions 21 to 25, thereafter the symbols are stopped and displayed thereon).

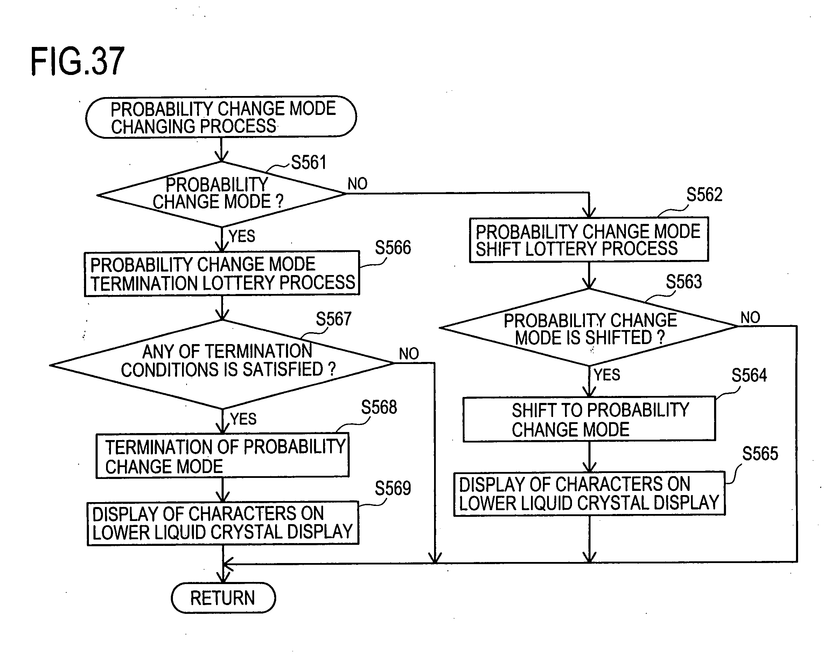

Next, the probability change mode changing process done in S35 and S50 will be described with reference to Fig. 37. Fig. 37 is a flowchart of the probability change mode changing process in the slot machine according to the eighth embodiment.

In the probability change mode changing process, at first, the CPU 50 determines in S561 whether or not the slot machine 1 at present is in the probability change mode. Here, the slot machine 1 has two gaming states of the base game and the bonus game, and in addition, each of the base game and the bonus game has two game modes of the probability change mode and the normal mode (the game state (including the base game and the bonus game) other than the probability change mode. And if a predetermined condition is satisfied, each mode is mutually changed.

If the slot machine 1 is not in the probability change mode at present (S561: NO), it is conducted the probability change mode shift lottery process in which it is determined whether or not the game state shifts to the probability change mode (S562). In the probability change mode shift process, the lottery is conducted based on the random number sampled through the random number sampling circuit 56 by utilizing the probability change mode shift lottery table 51D (see Fig. 36).

Thereafter, the CPU 50 determines whether or not the game state si shifted to the probability change mode based on the lottery result obtained in S562 (S563). Concretely, if the random number sampled is "9", the game sate shifts to the probability change mode and if the random number sampled lies in the range of "0"~ "8", the game state does not shift to the probability change mode and the game is continued in the normal mode (see Fig. 36).

And in a case that it is determined that the game state is shifted to the probability change mode (S563: YES), the game state shifts to the probability change mode in S564. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the winning symbol combination is not won (S363: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S365). Thereby, it can be notified to the player that the probability change mode is realized. Thereafter, the probability change mode changing process is terminated.

On the other hand, if the game state at present is in the probability change mode (S561: YES), a termination lottery process of the probability change mode, which is one of the termination conditions of the probability change mode, is conducted (S566). The termination lottery process of the probability change mode is executed by conducting a lottery based on the random numbers of "0" - "9" sampled through the random number sampling circuit 56 in use of the termination lottery table 51B (see Fig. 11) of the probability change mode. And if the random number is "9", one of the termination conditions in S567 is satisfied.

Next, it is determined whether or not any one of the termination conditions to terminate the probability change mode is satisfied (S567). In the slot machine 1 of the first embodiment, as the termination conditions mentioned in the above, there are set cases: (1) if three symbols "SARDINE" are stopped and displayed during the probability change mode at the same time with no relation to the activated pay lines; (2) if five symbols "WILD" are stopped on the pay line; (3) if the game is started with the MAX bet (the state that all of twenty-five pay lines are activated and the bet number is set to 8 for each of the activated pay lines) and five symbols "LOBSTER" are successively stopped and displayed on the activated pay line through the variable display portions 21 to 25; (4) if any of the winning symbol combinations shown in Fig. 12 is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10: 45), 13 o'clock and 15 minutes (13: 15) and 21 o'clock and 45 minutes (21:45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits. And if such termination condition is satisfied, the probability change mode is terminated in such game.

Concretely, the termination conditions of (1)~(3) are determined based on the winning symbol combination determined in S22 or S43. And the termination conditions of (4)~(8) are determined based on the count value stored in each of the winning symbol counter 52A of the RAM 52, the total credit counter 52B, the credit counter 52C, the total game number counter 52D and the game number counter 52E. And the termination conditions of (9)~(10) are determined based on the measured value of the timer 87 connected to the CPU 50. And the termination condition of (11) is determined based on the termination lottery result of the probability change mode in S65. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that any one of the termination conditions is satisfied (S567: YES), the probability change mode is terminated (S568). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101 - the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S569). Thereby, it can be notified to the player that the probability change mode is terminated. Thereafter, the probability change mode changing process is terminated.

On the other hand, if it is determined that any one of the termination conditions is not satisfied (S567: NO), the probability change mode is continued and the probability change mode changing process is terminated.

As mentioned, in the slot machine 1 of the eighth embodiment, during the base game or the bonus game, it is conducted the lottery to determine whether or not the game state shifts to the probability change mode (S562) and as the lottery result, it is determined that the game state is shifted to the probability change mode (S563: YES), the first reel strip 101 variably moving, stopping and displaying the symbols on the variable display portion 21 is changed to the sixth reel strip 106 in which more the symbol "WILD" and the symbol "SARDINE" are included, till any one of the termination conditions is satisfied from the next game, thereby the game state shifts to the probability change mode in which the probability to win the winning symbol combination increases in comparison with the normal mode (S564). Therefore, the game state can be variously changed at the timing that the player cannot predict during the game and a wave in the payout of the game media can be produced. Thus, the game state of the slot machine 1 can be variegated and the player never loses interest for games.

And after the game state shifts to the probability change mode, the characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S565). Thereby, the player can acknowledge during the game that the probability change mode is realized, thus expectation for games can be raised. And in the probability change mode, strategy for games to increase the bet number and the like can be improved.

Further, after the probability change mode is terminated, the characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S569). Thereby, it can be notified to the player that the probability change mode is terminated. Therefore, the player can acknowledge that the probability change mode is terminated, thus after the probability change mode is terminated, strategy for games to reduce the bet number and the like can be improved.

### (Ninth Embodiment)

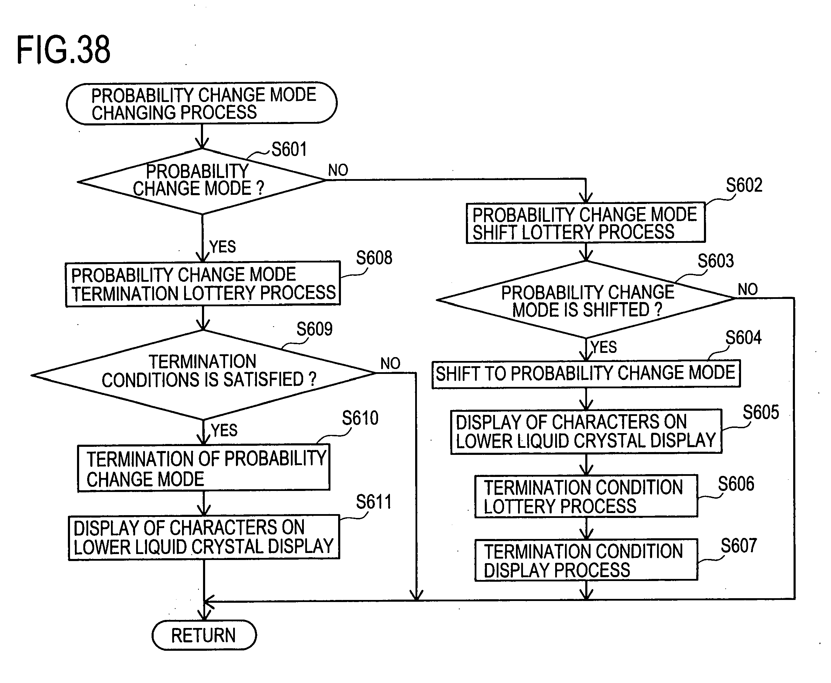

Next, the slot machine according to the ninth embodiment will be described with reference to Fig. 38. Here, in explanation mentioned hereinafter, the same signs used in the slot machine 1 of the eighth embodiment described on the basis of Figs. 35 to 37 indicate the constructive elements which are same as those or correspond to those in the slot machine 1 of the eighth embodiment.

The outline construction of the slot machine according to the ninth embodiment is substantially as same as that of the slot machine 1 in the eighth embodiment. And various control processes in the ninth embodiment are substantially as same as those in the slot machine 1 of the eighth embodiment.

However, the slot machine in the ninth embodiment is different from the slot machine in the eighth embodiment in following points. That is, in the slot machine of the eighth embodiment, thirteen kinds of conditions are set as the termination condition of the probability change mode and when any one of such conditions is satisfied, the probability change mode at present is terminated. On the contrary, in the slot machine of the ninth embodiment, one condition is selected among thirteen termination conditions and the probability change mode is terminated by utilizing the selected termination condition.

Next, the probability change mode changing process executed in the slot machine of the ninth embodiment will be described with reference to Fig. 38. Fig. 38 is a flowchart of the probability change mode changing process program in the slot machine of the ninth embodiment. Here, program shown by the flowchart in Fig. 38 is stored in the ROM 51 or the RAM 52 provided in the slot machine of the ninth embodiment and is executed by the CPU 50.

In the probability change mode changing process, at first, the CPU 50 determines in S601 whether or not the slot machine at present is in the probability change mode. Here, the slot machine has two gaming states of the base game and the bonus game as mentioned, and in addition, each of the base game and the bonus game has two game modes of the probability change mode and the normal mode (the game state (including the base game and the bonus game) other than the probability change mode). And if a predetermined condition is satisfied, each mode is mutually changed.

And if it is determined that the slot machine is not in the probability change mode at present (S601: NO), it is executed the probability change mode shift lottery process in which it is determined whether or not the game state is to be shifted to the probability change mode (S602). In the probability change mode shift lottery, the lottery is executed based on the random numbers of ."0" ~ "9" sampled through the random number sampling circuit 56 by utilizing the probability change mode shift lottery table 51D (see Fig. 35).

Thereafter, the CPU 50 determines whether or not the game state is to be shifted to the probability change mode based on the lottery result obtained in S602 (S603). Concretely, if the random number sampled is "9", the game state shifts to the probability change mode and if the random number sampled lies in the range of "0" ~ "8", the game state does not shift to the probability change mode and the game is continues in the normal mode (see Fig. 35).

And if it is determined that the game state shifts to the probability change mode (S603: YES), the game state shifts to the probability change mode in S604. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102~ the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the obtained count value is not the predetermined value mentioned in the above (S603: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S605). Thereby, it can be notified to the player that the probability change mode is realized.

Next, in S606, the termination condition lottery process to conduct a lottery of the termination condition is executed. In the slot machine according to the ninth embodiment, there are set beforehand 13 kinds of the termination conditions as the conditions to terminate the probability change mode. Concretely, such conditions are: (1) if three symbols "SARDINE" are stopped and displayed during the probability change mode at the same time with no relation to the activated pay lines; (2) if five symbols "WILD" are stopped on the pay line; (3) if the JP is won; (4) if any of the winning symbol combinations is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10:45), 13 o'clock and 15 minutes (13: 15) and 21 o'clock and 45 minutes (21:45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits.

And in the slot machine of the ninth embodiment, one condition is selected among the above 13 termination conditions set in the above and such selected termination condition is made as the termination condition to terminate the probability change mode.

In a termination condition display process, a lottery is executed based on random numbers "0"~"12" sampled through the random number sampling circuit 56 by utilizing a termination condition lottery table 51F shown in Fig. 28. Fig. 28 is an explanatory view showing a termination condition lottery table utilized in the termination condition lottery process.

As shown in Fig. 28, the termination condition lottery table 51F is a lottery table to conduct a lottery of the termination condition based on the random numbers "0"~"12"b sampled through the random number sampling circuit 56 when the game state shifts to the probability change mode. And the termination condition to terminate the probability change mode is determined based on the obtained random number by the CPU 50.

Concretely, if the random number is "0", the termination condition is set to the condition that (1) three symbols "SARDINE" are stopped and displayed during the probability change mode at the same time with no relation to the activated pay lines. If the random number is "1", the termination condition is set to the condition that (2) five symbols "WILD" are stopped on the pay line. If the random number is "2", the termination condition is set to the condition that (3) the JP is won. If the random number is "3", the termination condition is set to the condition that (4) any of the winning symbol combinations is won in fifteen times after the game state shifts to the probability change mode. If the random number is "4", the termination condition is set to the condition that (5) coins obtained by the player from start of the game become more than 10,000 coins (if the obtained credits of the player exceed 10,000 credits). If the random number is "5", the termination condition is set to the condition that (6) coins obtained by the player exceed 1,000 coins after the game state shifts to the probability change mode (if the obtained credits exceed 1,000 credits). If the random number is "6", the termination condition is set to the condition that (7) the game number done by the player from start of the game exceeds 500 games. If the random number is "7", the termination condition is set to the condition that (8) the game number exceeds 20 games after the game state shifts to the probability change mode. If the random number is "8", the termination condition is set to the condition that (9) the present time becomes any of 10 o'clock and 45 minutes (10:45), 13 o'clock and 15 minutes (13: 15) and 21 o'clock and 45 minutes (21:45). If the random number is "9", the termination condition is set to the condition that (10) three minutes elapse after the game state shifts to the probability change mode. If the random number is "10", the termination condition is set to the condition that (11) termination of the probability change mode is determined in the lottery done every one game. If the random number is "11", the termination condition is set to the condition that (12) the payout rate exceeds 90%. And If the random number is "12", the termination condition is set to the condition that (13) the present credit number displayed in the JP sum display portion 11 exceeds 100,000 credits.

And after the lottery of the termination condition is executed, the termination condition selected based on the lottery result is displayed on the display area other than the variable display portions 21 to 25 and the JP sum display portion 11 on the lower liquid crystal display 4 (S607). Fig. 29 is a front view showing the lower liquid crystal display 4 on which the termination condition is displayed.

In Fig. 29, it is displayed a case that the termination condition becomes the condition that (8) the game number exceeds 20 games after the game state shifts to the probability change mode in the termination condition lottery process of S606. As shown in Fig. 29, based on that characters 92 showing the termination condition displayed on the lower liquid crystal display 4 are displayed, the termination condition during the game can be notified to the player. Therefore, the player conducting the game can acknowledge that the probability change mode is terminated based on which condition.

On the other hand, if the game state at present is in the probability change mode (S601: YES), a termination lottery process of the probability change mode, which is one of the termination conditions of the probability change mode, is conducted (S608). The termination lottery process of the probability change mode is executed by conducting a lottery based on the random numbers of "0"~"9" sampled through the random number sampling circuit 56 in use of the termination lottery table 51B (see Fig. 11) of the probability change mode. And if the random number is "9", one of the termination conditions in S609 is satisfied.

Next, it is determined whether or not one termination condition selected in S406 is satisfied among the conditions (1)~(13) (S609). Concretely, the termination conditions of (1)~(3) are determined based on the winning symbol combination determined in S22 or S43. And the termination conditions of (4)~(8) are determined based on the count value stored in each of the winning symbol counter 52A of the RAM 52, the total credit counter 52B, the credit counter 52C, the total game number counter 52D and the game number counter 52E. And the termination conditions of (9)~(10) are determined based on the measured value of the timer 87 connected to the CPU 50. And the termination condition of (11) is determined based on the termination lottery result of the probability change mode in S107. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that the selected termination condition is satisfied (S609: YES), the probability change mode is terminated (S610). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101~ the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S611). Thereby, it can be notified to the player that the probability change mode is terminated. Thereafter, the probability change mode changing process is terminated.

On the other hand, if it is determined that the selected termination condition is not satisfied (S609: NO), the probability change mode is continued and the probability change mode changing process is terminated.

As mentioned in the above, in the slot machine 1 according to the ninth embodiment, during the base game or the bonus game, it is executed the lottery to determine whether or not the game state shifts to the probability change mode (S620) and as the lottery result, if it is determined that the game state is to be shifted to the probability change mode (S603: YES), the first reel strip 101 variably moving, stopping and displaying the symbols on the variable display portion 21 is changed to the sixth reel strip in which more the symbol "WILD" and the symbol "SARDINE" are included, till the termination condition determined by the lottery (S605) is satisfied from the next game, thereby the game state shifts to the probability change mode in which the probability to win the winning symbol combination increases in comparison with the normal mode (S604). Therefore, the game state can be variously changed at the timing that the player cannot predict during the game and a wave in the payout of the game media can be produced. Thus, the game state of the slot machine 1 can be variegated and the player never loses interest for games. And by changing the game state to the probability change mode at 9 o'clock AM right after the game arcade is opened, less players coming to the game arcade, there occurs difference from the other game arcade, thereby such game arcade can collect many customers.

Further, since the termination condition to terminate the probability change mode is changed according to the lottery which is conducted every time the game state shifts to the probability change mode (S605), a game pattern is increased and game characteristic is improved. And since the termination condition is displayed on the lower liquid crystal display 4 (S606), the player conducting the game can acknowledge that the probability change mode is terminated and intention of the player is increased. Further, strategy for games is improved.

### (Tenth Embodiment)

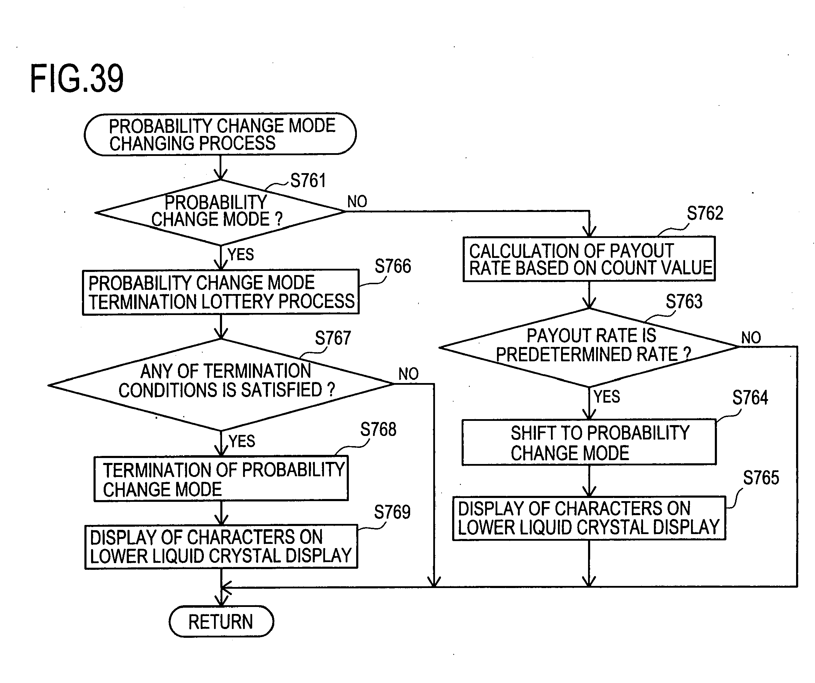

Next, the slot machine according to the tenth embodiment will be described with reference to Fig. 39. Here, in the explanation mentioned later, the same signs used in the slot machine 1 of the first embodiment described on the basis of Figs. 1 to 22 indicate the constructive elements which are same as those or correspond to those in the slot machine 1 of the tenth embodiment.

The outline construction of the slot machine according to the tenth embodiment is substantially as same as that of the slot machine 1 in the first embodiment. And various control processes in the tenth embodiment are substantially as same as those in the slot machine 1 of the first embodiment.

However, the slot machine in the tenth embodiment is different from the slot machine 1 in the first embodiment in the following point. That is, in the slot machine 1 of the first embodiment, if a predetermined condition (one of the conditions that three of the symbol "SARDINE" are stopped and displayed at the same time, five of the symbol "WILD" are stopped on the pay line and the JP is won, with no relation to the pay lines) is realized, the game state shifts to the probability change mode in which the probability to win the winning combination (see Fig. 12) becomes higher than the normal mode. On the contrary, in the slot machine of the tenth embodiment, if the payout rate (rate of credits paid out against the credit number betted by the player) of the slot machine becomes less than 85%, the game state shifts to the probability change mode in which the probability that the winning symbol combination is stopped so as to align on the pay line increases. Here, the payout rate is calculated by the CPU 50 based on the count values stored in the total credit counter 52B and the bet credit counter 52G of the RAM 52 at present.

In order to realize the above, in the slot machine of the tenth embodiment, during the base game and the bonus game, the game state shifts to the probability change mode if a predetermined condition is satisfied. Here, the probability change mode is a special game mode which is determined to be shifted or not, in a case that the payout rate of credits paid out against the credit number betted by the player) of the slot machine becomes less than 85%. And such condition is calculated by the CPU 50 based on the count values stored in the total credit counter 52B and the bet credit counter 52G of the RAM 52 at present. Here, the total credit counter 52B counts the total credits obtained by the player at present and the bet credit counter 52G counts the total credit number betted by the player by the present time.

And the CPU 50 determines that the payout rate becomes less than 85%, thereby the game state shifts to the probability change mode that the probability to win the winning symbol combination (see Fig. 12) becomes higher than in the normal mode till a predetermined termination condition is satisfied from the next game (here, one game means a time till variable display of the symbols is started on each of the variable display portions 21 to 25, thereafter the symbols are stopped and displayed thereon).

Next, the probability change mode changing process done in S35 and S50 will be described with reference to Fig. 39. Fig. 39 is a flowchart of the probability. change mode changing process in the slot machine according to the tenth embodiment.

In the probability change mode changing process, at first, the CPU 50 determines in S761 whether or not the slot machine 1 at present is in the probability change mode. Here, the slot machine 1 has two gaming states of the base game and the bonus game, and in addition, each of the base game and the bonus game has two game modes of the probability change mode and the normal mode (the game state (including the base game and the bonus game) other than the probability change mode. And if a predetermined condition is satisfied, each mode is mutually changed.

If the slot machine 1 is not in the probability change mode at present (S761: NO), the count values stored in the total credit counter 52B and the bet credit counter 52G of the RAM 52 are obtained and the payout rate (rate of credits paid out against the credit number betted by the player) at present in the slot machine is calculated (S762). Here, concretely, the payout rate is calculated according to "the count value of the total credit counter 52B ÷the count value of the bet credit counter 52G".

Thereafter, the CPU 50 determines whether or not the payout rate calculated is a predetermined rate (S763). Here, in the slot machine of the tenth embodiment, the game state shifts to the probability change mode when the payout rate of the slot machine becomes less than 85%.

Therefore, the CPU 50 determines whether or not the payout rate calculated in S762 becomes less than 85%.

And in a case that it is determined that the payout rate obtained becomes less than 85% (S763: YES), the game state shifts to the probability change mode in S764. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the payout rate is not less than 85% (S763: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S765). Thereby, it can be notified to the player that the probability change mode is realized. Thereafter, the probability change mode changing process is terminated.

On the other hand, if the game state at present is in the probability change mode (S761: YES), a termination lottery process of the probability change mode, which is one of the termination conditions of the probability change mode, is conducted (S766). The termination lottery process of the probability change mode is executed by conducting a lottery based on the random numbers of "0" - "9" sampled through the random number sampling circuit 56 in use of the termination lottery table 51B (see Fig. 11) of the probability change mode. And if the random number is "9", one of the termination conditions in S567 is satisfied.

Next, it is determined whether or not any one of the termination conditions to terminate the probability change mode is satisfied (S767). In the slot machine 1 of the first embodiment, as the termination conditions mentioned in the above, there are set cases: (1) if three symbols "SARDINE" are stopped and displayed during the probability change mode at the same time with no relation to the activated pay lines; (2) if five symbols "WILD" are stopped on the pay line; (3) if the game is started with the MAX bet (the state that all of twenty-five pay lines are activated and the bet number is set to 8 for each of the activated pay lines) and five symbols "LOBSTER" are successively stopped and displayed on the activated pay line through the variable display portions 21 to 25; (4) if any of the winning symbol combinations shown in Fig. 12 is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10: 45), 13 o'clock and 15 minutes (13: 15) and 21 o'clock and 45 minutes (21: 45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits. And if such termination condition is satisfied, the probability change mode is terminated in such game.

Concretely, the termination conditions of (1) ~ (3) are determined based on the winning symbol combination determined in S22 or S43. And the termination conditions of (4)~(8) are determined based on the count value stored in each of the winning symbol counter 52A of the RAM 52, the total credit counter 52B, the credit counter 52C, the total game number counter 52D and the game number counter 52E. And the termination conditions of (9)~(10) are determined based on the measured value of the timer 87 connected to the CPU 50. And the termination condition of (11) is determined based on the termination lottery result of the probability change mode in S65. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that any one of the termination conditions is satisfied (S767: YES), the probability change mode is terminated (S768). After the probability change mode is terminated, the reel strip to display the symbols on the variable display portion 21 is changed form the sixth reel strip 106 to the first reel strip 101 and the symbols of the variable display portions 21 to 25 are variably moved, stopped and displayed by utilizing the first reel strip 101 - the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S769). Thereby, it can be notified to the player that the probability change mode is terminated. Thereafter, the probability change mode changing process is terminated.

On the other hand, if it is determined that any one of the termination conditions is not satisfied (S767: NO), the probability change mode is continued and the probability change mode changing process is terminated.

As mentioned, in the slot machine 1 of the tenth embodiment, during the base game or the bonus game, in a case that the payout rate of the slot machine at present becomes less than 85% (S763: YES), the first reel strip 101 variably moving, stopping and displaying the symbols on the variable display portion 21 is changed to the sixth reel strip 106 in which more the symbol "WILD" and the symbol "SARDINE" are included, till any one of the termination conditions is satisfied from the next game, thereby the game state shifts to the probability change mode in which the probability to win the winning symbol combination increases in comparison with the normal mode (S764). Therefore, the game state can be variously changed at the timing that the player cannot predict during the game and a wave in the payout of the game media can be produced. Thus, the game state of the slot machine 1 can be variegated and the player never loses interest for games. And by shifting the game state to the probability change mode for the player who is a beginner having a lower payout rate, the game arcade can get repeaters, thereby such game arcade can collect many customers.

And after the game state shifts to the probability change mode, the characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S765). Thereby, the player can acknowledge during the game that the probability change mode is realized, thus expectation for games can be raised. And in the probability change mode, strategy for games to increase the bet number and the like can be improved.

Further, after the probability change mode is terminated, the characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S769). Thereby, it can be notified to the player that the probability change mode is terminated. Therefore, the player can acknowledge that the probability change mode is terminated, thus after the probability change mode is terminated, strategy for games to reduce the bet number and the like can be improved.

### (Eleventh Embodiment)

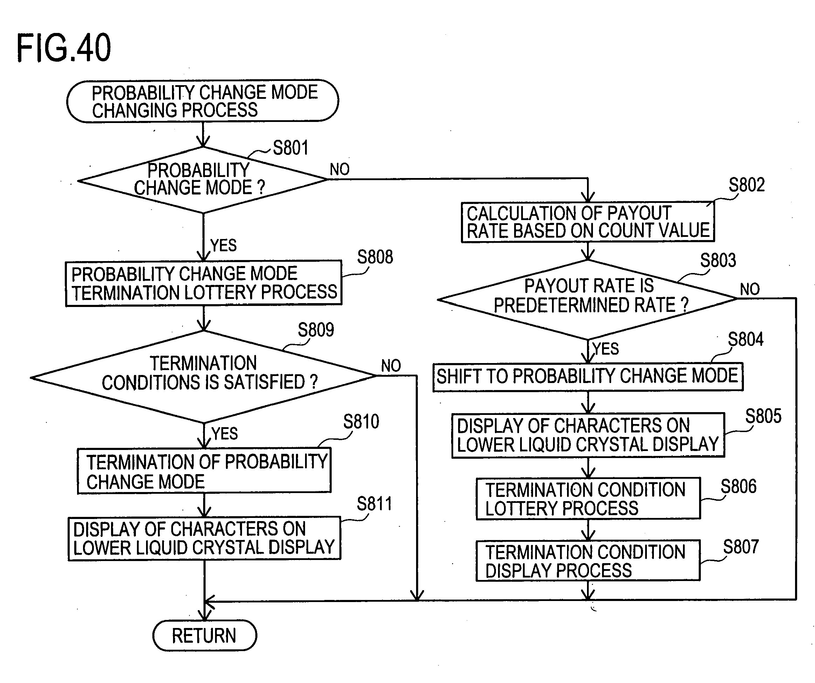

Next, the slot machine according to the eleventh embodiment will be described with reference to Fig. 40. Here, in explanation mentioned hereinafter, the same signs used in the slot machine 1 of the tenth embodiment described on the basis of Fig. 39 indicate the constructive elements which are same as those or correspond to those in the slot machine 1 of the tenth embodiment.

The outline construction of the slot machine according to the eleventh embodiment is substantially as same as that of the slot machine 1 in the tenth embodiment. And various control processes in the eleventh embodiment are substantially as same as those in the slot machine 1 of the tenth embodiment.

However, the slot machine in the eleventh embodiment is different from the slot machine in the tenth embodiment in following points. That is, in the slot machine of the tenth embodiment, thirteen kinds of conditions are set as the termination condition of the probability change mode and when any one of such conditions is satisfied, the probability change mode at present is terminated. On the contrary, in the slot machine of the eleventh embodiment, one condition is selected among thirteen termination conditions and the probability change mode is terminated by utilizing the selected termination condition.

Next, the probability change mode changing process executed in the slot machine of the eleventh embodiment will be described with reference to Fig. 40. Fig. 40 is a flowchart of the probability change mode changing process program in the slot machine of the eleventh embodiment. Here, program shown by the flowchart in Fig. 40 is stored in the ROM 51 or the RAM 52 provided in the slot machine of the eleventh embodiment and is executed by the CPU 50.

In the probability change mode changing process, at first, the CPU 50 determines in S801 whether or not the slot machine at present is in the probability change mode. Here, the slot machine has two gaming states of the base game and the bonus game as mentioned, and in addition, each of the base game and the bonus game has two game modes of the probability change mode and the normal mode (the game state (including the base game and the bonus game) other than the probability change mode). And if a predetermined condition is satisfied, each mode is mutually changed.

And if it is determined that the slot machine is not in the probability change mode at present (S801: NO), the count values stored in the total credit counter 52B and the bet credit counter 52G of the RAM 52 are obtained and the payout rate (rate of credits paid out against the credit number betted by the player) of the slot machine at present is calculated based on two count values (S802). Here, the payout rate is calculated according to "the count value of the total credit counter 52B ÷the count value of the bet credit counter 52G".

Thereafter, the CPU 50 determines whether or not the payout rate calculated is the predetermined rate (S803). Here, in the slot machine of the eleventh embodiment, the game state shifts to the probability change mode when the payout rate of the slot machine becomes less than 85%.

Therefore, the CPU 50 determines whether or not the payout rate calculated in S802 becomes less than 85%.

And if it is determined that the payout rate obtained becomes 85% (S803: YES), the game state shifts to the probability change mode in S804. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the payout rate obtained is not less than 85% (S803: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S805). Thereby, it can be notified to the player that the probability change mode is realized.

Next, in S806, the termination condition lottery process to conduct a lottery of the termination condition is executed. In the slot machine according to the eleventh embodiment, there are set beforehand 13 kinds of the termination conditions as the conditions to terminate the probability change mode. Concretely, such conditions are: (1) if three symbols "SARDINE" are stopped and displayed during the probability change mode at the same time with no relation to the activated pay lines; (2) if five symbols "WILD" are stopped on the pay line; (3) if the JP is won; (4) if any of the winning symbol combinations is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10: 45), 13 o'clock and 15 minutes (13: 15) and 21 o'clock and 45 minutes (21: 45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits.

And in the slot machine of the eleventh embodiment, one condition is selected among the above 13 termination conditions set in the above and such selected termination condition is made as the termination condition to terminate the probability change mode.

In a termination condition display process, a lottery is executed based on random numbers "0"~"12" sampled through the random number sampling circuit 56 by utilizing a termination condition lottery table 51F shown in Fig. 28. Fig. 28 is an explanatory view showing a termination condition lottery table utilized in the termination condition lottery process.

As shown in Fig. 28, the termination condition lottery table 51F is a lottery table to conduct a lottery of the termination condition based on the random numbers "0"~"12"b sampled through the random number sampling circuit 56 when the game state shifts to the probability change mode. And the termination condition to terminate the probability change mode is determined based on the obtained random number by the CPU 50.

Concretely, if the random number is "0", the termination condition is set to the condition that (1) three symbols "SARDINE" are stopped and displayed during the probability change mode at the same time with no relation to the activated pay lines. If the random number is "1", the termination condition is set to the condition that (2) five symbols "WILD" are stopped on the pay line. If the random number is "2", the termination condition is set to the condition that (3) the JP is won. If the random number is "3", the termination condition is set to the condition that (4) any of the winning symbol combinations is won in fifteen times after the game state shifts to the probability change mode. If the random number is "4", the termination condition is set to the condition that (5) coins obtained by the player from start of the game become more than 10,000 coins (if the obtained credits of the player exceed 10,000 credits). If the random number is "5", the termination condition is set to the condition that (6) coins obtained by the player exceed 1,000 coins after the game state shifts to the probability change mode (if the obtained credits exceed 1,000 credits). If the random number is "6", the termination condition is set to the condition that (7) the game number done by the player from start of the game exceeds 500 games. If the random number is "7", the termination condition is set to the condition that (8) the game number exceeds 20 games after the game state shifts to the probability change mode. If the random number is "8", the termination condition is set to the condition that (9) the present time becomes any of 10 o'clock and 45 minutes (10:45), 13 o'clock and 15 minutes (13:15) and 21 o'clock and 45 minutes (21:45). If the random number is "9", the termination condition is set to the condition that (10) three minutes elapse after the game state shifts to the probability change mode. If the random number is "10", the termination condition is set to the condition that (11) termination of the probability change mode is determined in the lottery done every one game. If the random number is "11", the termination condition is set to the condition that (12) the payout rate exceeds 90%. And If the random number is "12", the termination condition is set to the condition that (13) the present credit number displayed in the JP sum display portion 11 exceeds 100,000 credits.

And after the lottery of the termination condition is executed, the termination condition selected based on the lottery result is displayed on the display area other than the variable display portions 21 to 25 and the JP sum display portion 11 on the lower liquid crystal display 4 (S807). Fig. 29 is a front view showing the lower liquid crystal display 4 on which the termination condition is displayed.

In Fig. 29, it is displayed a case that the termination condition becomes the condition that (8) the game number exceeds 20 games after the game state shifts to the probability change mode in the termination condition lottery process of S606. As shown in Fig. 29, based on that characters 92 showing the termination condition displayed on the lower liquid crystal display 4 are displayed, the termination condition during the game can be notified to the player. Therefore, the player conducting the game can acknowledge that the probability change mode is terminated based on which condition.

On the other hand, if the game state at present is in the probability change mode (S801: YES), a termination lottery process of the probability change mode, which is one of the termination conditions of the probability change mode, is conducted (S808). The termination lottery process of the probability change mode is executed by conducting a lottery based on the random numbers of "0" - "9" sampled through the random number sampling circuit 56 in use of the termination lottery table 51B (see Fig. 11) of the probability change mode. And if the random number is "9", one of the termination conditions in S809 is satisfied.

Next, it is determined whether or not one termination condition selected in S406 is satisfied among the conditions (1)~(13) (S809). Concretely, the termination conditions of (1)~(3) are determined based on the winning symbol combination determined in S22 or S43. And the termination conditions of (4)-(8) are determined based on the count value stored in each of the winning symbol counter 52A of the RAM 52, the total credit counter 52B, the credit counter 52C, the total game number counter 52D and the game number counter 52E. And the termination conditions of (9)~(10) are determined based on the measured value of the timer 87 connected to the CPU 50. And the termination condition of (11) is determined based on the termination lottery result of the probability change mode in S107. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that the selected termination condition is satisfied (S809: YES), the probability change mode is terminated (S810). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101 ~ the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S811). Thereby, it can be notified to the player that the probability change mode is terminated. Thereafter, the probability change mode changing process is terminated.

On the other hand, if it is determined that the selected termination condition is not satisfied (S809: NO), the probability change mode is continued and the probability change mode changing process is terminated.

As mentioned in the above, in the slot machine 1 according to the eleventh embodiment, during the base game or the bonus game, in a case that the payout rate of the slot machine at present becomes less than 85% (S803: YES), the first reel strip 101 variably moving, stopping and displaying the symbols on the variable display portion 21 is changed to the sixth reel strip in which more the symbol "WILD" and the symbol "SARDINE" are included, till the termination condition determined by the lottery (S805) is satisfied from the next game, thereby the game state shifts to the probability change mode in which the probability to win the winning symbol combination increases in comparison with the normal mode (S804). Therefore, the game state can be variously changed at the timing that the player cannot predict during the game and a wave in the payout of the game media can be produced. Thus, the game state of the slot machine 1 can be variegated and the player never loses interest for games. And by shifting the game state to the probability change mode for the player who is a beginner having a lower payout rate, the game arcade can get repeaters, thereby such game arcade can collect many customers.

Further, since the termination condition to terminate the probability change mode is changed according to the lottery which is conducted every time the game state shifts to the probability change mode (S805), a game pattern is increased and game characteristic is improved. And since the termination condition is displayed on the lower liquid crystal display 4 (S806), the player conducting the game can acknowledge that the probability change mode is terminated and intention of the player is increased. Further, strategy for games is improved.

### (Twelfth Embodiment)

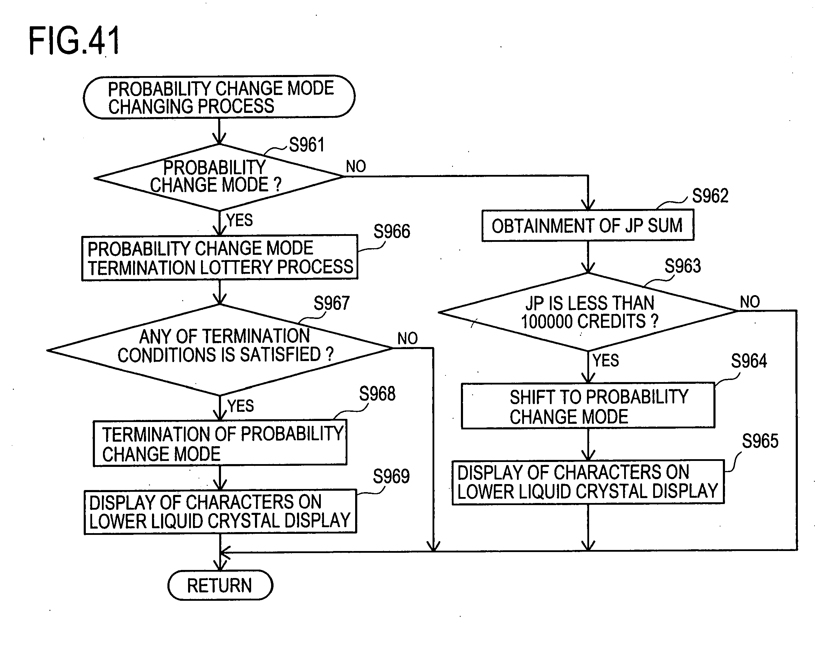

Next, the slot machine according to the twelfth embodiment will be described with reference to Fig. 41. Here, in the explanation mentioned later, the same signs used in the slot machine 1 of the first embodiment described on the basis of Figs. 1 to 22 indicate the constructive elements which are same as those or correspond to those in the slot machine 1 of the twelfth embodiment.

The outline construction of the slot machine according to the twelfth embodiment is substantially as same as that of the slot machine 1 in the first embodiment. And various control processes in the twelfth embodiment are substantially as same as those in the slot machine 1 of the first embodiment.

However, the slot machine in the twelfth embodiment is different from the slot machine 1 in the first embodiment in the following point. That is, in the slot machine 1 of the first embodiment, if a predetermined condition (one of the conditions that three of the symbol "SARDINE" are stopped and displayed at the same time, five of the symbol "WILD" are stopped on the pay line and the JP is won, with no relation to the pay lines) is realized, the game state shifts to the probability change mode in which the probability to win the winning combination (see Fig. 12) becomes higher than the normal mode. On the contrary, in the slot machine of the twelfth embodiment, if the credit number of the JP (Jack Pot) that 10% of the credit number betted by operation of 20 slot machines including the slot machine of the twelfth embodiment is accumulated, is less than 100000 credits, the game state shifts to the probability change mode in which the probability that the winning symbol combination is stopped so as to align on the pay line increases. Here, although the credit number of the JP is accumulatively added by repeating betting operation, when anyone among the players playing with 20 slot machines wins the JP, the credits corresponding to the credit number accumulated in the present JP are paid out together. At that time, the sum of the JP is reset to "0" and is again accumulatively added.

And the sum of the present JP is stored in the JP sum storing area 52F of the RAM 52 and is displayed in the JP sum display portion 11.

In order to realize the above, in the slot machine of the twelfth embodiment, during the base game and the bonus game, the game state shifts to the probability change mode if a predetermined condition is satisfied. Here, the probability change mode is a special game mode to which the game state is shifted, in a case that the credit number accumulated as the JP is less than 100000 credits. The credit number of the JP corresponds to the credit number obtained by accumulating 10% of the credit number betted in 20 slot machines till any one of the players playing with 20 slot machines including the slot machine of the twelfth embodiment wins the JP. The present credit number of the JP is stored in the JP sum storing area 52F of the RAM 52.

And if the CPU 50 determines that the JP sum read out from the JP sum storing area 52F is less than 100000 credits, the game state shifts to the probability change mode that the probability to win the winning symbol combination (see Fig. 12) becomes higher than in the normal mode till a predetermined termination condition is satisfied from the next game (here, one game means a time till variable display of the symbols is started on each of the variable display portions 21 to 25, thereafter the symbols are stopped and displayed thereon).

Next, the probability change mode changing process done in S35 and S50 will be described with reference to Fig. 41. Fig. 41 is a flowchart of the probability change mode changing process in the slot machine according to the twelfth embodiment.

In the probability change mode changing process, at first, the CPU 50 determines in S961 whether or not the slot machine 1 at present is in the probability change mode. Here, the slot machine 1 has two gaming states of the base game and the bonus game, and in addition, each of the base game and the bonus game has two game modes of the probability change mode and the normal mode (the game state (including the base game and the bonus game) other than the probability change mode. And if a predetermined condition is satisfied, each mode is mutually changed.

If the slot machine 1 is not in the probability change mode at present (S961: NO), the credit number of the present JP stored in the JP sum storing area 52F of the RAM 52 is obtained (S962). The JP sum is accumulatively added every game in the JP and the bet number addition process in S14 corresponding to the credit number betted in S13.

Thereafter, the CPU 50 determines whether or not the JP sum obtained is less than 100000 credits (S963). And if it is determined that the JP sum is less than 100000 credits (S963: YES), the game state shifts to the probability change mode in S964. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the JP sum obtained is not less than 100000 credits (S963: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S965). Thereby, it can be notified to the player that the probability change mode is realized. Thereafter, the probability change mode changing process is terminated.

On the other hand, if the game state at present is in the probability change mode (S961: YES), a termination lottery process of the probability change mode, which is one of the termination conditions of the probability change mode, is conducted (S966). The termination lottery process of the probability change mode is executed by conducting a lottery based on the random numbers of "0" - "9" sampled through the random number sampling circuit 56 in use of the termination lottery table 51B (see Fig. 11) of the probability change mode. And if the random number is "9", one of the termination conditions in S967 is satisfied.

Next, it is determined whether or not any one of the termination conditions to terminate the probability change mode is satisfied (S967). In the slot machine 1 of the first embodiment, as the termination conditions mentioned in the above, there are set cases: (1) if three symbols "SARDINE" are stopped and displayed during the probability change mode at the same time with no relation to the activated pay lines; (2) if five symbols "WILD" are stopped on the pay line; (3) if the game is started with the MAX bet (the state that all of twenty-five pay lines are activated and the bet number is set to 8 for each of the activated pay lines) and five symbols "LOBSTER" are successively stopped and displayed on the activated pay line through the variable display portions 21 to 25; (4) if any of the winning symbol combinations shown in Fig. 12 is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10: 45), 13 o'clock and 15 minutes (13: 15) and 21 o'clock and 45 minutes (21: 45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits. And if such termination condition is satisfied, the probability change mode is terminated in such game.

Concretely, the termination conditions of (1)~(3) are determined based on the winning symbol combination determined in S22 or S43. And the termination conditions of (4)~(8) are determined based on the count value stored in each of the winning symbol counter 52A of the RAM 52, the total credit counter 52B, the credit counter 52C, the total game number counter 52D and the game number counter 52E. And the termination conditions of (9)~(10) are determined based on the measured value of the timer 87 connected to the CPU 50. And the termination condition of (11) is determined based on the termination lottery result of the probability change mode in S65. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that any one of the termination conditions is satisfied (S967: YES), the probability change mode is terminated (S968). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101 - the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S969). Thereby, it can be notified to the player that the probability change mode is terminated. Thereafter, the probability change mode changing process is terminated.

On the other hand, if it is determined that any one of the termination conditions is not satisfied (S967: NO), the probability change mode is continued and the probability change mode changing process is terminated.

As mentioned, in the slot machine 1 of the twelfth embodiment, during the base game or the bonus game, in a case that the JP sum of the slot machine at present is less than 100000 credits (S963: YES), the first reel strip 101 variably moving, stopping and displaying the symbols on the variable display portion 21 is changed to the sixth reel strip 106 in which more the symbol "WILD" and the symbol "SARDINE" are included, till any one of the termination conditions is satisfied from the next game, thereby the game state shifts to the probability change mode in which the probability to win the winning symbol combination increases in comparison with the normal mode (S964). Therefore, the game state can be variously changed at the timing that the player cannot predict during the game and a wave in the payout of the game media can be produced. Thus, the game state of the slot machine 1 can be variegated and the player never loses interest for games. And by shifting the game state to the probability change mode for the player who is a beginner having a lower payout rate, the game arcade can get repeaters, thereby such game arcade can collect many customers.

And after the game state shifts to the probability change mode, the characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S965). Thereby, the player can acknowledge during the game that the probability change mode is realized, thus expectation for games can be raised. And in the probability change mode, strategy for games to increase the bet number and the like can be improved.

Further, after the probability change mode is terminated, the characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S969). Thereby, it can be notified to the player that the probability change mode is terminated. Therefore, the player can acknowledge that the probability change mode is terminated, thus after the probability change mode is terminated, strategy for games to reduce the bet number and the like can be improved.

### (Thirteenth Embodiment)

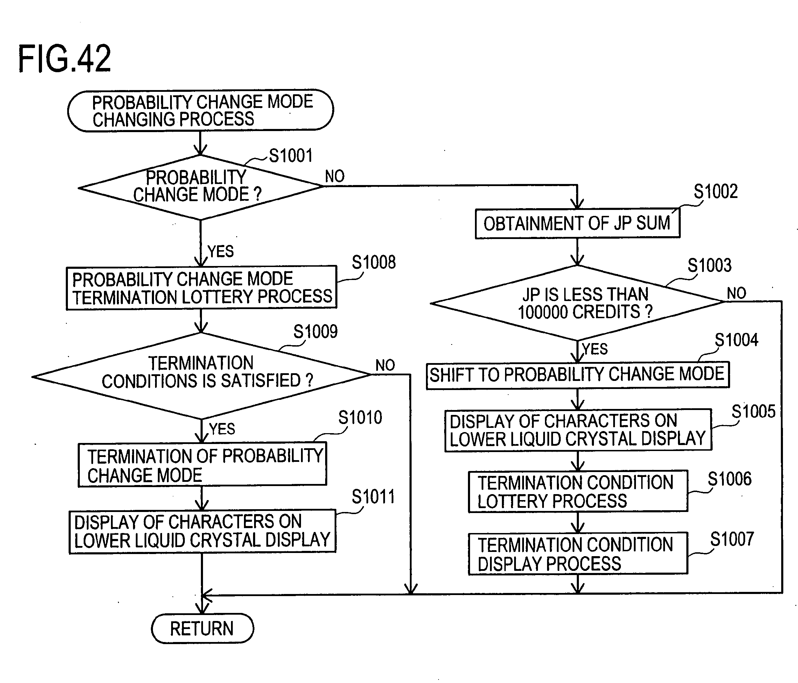

Next, the slot machine according to the thirteenth embodiment will be described with reference to Fig. 42. Here, in explanation mentioned hereinafter, the same signs used in the slot machine 1 of the twelfth embodiment described on the basis of Fig. 41 indicate the constructive elements which are same as those or correspond to those in the slot machine 1 of the twelfth embodiment.

The outline construction of the slot machine according to the thirteenth embodiment is substantially as same as that of the slot machine 1 in the twelfth embodiment. And various control processes in the eleventh embodiment are substantially as same as those in the slot machine 1 of the twelfth embodiment.

However, the slot machine in the thirteen embodiment is different from the slot machine in the twelfth embodiment in following points. That is, in the slot machine of the twelfth embodiment, thirteen kinds of conditions are set as the termination condition of the probability change mode and when any one of such conditions is satisfied, the probability change mode at present is terminated. On the contrary, in the slot machine of the thirteenth embodiment, one condition is selected among thirteen termination conditions and the probability change mode is terminated by utilizing the selected termination condition.

Next, the probability change mode changing process executed in the slot machine of the thirteenth embodiment will be described with reference to Fig. 42. Fig. 42 is a flowchart of the probability change mode changing process program in the slot machine of the thirteenth embodiment. Here, program shown by the flowchart in Fig. 42 is stored in the ROM 51 or the RAM 52 provided in the slot machine of the thirteenth embodiment and is executed by the CPU 50.

In the probability change mode changing process, at first, the CPU 50 determines in S1001 whether or not the slot machine at present is in the probability change mode. Here, the slot machine has two gaming states of the base game and the bonus game as mentioned, and in addition, each of the base game and the bonus game has two game modes of the probability change mode and the normal mode (the game state (including the base game and the bonus game) other than the probability change mode). And if a predetermined condition is satisfied, each mode is mutually changed.

And if it is determined that the slot machine is not in the probability change mode at present (S1101: NO), the credit number of the present JP stored in the JP sum storing area 52F of the RAM 52 is obtained (S1102). The JP sum is accumulatively added every game in the JP and the bet number addition process in S14 corresponding to the credit number betted in S13.

Thereafter, the CPU 50 determines whether or not the JP sum obtained is less than 100000 credits (S1103). And if it is determined that the JP sum is less than 100000 credits (S1103: YES), the game state shifts to the probability change mode in S1104. If the game state shifts to the probability change mode, the reel strip displaying the symbols on the variable display portions 21 is changed from the first reel strip 101 to the sixth reel strip 106 (see Fig. 13), and the symbols are variably moved, stopped and displayed on the variable display portions 21 to 25 by utilizing the second reel strip 102 - the sixth reel strip 106 from the next game. Here, in the sixth reel strip 106, the symbol "WILD" and "SARDINE" are more included as shown in Fig. 14, in comparison with the first reel strip 101, thereby the probability to win the winning symbol combination shown in Fig. 12 increases. Therefore, based on that the game state shifts to the probability change mode, the player can obtain more payout than that in the normal mode, with the same bet number (payout rate increases).

On the other hand, if it is determined that the JP sum is not less than 100000 credits (S1103: NO), the probability change mode changing process is terminated.

Further, after the game state shifts to the probability change mode, as shown in Fig. 21, characters 90 showing "PROBABILITY CHANGE MODE IS REALIZED!!" are displayed for 5 seconds on the display area of the lower liquid crystal display 4 other than the variable display portions 21 to 25 and the JP sum display portion 11 (S1105). Thereby, it can be notified to the player that the probability change mode is realized.

Next, in S1106, the termination condition lottery process to conduct a lottery of the termination condition is executed. In the slot machine according to the thirteenth embodiment, there are set beforehand 13 kinds of the termination conditions as the conditions to terminate the probability change mode. Concretely, such conditions are: (1) if three symbols "SARDINE" are stopped and displayed during the probability change mode at the same time with no relation to the activated pay lines; (2) if five symbols "WILD" are stopped on the pay line; (3) if the JP is won; (4) if any of the winning symbol combinations is won in fifteen times after the game state shifts to the probability change mode; (5) if coins obtained by the player from start of the game become more than 10,000 coins (if the obtained credits of the player exceed 10,000 credits); (6) if coins obtained by the player exceed 1,000 coins after the game state shifts to the probability change mode (if the obtained credits exceed 1,000 credits); (7) if the game number done by the player from start of the game exceeds 500 games; (8) if the game number exceeds 20 games after the game state shifts to the probability change mode; (9) if the present time becomes any of 10 o'clock and 45 minutes (10 : 45), 13 o'clock and 15 minutes (13 : 15) and 21 o'clock and 45 minutes (21 : 45); (10) if three minutes elapse after the game state shifts to the probability change mode; (11) if termination of the probability change mode is determined in the lottery done every one game; (12) if the payout rate exceeds 90% and (13) if the present credit number displayed in the JP sum display portion 11 exceeds 100,000 credits.

And in the slot machine of the thirteenth embodiment, one condition is selected among the above 13 termination conditions set in the above and such selected termination condition is made as the termination condition to terminate the probability change mode.

In a termination condition display process, a lottery is executed based on random numbers "0" - "12" sampled through the random number sampling circuit 56 by utilizing a termination condition lottery table 51F shown in Fig. 28. Fig. 28 is an explanatory view showing a termination condition lottery table utilized in the termination condition lottery process.

As shown in Fig. 28, the termination condition lottery table 51F is a lottery table to conduct a lottery of the termination condition based on the random numbers "0" ~ "12"b sampled through the random number sampling circuit 56 when the game state shifts to the probability change mode. And the termination condition to terminate the probability change mode is determined based on the obtained random number by the CPU 50.

Concretely, if the random number is "0", the termination condition is set to the condition that (1) three symbols "SARDINE" are stopped and displayed during the probability change mode at the same time with no relation to the activated pay lines. If the random number is "1", the termination condition is set to the condition that (2) five symbols "WILD" are stopped on the pay line. If the random number is "2", the termination condition is set to the condition that (3) the JP is won. If the random number is "3", the termination condition is set to the condition that (4) any of the winning symbol combinations is won in fifteen times after the game state shifts to the probability change mode. If the random number is "4", the termination condition is set to the condition that (5) coins obtained by the player from start of the game become more than 10,000 coins (if the obtained credits of the player exceed 10,000 credits). If the random number is "5", the termination condition is set to the condition that (6) coins obtained by the player exceed 1,000 coins after the game state shifts to the probability change mode (if the obtained credits exceed 1,000 credits). If the random number is "6", the termination condition is set to the condition that (7) the game number done by the player from start of the game exceeds 500 games. If the random number is "7", the termination condition is set to the condition that (8) the game number exceeds 20 games after the game state shifts to the probability change mode. If the random number is "8", the termination condition is set to the condition that (9) the present time becomes any of 10 o'clock and 45 minutes (10: 45), 13 o'clock and 15 minutes (13: 15) and 21 o'clock and 45 minutes (21: 45). If the random number is "9", the termination condition is set to the condition that (10) three minutes elapse after the game state shifts to the probability change mode. If the random number is "10", the termination condition is set to the condition that (11) termination of the probability change mode is determined in the lottery done every one game. If the random number is "11", the termination condition is set to the condition that (12) the payout rate exceeds 90%. And If the random number is "12", the termination condition is set to the condition that (13) the present credit number displayed in the JP sum display portion 11 exceeds 100,000 credits.

And after the lottery of the termination condition is executed, the termination condition selected based on the lottery result is displayed on the display area other than the variable display portions 21 to 25 and the JP sum display portion 11 on the lower liquid crystal display 4 (S1107). Fig. 29 is a front view showing the lower liquid crystal display 4 on which the termination condition is displayed.

In Fig. 29, it is displayed a case that the termination condition becomes the condition that (8) the game number exceeds 20 games after the game state shifts to the probability change mode in the termination condition lottery process of S1106. As shown in Fig. 29, based on that characters 92 showing the termination condition displayed on the lower liquid crystal display 4 are displayed, the termination condition during the game can be notified to the player. Therefore, the player conducting the game can acknowledge that the probability change mode is terminated based on which condition.

On the other hand, if the game state at present is in the probability change mode (S1101: YES), a termination lottery process of the probability change mode, which is one of the termination conditions of the probability change mode, is conducted (S1108). The termination lottery process of the probability change mode is executed by conducting a lottery based on the random numbers of "0"∼"9" sampled through the random number sampling circuit 56 in use of the termination lottery table 51B (see Fig. 11) of the probability change mode. And if the random number is "9", one of the termination conditions in S1109 is satisfied.

Next, it is determined whether or not one termination condition selected in S1106 is satisfied among the conditions (1) ~ (13) (S1109). Concretely, the termination conditions of (1) ~ (3) are determined based on the winning symbol combination determined in S22 or S43. And the termination conditions of (4) - (8) are determined based on the count value stored in each of the winning symbol counter 52A of the RAM 52, the total credit counter 52B, the credit counter 52C, the total game number counter 52D and the game number counter 52E. And the termination conditions of (9) - (10) are determined based on the measured value of the timer 87 connected to the CPU 50. And the termination condition of (11) is determined based on the termination lottery result of the probability change mode in S107. And the termination condition (12) is determined based on the payout rate calculated according to the total credit counter 52B and the bet credit counter 52G. Further, the termination condition (13) is determined based on the JP sum stored in the JP sum storing area 52F of the RAM 52.

If it is determined by the CPU 50 that the selected termination condition is satisfied (S1109: YES), the probability change mode is terminated (S1110). After the probability change mode is terminated, the reel strip to display the symbols on the variable display portion 21 is changed from the sixth reel strip 106 to the first reel strip 101 and the symbols of the variable display portions 21 to 25 are variably moved, stopped and displayed by utilizing the first reel strip 101 - the fifth reel strip 105 from the next game.

Further, after the probability change mode is terminated, as shown in Fig. 22, characters 91 showing "PROBABILITY CHANGE MODE IS TERMINATED!!" are displayed for 5 seconds on the display area of the lower liquid crystal display 4 other than the variable display portions 21 to 25 and the JP sum display portion 11 (S1111). Thereby, it can be notified to the player that the probability change mode is terminated. Thereafter, the probability change mode changing process is terminated.

On the other hand, if it is determined that the selected termination condition is not satisfied (S1109: NO), the probability change mode is continued and the probability change mode changing process is terminated.

As mentioned in the above, in the slot machine 1 according to the eleventh embodiment, during the base game or the bonus game, in a case that the JP sum of the slot machine at present is less than 100000 credits (S1103: YES), the first reel strip 101 variably moving, stopping and displaying the symbols on the variable display portion 21 is changed to the sixth reel strip 106 in which more the symbol "WILD" and the symbol "SARDINE" are included, till the termination condition determined by the lottery (S805) is satisfied from the next game, thereby the game state shifts to the probability change mode in which the probability to win the winning symbol combination increases in comparison with the normal mode (S804). Therefore, the game state can be variously changed at the timing that the player cannot predict during the game and a wave in the payout of the game media can be produced. Thus, the game state of the slot machine 1 can be variegated and the player never loses interest for games.

Further, since the termination condition to terminate the probability change mode is changed according to the lottery which is conducted every time the game state shifts to the probability change mode (S1105), a game pattern is increased and game characteristic is improved. And since the termination condition is displayed on the lower liquid crystal display 4 (S1106), the player conducting the game can acknowledge that the probability change mode is terminated and intention of the player is increased. Further, strategy for games is improved.

Here, the present invention is not limited to the above embodiments and various improvements and modifications can be done within the scope of the present invention.

For example, although, in the first to the thirteenth embodiments, the game state shifts to the probability change mode by satisfying the start condition thereof in both the base game and the bonus game, the game state may shift to the probability change mode by satisfying the start condition thereof in only the base game or in only the bonus game.

And as for the termination condition (1), although it is required that three symbols "SARDINE", each of which is the scatter symbol, are stopped and displayed at the same time, such termination condition (1) may be satisfied in a case that three other symbols (for example, the symbol "FISH") are stopped and displayed at the same time.

And it may be conceivable that it is provided an operation device to change the start condition and the termination condition and such conditions can be changed by the operation device at the game arcade side For example, although, in the first to the third embodiments, it becomes one of the termination conditions that any of the winning symbol combinations is won in 15 times after the game state shifts to the probability change mode, it may be conceivable that the termination condition can be changed to the condition that any of the winning symbol combinations is won in 20 times after the game state shifts to the probability change mode.

And although, in the first to the thirteenth embodiments, when the terminations condition is satisfied the probability change mode at present is certainly terminated, it may be conceivable that the lottery is further conducted when the termination condition is satisfied and it is selected whether the probability change mode is continued or terminated based on the lottery result.

And although, in the third, fifth, seventh, ninth, eleventh and thirteenth embodiments, similar to the first embodiment, the probability to win the winning symbol combination is increased by changing the first reel strip 101 to the sixth reel strip 106, both reel strips displaying the symbols on the variable display portion 21, when the game state shifts to the probability change mode, it may be conceivable that the probability to win the winning symbol combination is increased by changing the lottery table utilized for the lottery of the winning symbol combination based on the random number value, similar to the second embodiment.

In the slot machine 1 of the second embodiment, in a case that the symbol combination stopped and displayed through the variable display portions 21 to 25 becomes three symbols "SARDINE" which are stopped and displayed at the same time with no relation to the activated pay lines in the base game or the bonus game, or in a case that five symbols "WILD" are stopped and displayed on the activated pay line, or in a case that the JP is won (S62: YES), the winning symbol combination lottery table utilized for lottery of the winning symbol combination in the winning symbol combination lottery process is changed from the winning symbol combination lottery table 51D for the normal mode to the winning symbol combination lottery table 51E for the probability change mode, thereby the game state shifts to the probability change mode in which the probability to win the winning symbol combination increases in comparison with the normal mode (S63).

However, the second embodiment may be modified as follows. That is, based on the same condition in the fourth embodiment, in a case that any of the winning symbol combination is won in 30 times, or in a case that the number of coins obtained by the player from start of the game exceeds 1000 coins or 5000 coins or in a case that the number of games conducted by the player exceeds 100 games or 300 games (S163: YES), the winning symbol combination lottery table utilized for lottery of the winning symbol combination in the winning symbol combination lottery process may be changed from the winning symbol combination lottery table 51D for the normal mode to the winning symbol combination lottery table 51E for the probability change mode.

And based on the same condition in the sixth embodiment, in a case that the present time becomes any one of 9 o'clock, 12 o'clock and 21 o'clock (S363: YES), the winning symbol combination lottery table utilized for lottery of the winning symbol combination in the winning symbol combination lottery process may be changed from the winning symbol combination lottery table 51D for the normal mode to the winning symbol combination lottery table 51E for the probability change mode.

Further, based on the same condition in the eighth embodiment, it is conducted the lottery to determine whether or not the game state shifts to the probability change mode (S562) and as the lottery result, it is determined that the game state is shifted to the probability change mode (S563: YES), thereby the winning symbol combination lottery table utilized for lottery of the winning symbol combination in the winning symbol combination lottery process may be changed from the winning symbol combination lottery table 51D for the normal mode to the winning symbol combination lottery table 51E for the probability change mode.

And based on the same condition in the tenth embodiment, in a case that the payout rate of the slot machine at present becomes less than 85% (S763: YES), the winning symbol combination lottery table utilized for lottery of the winning symbol combination in the winning symbol combination lottery process may be changed from the winning symbol combination lottery table 51D for the normal mode to the winning symbol combination lottery table 51E for the probability change mode.

Further, based on the same condition in the twelfth embodiment, in a case that the JP sum of the slot machine at present is less than 100000 credits (S963: YES), the winning symbol combination lottery table utilized for lottery of the winning symbol combination in the winning symbol combination lottery process may be changed from the winning symbol combination lottery table 51D for the normal mode to the winning symbol combination lottery table 51E for the probability change mode.

For example, within the slot machine 1 according to the fourth and fifth embodiments, although it is provided the count device for counting the game number according to which the player conducts games, the credit number paid out, the winning number of times to win the winning symbol combination, respectively, such count device may be provided out of the slot machine. Hereinafter, it will be described a modification in which the count device is provided out of the slot machine.

In the modification in which the count device is provided out of the slot machine 1, a plurality of slot machines 1 installed the game arcade are connected to a server through a network. And each slot machine 1 is constructed so as to transmit and receive various information between the server through the network.

Here, the server controls plural slot machines installed in the game arcade and a specific discriminative number is respectively given to each of the slot machines 1, thereby the server judges a release source of data transmitted from each of the slot machines 1 based on the specific discriminative number. And in a case that data are transmitted form the server to the slot machine 1, the slot machine 1 to which data are transmitted is directed by the specific discriminative number.

And the CPU 50 of the slot machine 1 transmits to the server through the interface circuit provided in the slot machine 1 a signal indicating that the game is started in the slot machine 1 when the game is started. And if it is determined that the symbols stopped and displayed corresponds to any of the winning symbol combination, a signal indicating that the winning symbol combination is won is transmitted to the server through the interface circuit provided in the slot machine 1. Further, if the credit is paid out according to that the winning symbol combination is won, a signal indicating the credit number paid out is transmitted to the server through the interface circuit provided in the slot machine 1.

And among signals transmitted form the slot machine 1, a direct signal to direct the slot machine 1, that is, data indicating which slot machine 1 among plural slot machines 1 controlled by the server are attached to the signal. For example, in a case that the specific discriminative number "005" is allotted to the slot machine 1 among plural slot machines 1 controlled by the server and the signal indicating that the game is started is "1", the signal such as "005-1" is transmitted to the server when the game is started in the slot machine 1.

On the other hand, based on the signal transmitted from the slot machine 1, the server stores the game number of times, the winning number of times of the winning symbol combination and the credit number paid out in the memory provided in the server every each of the slot machines 1. And if it is determined by the CPU in the server that each of the game number of times, the winning number of times of the winning symbol combination and the credit number paid out, each being stored in the memory, reaches to a predetermine value (for example, 100 games for the game number of times, 30 times for the winning number of times of the winning symbol combination, 1000 credits for the credit number paid out), a signal indicating that each of the above numbers reaches to the predetermined value is transmitted to the slot machine 1 corresponding thereto through the interface circuit. Thereafter, the slot machine receiving such signal conducts a process to shift the game state to the probability change mode from the next game.

As mentioned, in the modification in which it is provided the count device for counting the game number and the like in the server existing out of the slot machine 1, plural slot machines 1 can be controlled together, thereby gaming machines such as slot machines in the game arcade can be easily controlled.

For example, within the slot machine 1 according to the sixth and seventh embodiments, although it is provided the time count device for counting a time from the predetermined time, such time count device may be provided out of the slot machine. Hereinafter, it will be described a modification in which the time count device is provided out of the slot machine.

In the modification in which the time count device is provided out of the slot machine 1, a plurality of slot machines 1 installed the game arcade are connected to a server through a network. And each slot machine 1 is constructed so as to transmit and receive various information between the server through the network.

Here, the server controls plural slot machines installed in the game arcade and a specific discriminative number is respectively given to each of the slot machines 1, thereby the server judges a release source of data transmitted from each of the slot machines 1 based on the specific discriminative number. And in a case that data are transmitted form the server to the slot machine 1, the slot machine 1 to which data are transmitted is directed by the specific discriminative number.

And the CPU 50 of the slot machine 1 transmits to the server through the transmission interface circuit provided in the slot machine 1 a signal indicating that a main power is turned on when the main power of the slot machine 1 is turned on.

And among signals transmitted form the slot machine 1, a direct signal to direct the slot machine 1, that is, data indicating which slot machine 1 among plural slot machines 1 controlled by the server are attached to the signal. For example, in a case that the specific discriminative number "005" is allotted to the slot machine 1 among plural slot machines 1 controlled by the server and the signal indicating that the main power is turned on is "1", the signal such as "005-1" is transmitted to the server when the main power in the slot machine 1 is turned on.

On the other hand, based on the signal transmitted from the slot machine 1, the server starts to count the elapsing time since the game arcade is opened by the timer having time counting function provided in the server. And if it is determined by the CPU in the server that the time elapsed counted by the timer since the game arcade is opened reaches to a predetermined time (for example, three hours) or if it is determined that the present time indicated by the time counting function of the timer reaches to a predetermined time (for example, nine o'clock PM), the signal indicating the above is transmitted through the interface circuit to the slot machine 1 corresponding thereto. Thereafter, in the slot machine receiving the signal, the game state shifts to the probability change mode from the next game.

As mentioned, in the modification in which it is provided the time count device in the server existing out of the slot machine 1, plural slot machines 1 can be controlled together, thereby gaming machines such as slot machines in the game arcade can be easily controlled.

In the sixth and seventh embodiments, although it is required a condition that the present time becomes a predetermined time (for example, nine o'clock, twelve o'clock, 21 o'clock) as the start condition to shift the game state to the probability change mode during the base game or the bonus game, such start condition may be changed to a condition that day and time become a predetermined day of the week (for example, Monday, Thursday) and a predetermined time (nine o'clock, twelve o'clock, 21 o'clock).

For example, within the slot machine 1 according to the tenth and eleventh embodiments, although it is provided the payout rate measurement device for measuring the payout, such payout rate measurement device may be provided out of the slot machine. Hereinafter, it will be described a modification in which the payout rate measurement device is provided out of the slot machine.

In the modification in which the payout rate measurement device is provided out of the slot machine 1, a plurality of slot machines 1 installed the game arcade are connected to a server through a network. And each slot machine 1 is constructed so as to transmit and receive various information between the server through the network.

Here, the server controls plural slot machines installed in the game arcade and a specific discriminative number is respectively given to each of the slot machines 1, thereby the server judges a release source of data transmitted from each of the slot machines 1 based on the specific discriminative number. And in a case that data are transmitted form the server to the slot machine 1, the slot machine 1 to which data are transmitted is directed by the specific discriminative number.

And the CPU 50 of the slot machine 1 transmits -to the server through the interface circuit provided in the slot machine 1 a signal indicating the credit number betted when the game is started. And when the winning symbol combination is won and the payout thereof is paid out, a signal indicating the credit number paid out is transmitted to the server through the transmission interface circuit.

And among signals transmitted form the slot machine 1, a direct signal to direct the slot machine 1, that is, data indicating which slot machine 1 among plural slot machines 1 controlled by the server are attached to the signal. For example, in a case that the specific discriminative number "005" is allotted to the slot machine 1 among plural slot machines 1 controlled by the server and the signal indicating that 60 credits are betted and the game is started is "060", the signal such as "005-060" is transmitted to the server when the game is started in the slot machine 1.

On the other hand, based on the signal transmitted from the slot machine 1, the server accumulatively stores the credit number betted, the credit number paid out in the memory provided in the server every slot machine 1. And the payout rate is calculated by the CPU in the server based on the credit number betted by the present time and the credit number paid out, and if it is determined that the calculated payout rate reaches to a value less than a predetermined rate (for example, 80%), the signal indicating the above is transmitted through the interface circuit to the slot machine 1 corresponding thereto. Thereafter, the game state shifts to the probability change mode from the next game.

As mentioned, in the modification in which it is provided the payout rate measurement device in the server existing out of the slot machine 1, plural slot machines 1 can be controlled together, thereby gaming machines such as slot machines in the game arcade can be easily controlled.

For example, within the slot machine 1 according to the twelfth and thirteenth embodiments, although it is provided the accumulative storing device for storing the JP credit number, such accumulative storing device may be provided out of the slot machine 1. Hereinafter, it will be described a modification in which the accumulative storing device is provided out of the slot machine 1.

In the modification in which the accumulative storing device is provided out of the slot machine 1, a plurality of slot machines 1 installed the game arcade are connected to a server through a network. And each slot machine 1 is constructed so as to transmit and receive various information between the server through the network.

Here, the server controls plural slot machines installed in the game arcade and a specific discriminative number is respectively given to each of the slot machines 1, thereby the server judges a release source of data transmitted from each of the slot machines 1 based on the specific discriminative number. And in a case that data are transmitted form the server to the slot machine 1, the slot machine 1 to which data are transmitted is directed by the specific discriminative number.

And the CPU 50 of the slot machine 1 transmits to the server through the transmission interface circuit provided in the slot machine 1 a signal indicating the credit number betted when the game is started.

And among signals transmitted form the slot machine 1, a direct signal to direct the slot machine 1, that is, data indicating which slot machine 1 among plural slot machines 1 controlled by the server are attached to the signal. For example, in a case that the specific discriminative number "005" is allotted to the slot machine 1 among plural slot machines 1 controlled by the server and the signal indicating that 60 credits are betted and the game is started is "060", the signal such as "005-060" is transmitted to the server when the game is started in the slot machine 1.

On the other hand, based on the signal transmitted from the slot machine 1, the server accumulatively stores in the memory provided in the server the credit number with a predetermined rate (for example, 10%) among the credit number betted in all slot machines connected thereto, as the JP credit number. And if it is determined by the CPU in the server that the JP credit number reaches to a predetermined sum (for example, 100000 credits), the signal indicating the above is transmitted through the interface circuit to the slot machine 1 corresponding thereto. Thereafter, the slot machine receiving such signal conducts a process to shift the game state to the probability change mode from the next game.

As mentioned, in the modification in which it is provided the accumulative storing device for storing the JP credit number in the server existing out of the slot machine 1, plural slot machines 1 can be controlled together, thereby gaming machines such as slot machines in the game arcade can be easily controlled.

And in the twelfth and thirteenth embodiments, although the JP (Jack Pot) accumulatively adds 10% of the credits betted in 20 slot machines including the slot machine 1, 10% of the credit betted in only one slot machine may be accumulatively added.

## Claims

1. A gaming machine comprising:
a display device having a plurality of variable display portions in each of which plural kinds of symbols are variably displayed;
a stop control device for conducting stop control of the symbols which are stopped and displayed in each of the variable display portions;
a payout device for paying out a predetermined number of game media when a symbol combination formed by the symbols stopped and displayed in each of the variable display portions becomes a predetermined winning symbol combination; and
a shift device for shifting a game state to a special game mode in which a probability according to which the predetermined winning symbol combination is stopped and displayed through the variable display portions by the stop control device increases,
wherein the shift device retains the special game mode till a predetermined termination condition is satisfied in a case that the winning symbol combination satisfies a predetermined start condition.

2. The gaming machine according to claim 1, wherein the stop control device comprises:
a random number generation device for generating random numbers;
a symbol combination determination device for determining the symbol combination corresponding to the random numbers generated by the random number generation device;
wherein the stop control device conducts the stop control of the symbols so as to be stopped and displayed in each of the variable display portions corresponding to the symbol combination determined by the symbol determination device.

3. The gaming machine according to claim 1, further comprising:
a notification device for notifying that the game state is shifted to the special game mode by the shift device.

4. The gaming machine according to claim 1, wherein the predetermined termination condition is set to a condition that the symbols stopped and displayed in each of the variable display portions constructs a predetermined symbol combination after the game state shifts to the special game mode.

5. The gaming machine according to claim 4, further comprising:
a termination condition selection device for selecting the termination condition among plural conditions;
wherein the notification device notifies the termination condition selected by the termination selection device.

6. The gaming machine according to claim 5, wherein the notification device notifies that the termination condition is satisfied.

7. The gaming machine according to claim 1, wherein a game in which the symbols are variably displayed and stopped in each of the variable display portions is repeated and continued.

8. The gaming machine according to claim 7, further comprising:
a count device for accumulatively counting a predetermined number concerning with the game corresponding to that the game are continued;
wherein the shift device shifts the game state to the special game mode when a count result counted by the count device becomes a predetermined value.

9. The gaming machine according to claim 8, wherein the count device accumulatively counts a number of the game media paid out by the payout device.

10. The gaming machine according to claim 8, wherein the count device accumulatively counts a number of games executed in the gaming machine.

11. The gaming machine according to claim 8, wherein the predetermined termination condition is set to a condition that the count result counted by the count device becomes a predetermined value after the game state shifts to the special game mode.

12. The gaming machine according to claim 7, further comprising:
a time count device for counting a time elapsing from a standard time;
wherein the shift device shifts the game state to the special game mode when the time counted by the time count device becomes a predetermined time.

13. The gaming machine according to claim 7, further comprising:
a lottery device for conducting a lottery whether or not the game state shifts to the special game mode corresponding to that the game is continued;
wherein the shift device shifts the game state to the special game mode when it is determined that the game state is shifted based on a lottery result by the lottery device.

14. The gaming machine according to claim 7, further comprising:
a payout rate measurement device for measuring a payout rate corresponding to that the game is continued;
wherein the shift device shifts the game state to the special game mode when the payout rate measured by the payout rate measurement device becomes a predetermined rate.

15. The gaming machine according to claim 7, further comprising:
an accumulative storing device for accumulatively storing the game media with a predetermined rate among the game media betted in plural gaming machines corresponding to that the game is continued;
wherein the payout device pays out the game media corresponding to a number stored in the accumulative storing device when a predetermined condition is satisfied, and
wherein the shift device shifts the game state to the special game mode when the number of the game media stored in the accumulative storing device becomes a predetermined number.
